**Europäisches Patentamt**

(19) **European Patent Office**

**Office européen des brevets**

(11) Publication number: **0 380 097 B1**

## (12) EUROPEAN PATENT SPECIFICATION

(45) Date of publication of patent specification :
20.09.95 Bulletin 95/38

(51) Int. Cl.⁶ : **G07F 9/00,** G06F 17/60

(21) Application number : **90101501.6**

(22) Date of filing : **25.01.90**

(54) **Vend space allocation monitor means and method.**

(30) Priority : **27.01.89 US 303547**
**11.04.89 US 336348**

(43) Date of publication of application :
**01.08.90 Bulletin 90/31**

(45) Publication of the grant of the patent :
**20.09.95 Bulletin 95/38**

(84) Designated Contracting States :
**DE FR GB**

(56) References cited :
**EP-A- 0 071 275**
**EP-A- 0 072 141**
**DE-A- 2 808 991**
**GB-A- 2 056 147**
**US-A- 4 598 378**

(73) Proprietor : **COIN ACCEPTORS, INC.**
**300 Hunter Avenue**
**St. Louis, MO 63124-2013 (US)**

(72) Inventor : **Levasseur, Joseph Leo**
**1605 Timberlake Manor Parkway**
**Chesterfield, Missouri 63017 (US)**

(74) Representative : **Ebbinghaus, Dieter, Dipl.-Ing.**
**et al**
**Patentanwälte v. Füner, Ebbinghaus, Finck**
**Mariahilfplatz 2 & 3**
**D-81541 München (DE)**

## Description

### Background of the Invention

The present invention relates to a vend space allocation monitor means and method, and, more particularly, to a means and method for monitoring and determining whether an established vend space allocation configuration for a given vend system that has a plurality of allocatable vend product storage areas is consistent with a historical demand for the various vend product selections. Such vend space allocation monitor means and method are particularly useful with vend systems for selectively dispensing or vending several different types of products from product storage columns, especially for products that are of generally cylindrical configurations, such as bottles or cans, and with vend systems that have a greater number of allocatable vend product storage areas than vend product selections. In certain embodiments of the invention the means for determining whether the established vend space allocation configuration is consistent with historical demand may comprise means for determining, based upon historical demand for the various vend product selections, a preferred vend space allocation configuration for the given vend system.

Over the years a variety of approaches have been utilized in attempts to match product stocking of a vending machine to the perceived demand for the various products to be vended therefrom. Among such approaches have been the use of multiple columns with their associated selection and product delivery means for vending major products and single columns with their associated selection and product delivery means for vending secondary products, the use of multiple columns with common selection and/or product delivery means for vending major products and single columns with their associated selection and product delivery means for vending secondary products, the use of differently sized columns to permit the stacking of cans or like items in double as opposed to single stacks, the use of half-height columns which permits secondary products to be stored in such smaller sized columns while major products are stored in full-height columns that may open out above the half-height columns, the use of columns of staggered heights with inclined racks or other storage areas above selected ones of the staggered height columns to obtain product storage compartments of varying capacities, and the use of column transfer means such as column transfer shelves, gates, and trap doors which permit those products stored above a certain level in one column to be transferred into another column for vending therefrom, some of which approaches have permitted service personnel, at the time of restocking of a particular vending machine, to set, adjust, or re-position certain elements in such particular vending machine so that the product storage therein will more closely match the empirical demand for products observed by such service personnel.

US-A-4,245,755, US-A-4,699,295, and US-A-4,705,176 all discuss the difficulties and history of trying to develop vending systems wherein product storage space can be optimally allocated to the various product types that are desired to be vended therefrom, and all illustrate approaches to the problem of space to sales allocation. While there has been considerable work devoted to the design of vending machines that will permit optimal allocation of product storage space to anticipated product demand and considerable discussion regarding the desirability of matching the product stocking of a vending machine to the sales therefrom, there has been little discussion regarding the manner in which it is determined whether or to what extent a particular space to sales allocation scheme is acceptable in light of the actual historical demand for the various types of products, and, if such allocation scheme is not acceptable, how a more appropriate allocation scheme can be effected.

In many instances product demand may vary from location to location and machine to machine. While pre-established space to sales configurations may be established based upon national or regional statistics regarding the relative popularity of various products desired to be vended from a particular machine, it often falls upon the service personnel to determine from their observations when servicing a machine how closely the anticipated product demand corresponds to sales from that machine. If one or more types of product are consistently sold out every time the machine is serviced while other types of product remain available in abundance, the particular space to sales allocation scheme being employed is clearly not appropriate. Because of the obvious inappropriateness of the space to sales allocation scheme most service personnel would recognize the desirability of attempting in some way to compensate for or to revise or tailor the space to sales allocation scheme. Some of the tricks of the trade that may be employed by the service personnel are discussed in US-A-4,705,176.

In certain instances, if the product storage areas of the machine can be reconfigured in some manner, the service personnel may be able, based upon their observations regarding the perceived relative popularity of the products being vended, to reposition certain column transfer elements or other reconfiguration means to attempt to obtain a closer match between allocated product storage and product demand. Even if machine reconfiguration is possible, a number of machine reconfigurations, using trial and error approaches based upon observations of product availability at the time of machine servicing, may be necessary before service personnel are able to observe during a subsequent servicing of the machine that the mismatch between product storage allocation and product demand has been resolved.

Furthermore, if the product storage areas of the machine are susceptible to reallocation among the various types of vend products, it may then be possible to reconfigure product storage by repositioning certain column transfer elements or other reconfiguration means to obtain a reallocation of vend product storage among the various types of vend products. One of the difficulties faced by service personnel, however, is the determination of what product storage allocation scheme should be established in any particular instance. While service personnel may attempt to base such determination upon their observations regarding the perceived relative popularity of the vend products, subjective biases of such service personnel can often easily influence such determination. Moreover, while obvious mismatch conditions may be determinable by service personnel from their observations upon servicing the machine, less obvious mismatch conditions can easily, and often do, escape recognition by even the most observant service personnel over extended periods of time. Regardless of whether such mismatch conditions are obvious or not, reconfiguration determinations often come down to subjective decisions by service personnel, many of which decisions are little better than hunches or guesses by such service personnel.

While obvious mismatch conditions may be determinable by service personnel from their observations upon servicing the machine, less obvious mismatch conditions may well escape recognition by even the most observant service personnel over extended periods of time, and, even if eventually recognized, may prove difficult to overcome by trial and error approaches. This is especially true if there is a significant mix of products in the machine or if changes in one or more products of the product mix are made.

EP-A-0,071,275, finally, discloses a vend space allocation monitor means for a vending system as defined in the pre-characterizing portion of claim 1, which, however, also does not allow an automated monitoring of the vending history.

The object underlying the present invention is to achieve an automatization of determining whether or to what extent a particular space to sales allocation scheme is acceptable of the actual historical demand for the various types of products, and to communicate an indication thereof to authorized personnel. Optionally, if such allocation scheme is not acceptable, the communicated indication may include information of how a more appropriate allocation scheme can be effected.

According to the present invention this object is achieved by the vend space monitor means as defined in claim 1 and by the method described in claim 8.

Preferred embodiments and further improvements of the means and method, respectively, of the invention are described in claims 2 to 7 and 9, 10, respectively, including determination of a preferred vend space allocation configuration for the vending system.

Fig. 1 is a schematic front view of the lower portion of a vending machine having a columnar product feed to the product delivery mechanism.

Figs. 2-4 are schematic front views of several various upper portions of vending machines, which upper portions may be employed with the lower portion of Fig. 1.

Figs. 5-7 are top plan views, partly in section, taken generally along line X-X in Fig. 1, showing several possible front to back product storage configurations of the vending machine of Fig. 1 and a portion of the product delivery mechanism that can be advantageously used with such configurations.

Fig. 8 is a block diagram of a typical vend control means for controlling the vending of products from the vending machine of Fig. 1.

Figs. 9, 12, 15, 18, 21, and 24 represent various allocation configurations of a vending machine constructed in accordance with Fig. 1.

Figs. 10, 13, 16, 19, 22, and 25 are tables containing information pertinent, respectively, to Figs. 9, 12, 15, 18, 21, and 24, including information identifying typical product availability status for the various product classes at the time of vending machine servicing.

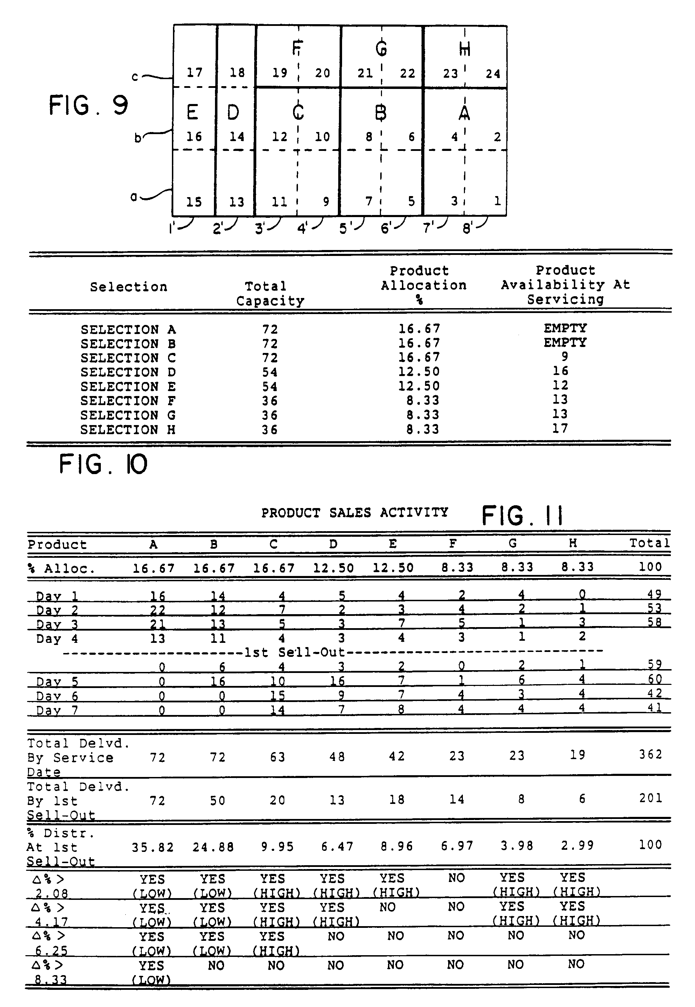

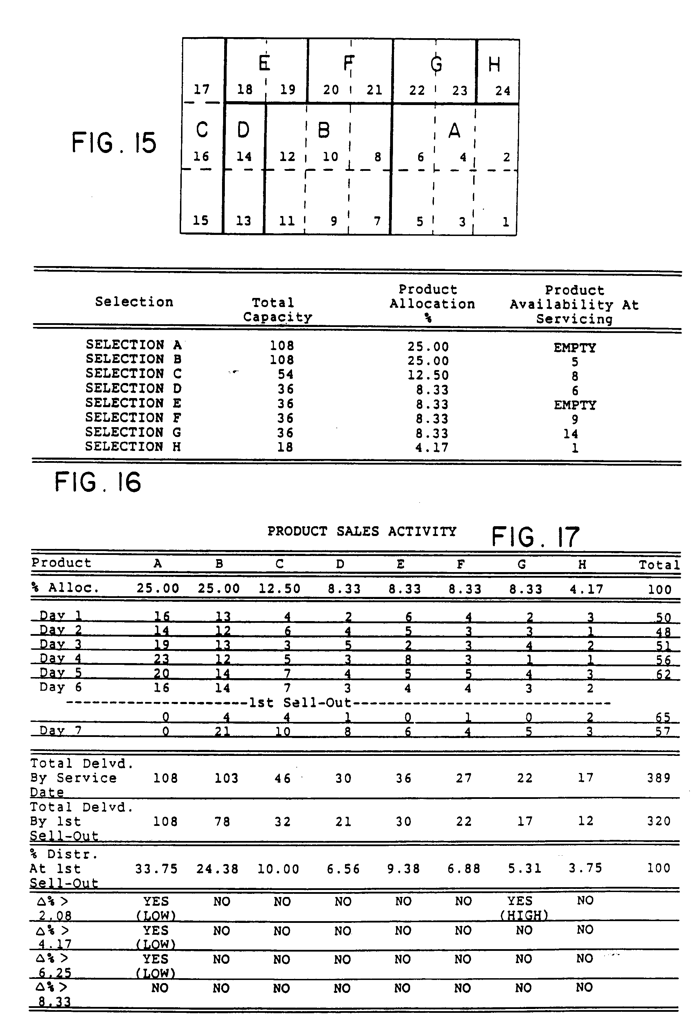

Figs. 11, 14, 17, 20, 23, and 26 are associated, respectively, with Figs. 9, 12, 15, 18, 21, and 24, and also with Figs. 10, 13, 16, 19, 22, and 25, and illustrate both typical vend activity over one service period of a vending machine having product allocation configurations as represented by Figs. 9, 12, 15, 18, 21, and 24, which vend activity results in the product availability status set forth in Figs. 10, 13, 16, 19, 22, and 25, and how the product demand during such service period can be utilized to determine whether the particular product allocation configuration is acceptable or may require revision.

Fig. 27 is a table illustrating typical vend activity over several service periods of a vending machine having product storage space allocated in accordance with Fig. 21.

Figs. 28 and 29 depict portions of typical subroutines that may be employed during the course of a vend operation while the vending machine is in sales mode to effect the recordation and retention of product selection information required by the selection allocation monitoring means of the present invention.

Fig. 30 depicts a portion of a typical subroutine that may be employed while the vending machine is in a service mode to determine from recorded product demand information whether the product allocation configuration is acceptable or should be revised.

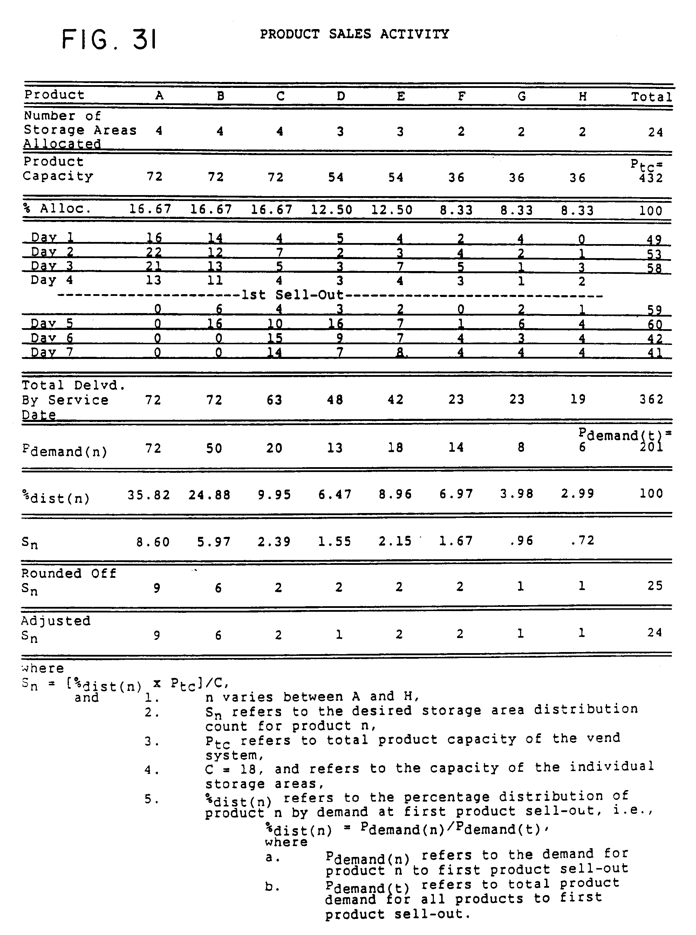

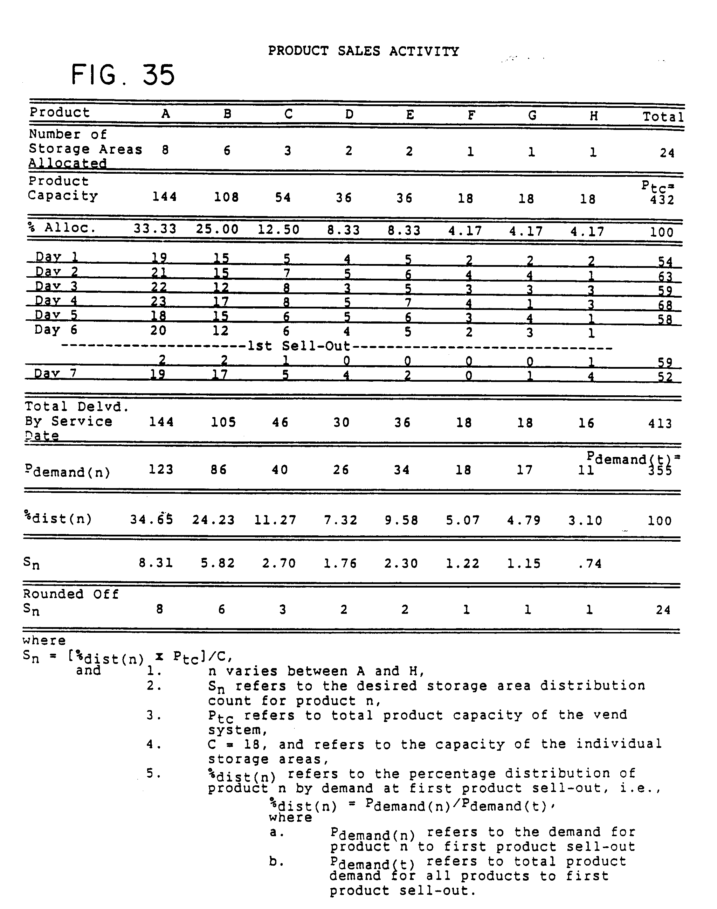

Figs. 31-36 are tables that are associated, respectively with Figs. 11, 14, 17, 20, 23, and 26, and their associated figures, and which illustrate both typical vend activity over one service period of a vending machine having product allocation configurations as represented by Figs. 9, 12, 15, 18, 21, and 24, respectively, which vend activity results in the product availability status set forth in Figs. 10, 13, 16, 19, 22, and 25, respectively, and determinations based upon the monitored historical product demand values as well as the total capacity of the vending machine and the capacity of the individual storage areas of the vending machine such that desired storage area distribution counts can be calculated for each of the products.

Fig. 37 depicts an alphanumeric display means displaying a preferred allocation of product storage areas for product A.

Figs. 38-45 depict a light panel display displaying, respectively, preferred product storage allocations for products A-H, in accordance with the desired storage area distribution counts of Fig. 36.

Figs. 46-48 represent various preferred vend space allocations configurations of a vending machine constructed in accordance with Figs. 1 and 7, which vend space allocation configurations were determined from Figs. 31, 32-33, and 34-36, respectively.

Figs. 49-50 represent various preferred vend space allocation configurations of a vending machine constructed in accordance with Figs. 1 and 4, which vend space allocation configurations were determined from Figs. 31-36, respectively.

Fig. 51 represents the product vend space of a vending machine constructed in accordance with Figs. 1, 4, and 7, shown in a partially exploded view.

Fig. 52 represents a preferred vend space allocation configuration of the vending machine of Fig. 47, which vend space allocation configuration was determined from Fig. 27, shown in a partially exploded view.

Figs. 53-57 represent the preferred vend space allocations for the various products as depicted in Fig. 52, some of which are shown in partially exploded views.

Fig. 61 represents a preferred vend space allocation configuration of the vending machine of Fig. 36, which vend space allocation configuration was determined from Fig. 31, shown in a partially exploded view.

Figs. 62-69 represent the preferred vend space allocations for the various products as depicted in Fig. 61, some of which are shown in partially exploded views.

Figs. 70 and 71 depict portions of typical subroutines that may be employed during the course of a vend operation while the vending machine is in sales mode to effect the recordation and retention of product selection information required by the selection allocation monitoring means of the present invention.

Fig. 72 depicts a portion of a typical subroutine that may be employed while the vending machine is in a service mode to determine and display a preferred vend space allocation configuration, based at least in part upon the monitored product demand.

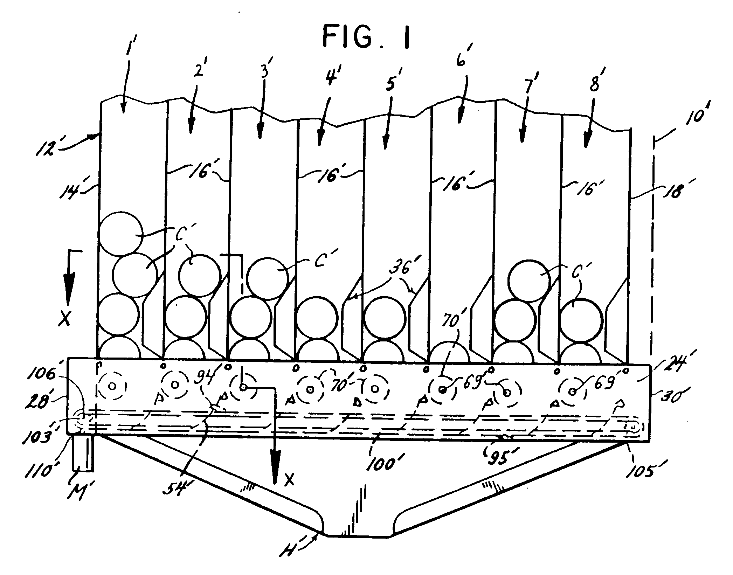

Referring now to the drawings, wherein like reference numbers refer to like items, Figs. 1, 5, 6, and 7 of this application correspond, respectively, to Figs. 1, 3, 12 and 10 of Applicant's US-A- 4,991,739, also assigned to Applicant's assignee. All reference numbers in the present application which include as part of the number the prime symbol (') correspond to like non-prime reference numbers in US-A- 4,991,739 and identify elements the descriptions of which and discussions about which in US-A- 4,991,739 are incorporated herein by reference.

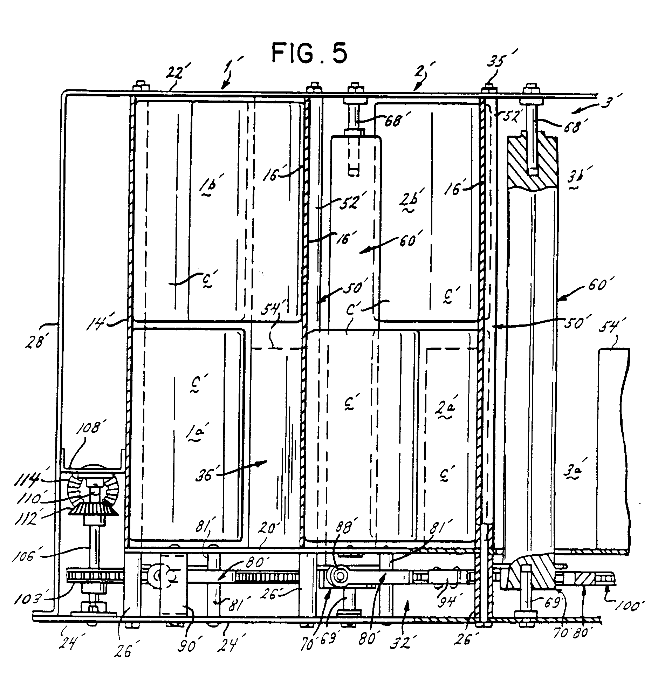

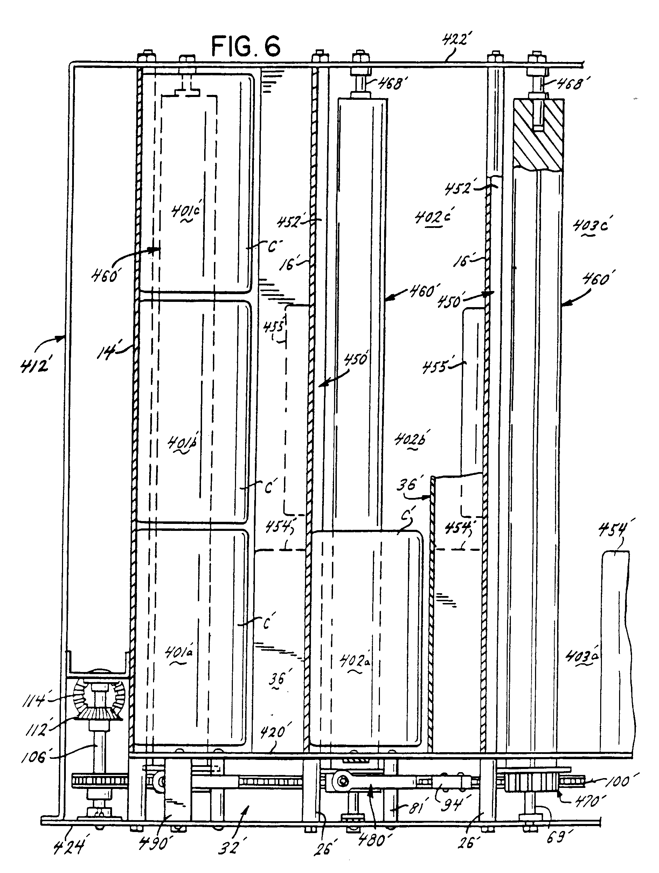

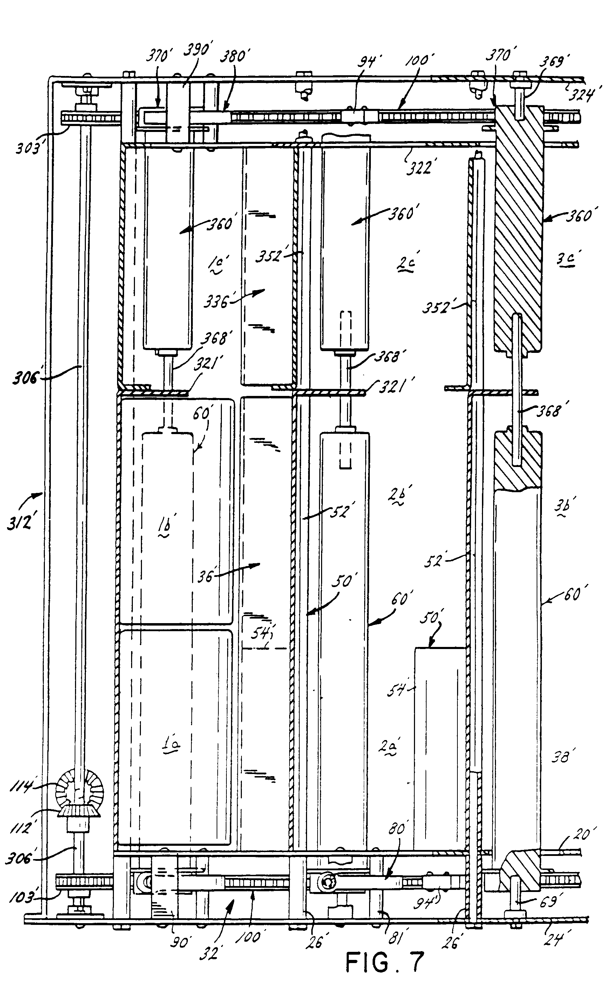

With particular reference now to Fig. 1, the number 10' identifies a vending machine the lower portion of which is so constructed, in the embodiment shown, to have along its width eight product storage columns 1'-8', each of which columns may be of sufficient depth to hold a plurality of products C' arranged in horizontal rows. As depicted in Figs. 5 and 6, the depth of the columns may be varied to increase or decrease the number of products that may be stored in the horizontal rows, and, as depicted in Fig. 7, the columns may be partitioned from front to rear, such as by intermediate wall members 321', to create distinct product storage compartments in the vending machine. In the embodiment depicted in Fig. 7 the forward product storage compartment of each column is sized to hold two products arranged horizontally in an end-to-end configuration while the rear product storage compartment of each column is sized to hold only a single product. Thus, by way of illustration, column 1' is depicted as including portions 1'a, 1'b, and 1'c, with portions 1'a and 1'b defining a forward product storage compartment and portion 1'c defining a rear product storage compartment.

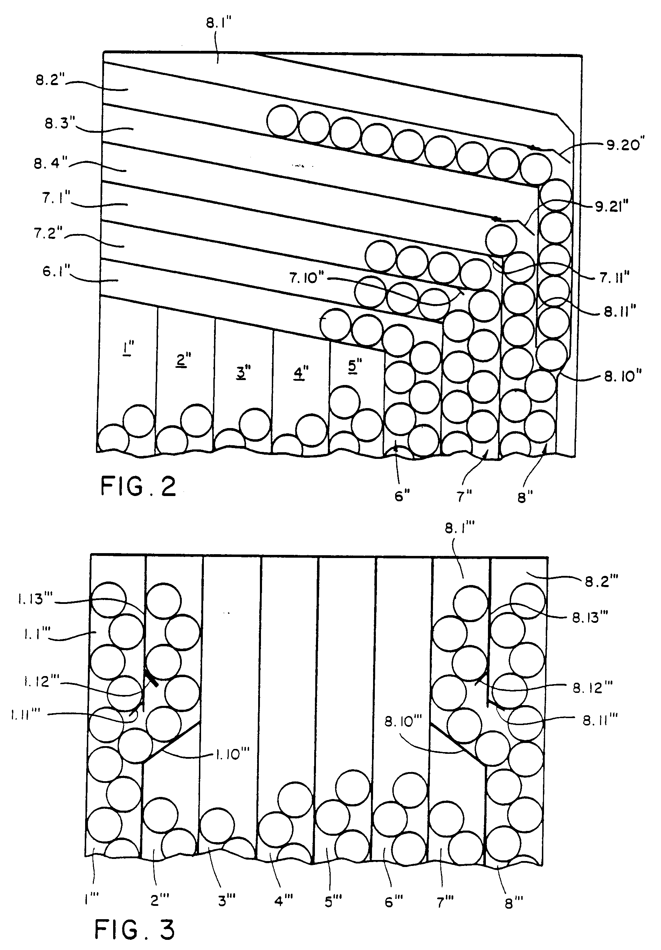

It will be appreciated that the vending machine 10' of Fig. 1 may be so constructed to have various upper portion embodiments that permit greater amounts of certain product types to be readily stored for vending. Figs. 2-4 illustrate various possible embodiments of upper portions that could be so constructed to mate with the lower portion depicted in Fig. 1 and which exhibit various ways in which certain product types can be allocated greater storage space within the vending machine.

By way of example, the upper portion depicted in Fig. 2 includes upper column portions 1″-8″ that correspond to and are constructed to feed products to columns 1'-8' of Fig. 1. Upper column portions 6″-8″ have associated therewith angled storage compartments 6.1″, 7.1″, 7.2″, 8.1″, 8.2″, 8.3″, and 8.4″ that extend over the tops of upper column portions 1″-5″ and are so constructed that products stored in compartment 6.1″ feed into upper column portion 6″, products stored in compartments 7.1″ and 7.2″ feed into upper column portion 7″, and products stored in compartments 8.1″-8.4″ feed into upper column portion 8″. Guide means 7.10″ and 7.11″ help channel the flow of products from compartments 7.1″ and 7.2″ into upper column portion 7″ while guide means 8.10″ and 8.11″ and product gate means 8.20″ and 8.21″ help channel and control the flow of products from compartments 8.1″-8.4″ into upper column portion 8″.

Fig. 3 depicts another embodiment of an upper portion of a vending machine, which upper portion includes upper column portions 1‴-8‴ that correspond to and are constructed to feed products to columns 1′-8′ of Fig. 1. Upper column portions 3‴-6‴ are depicted as full height columns, while upper column portions 2‴ and 7‴ are depicted as partial height columns and upper column portions 1‴ and 8‴ are depicted as columns with branched arms. Branch 1.1‴ of upper column portion 1‴ is shown extending directly above the lower portion of upper column portion 1‴ and branch 1.2‴ is shown disposed above upper column portion 2‴. Similarly, branch 8.1‴ of upper column portion 8‴ is shown extending directly above the lower portion of upper column portion 8‴ and branch 8.2‴ is shown disposed above upper column portion 7‴. Guide means 1.10‴-1.13‴ help channel the flow of products from column arms 1.1‴ and 1.2‴ into the lower portion of upper column portion 1‴ while guide means 8.10‴-8.13‴ serve a similar purpose with respect to upper column portion 8‴.

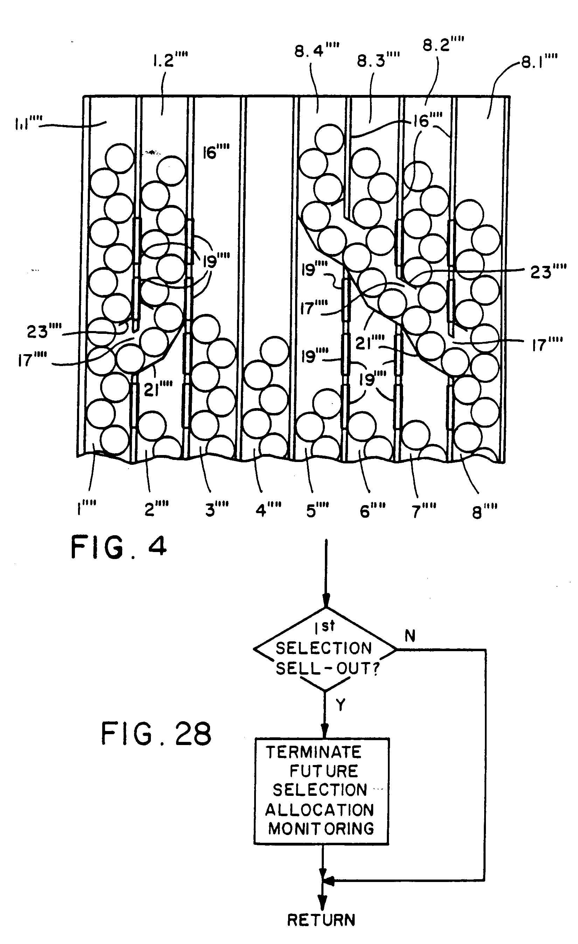

Fig. 4 depicts a still further embodiment of an upper portion of a vending machine wherein the upper portion includes upper column portions 1⁗-8⁗ that correspond to and are constructed to feed products to columns 1′-8′ of Fig. 1. At least certain of the sidewalls 16⁗ between the upper column portions include openings 17⁗ therethrough, some of which openings are shown sealed by removable closure members 19⁗. In addition, repositionable guide means 21⁗ and 23⁗ are shown installed in a manner that results in a product storage configuration wherein product storage areas 1.1⁗ and 1.2⁗ are established to feed products to upper column portion 1⁗ and product storage areas 8.1⁗-8.4⁗ are established to feed products to upper column portion 8⁗, and wherein the heights (and product storage capacity) of upper column portions 2⁗-7⁗ are thus effectively reduced. A better understanding of how the openings 17⁗, the closure members 19⁗, and the guide means 21⁗ and 23⁗ can be employed to establish any particular product storage configuration can be obtained by a review of U.S. Patent No. 4,705,176, Fig. 4a of which corresponds closely to Fig. 4 herein.

It will be appreciated that with all of the embodiments of Figs. 2-4 provision is made for increased product storage of certain types of products, i.e.,

products of greater demand, and for more limited product storage for other types of products i.e., products of lesser demand. Those skilled in the art will recognize, however, that, regardless of the particular vending machine embodiment employed or the particular product storage configuration established, product delivery, at least from a vending machine whose lower portion is constructed similarly to that depicted in Fig. 1, can be readily effected by the product delivery system described in Applicant's US-A-4,991,739, as will be further apparent from the summary description of such delivery system provided hereinafter.

Products stored in embodiments of the type depicted in Figs. 1 and 5-7 hereof may be conveniently delivered to the customer by the vend delivery systems shown in such figures, which delivery systems and the operation thereof are described in detail in Applicant's US-A- 4,991,739. In brief, when a product selection for which sufficient credit has been entered is made, the vend control means for the vending machine, which vend control means often employs a programmed microprocessor, causes the motor M′ (Fig. 1) to operate to move drive chain 100′ in a clockwise direction to position an appropriate finger 94′ or 95′ adjacent the escapement member 80′ (Figs. 5 and 7), 380′ (Fig. 7), or 480′ (Fig. 6) associated with a product storage conpartment in which are stored products of the type selected by the customer when he operated the product selection means. When the appropriate finger 94′ or 95′ is properly positioned, motor M′ operates to cause drive chain 100′ to move sufficiently in a counterclockwise direction to engage and pivot the proper escapement member 80′, 380′ or 480′ so that the proper turnstile 60′ (Figs. 5 and 7), 360′ (Fig. 7), or 460′ (Fig. 6) can rotate under the weight of a product C′ through a requisite degree of movement to deliver the desired product type. Those skilled in the art will recognize and understand that a programmed microprocessor with associated memory can be readily employed in the vend control means to keep track of the product storage configuration then in effect and to ensure that the motor M′ will operate to advance the appropriate finger to engage the proper escapement member to effect the delivery of the desired type of product.

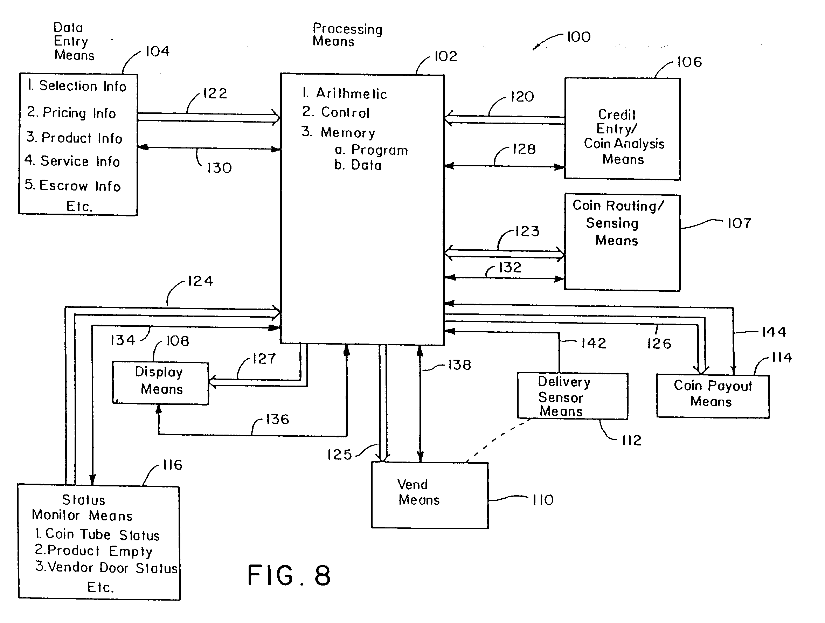

Fig. 8 depicts in block diagram form a vend control means of the type that might typically be employed with the vending machine embodiments depicted in Figs. 1-7 hereof. Number 100 identifies a microprocessor controlled vending system that includes a processing means 102, data entry means 104, credit entry/coin analysis means 106, coin routing/sensing means 107, display means 108, vend means 110, delivery sensor means 112, coin payout means 114, and status monitor means 116. The processing means 102 includes memory means as well as arithmetic and control means typical of a microprocessor controlled vending system. In the Fig. 8 embodiment coin analysis data may be supplied from the credit entry/coin analysis means 106 to the processing means 102 by means of a data path 120, data information of various types, including selection information, pricing information, product information, and service information, may be provided from the data entry means 104 to the processing means 102 by means of a data path 122, coin routing/sensing data may be provided from the coin routing/sensing means 107 to the processing means 102 by means of a data path 123, and status data, including coin tube status information, product empty information, and vendor status information, may be provided from the status monitor means 116 to the processing means 102 by means of a data path 124. Data for vend purposes may be provided from the processing means 102 to vend means 110 by way of data path 125, coin payout data may be provided from the processing means 102 to coin payout means 114 by way of data path 126, and information for display may be communicated from the processing means 102 to display means 108 by means of a data path 127. Various control and status signals may be intercommunicated among the components of the microprocessor controlled vending system by means of signal paths 128, 130, 132, 134, 136, 138, 142, and 144.

Fig. 9 illustrates a situation in which a particular product storage allocation configuration has been established for a vending machine constructed according to Fig. 1, wherein all of the columns 1'-8' are of depths to hold three products laid end-to-end in column portions a, b, and c thereof and all of the column 1'-8' and their portions a, b, and c are of equal height such that equal numbers of products can be stacked in each of the portions a, b, and c of such colums, as a consequence of which the vending machine may be considered to have twenty-four storage areas of equal size, viz., the storage areas numbered 1-24 in Fig. 9, each of which storage means is capable of holding approximately 4.17% of the total storage capacity of the vending system. It will be appreciated that a vend delivery system for such a vending machine embodiment can be readily constructed in accordance with the teachings of US-A- 4,991,739 to permit individualized vending from each of the product storage areas 1-24. Alternatively, in accordance with the embodiment depicted in Fig. 7 and the vend delivery system therefor, storage areas 1 and 2, for example, of Fig. 9 could be considered to be a single storage compartment having two equal sized storage areas each of which areas has the same capacity as storage area 24. In any event, in the product storage allocation configuration depicted in Fig. 9 the twenty-four storage areas 1-24 are allocated among eight types of products A-H such that product A is assigned four storage areas 1-4, product B is assigned four storage areas 5-8, product C is assigned four storage areas 9-12, product D is assigned three storage areas 13, 14, and 18, product E is assigned three storage areas 15, 16, and 17, product F is assigned two storage areas 19 and 20, product G is assigned two storage areas 21 and 22, and product H is assigned two storage areas 23 and 24.

If the vending machine of Fig. 9 were fully loaded with eighteen cans per storage area according to the noted product storage allocation configuration, the product storage capacity and the percentage allocation per selectable type of product would be as specified in Fig. 10. Typically, if such a product storage allocation configuration were employed, the resulting product availability at the time of next servicing of the vending machine might be that noted in Fig. 10. It will be readily apparent that one cannot easily determine from such product availability status whether or to what extent the particular product storage allocation configuration in effect corresponds to product demand, especially since it cannot be determined from such product availability status whether products A and B were depleted at an early time before servicing or just before servicing. In actuality, the sales history for the products might well have been that set forth in Fig. 11, which history reveals that product A sold out during the fourth day of a seven day service cycle and product B sold out during the fifth day of the service cycle. While such sales history might lead one studying it to conclude that adjustments in the product storage allocation configuration would be desirable, an individual servicing the vending machine generally does not have any way of determining such history and is limited to an evaluation of the product availability status at the time of servicing in making any determination regarding the acceptability of the product storage allocation configuration in effect.

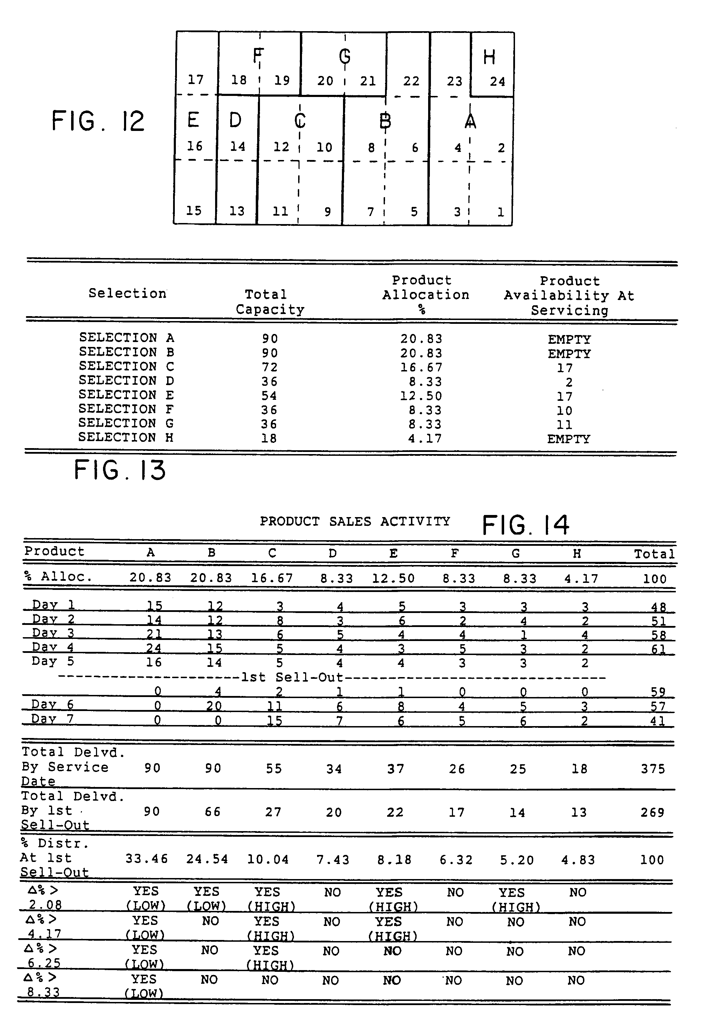

Figs. 12-14, 15-17, 18-20, 21-23, and 24-26 are figure groups each of which includes a figure similar to Fig. 9 depicting a particular product storage allocation configuration, a figure similar to Fig. 10 identifying the product storage capacities and percentage allocations per selectable type of product for such particular product storage allocation configuration and a typical product availability status at the time of servicing, and a figure similar to Fig. 11 including a typical sales history during a service cycle of the vending machine. In each instance, service personnel would have difficulty in determining from the product availability status at the time of servicing whether or to what extent the particular product storage allocation configuration in effect corresponds to product demand.

If the individual servicing the vending machine were particularly conscientious and industrious in trying to match product storage allocation configurations to product demand, and if he were extremely familiar with the previous allocation configurations of the vending machine and were an activist in re-allocating product storage, he might be able, by means of trial and error approaches to reconfiguration, to achieve some degree of success in determining the acceptability of a particular product storage allocation configuration, but, as will be illustrated by that which follows, his degree of success would depend upon how closely his subjective evaluations, hunches, or guesses actually match objective criteria of the type that are utilized by the present invention. By way of example, if a vending machine were first installed at a new location with the product storage allocation configuration depicted in Fig. 9, the serviceman might well suspect that some tailoring of product storage would be necessary in order to try to match product storage to product demand. If product availabilities were as noted in Fig. 10 at the time of first servicing, he might suspect that, since both products A and B were sold out at the time of servicing, and since fairly substantial quantities of products D-H remained available, some increase in product storage for products A and B was called for. Such determination would not be without doubt, however, and a decision to re-allocate product storage space in order to provide additional product storage for products A and B would require a further determination of which products' storage should be reduced to compensate for the increase in product storage for products A and B. In the absence of other information, such serviceman, if he guessed well, might re-allocate product storage to reduce product storage by one storage area for both of products E and H and to increase product storage by one storage area for both of products A and B, such that product storage allocation configuration of Fig. 12 would result.

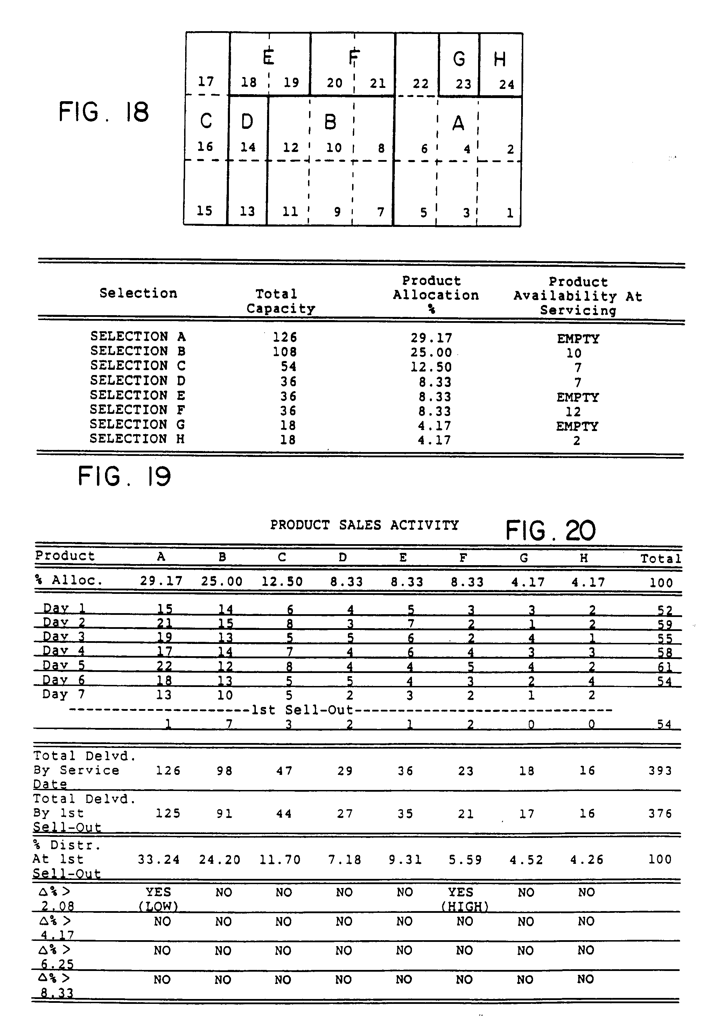

Unfortunately, upon next servicing the vending machine, the serviceman might well face the product availability status noted in Fig. 12. He would then be faced with the dilemma of finding that product H, whose storage space he had just reduced at last servicing, was sold out, along with products A and B, while fairly substantial quantities of products C and E remained available. If he were to make a very fortunate determination, he might re-allocate product storage to again increase product storage by one storage area for both of products A and B, to reduce the product storage by one storage area for both of products C and E, and to leave the product storage unchanged for product H, despite the fact that product H had been sold out at the time of servicing, in which event the product storage allocation configuration depicted in Fig. 15 would result. At this point, one might pause to consider how lucky a machine owner would be to have a serviceman who not only took such an interest in trying to obtain an optimal allocation configuration but who was also fortunate enough, from the limited information available to him, to be able to arrive at the determinations regarding re-allocation discussed herein.

If such super serviceman, upon next servicing the vending machine, were to encounter the product availability status noted in Fig. 16 he might well congratulate himself for his successful determinations to that point. At such servicing, although product A is still sold out, one product of product H remains available, which would lead the serviceman to believe that he had acted properly in not increasing product storage for product H even though it had been sold out at last servicing. However, product E, whose storage space he had just reduced at least servicing, is also sold out, and only product G, with 14 products available, remains available in any particularly substantial quantity. Based upon past re-allocations, the serviceman might reasonably suspect that further product storage for product A would be desirable, but he would then be forced to consider not only which product's storage should be reduced if he increases storage for product A, but also whether or not he has already reduced the storage for product E below an optimal value. If the serviceman gambles that the product storage provided for product E is appropriate despite the fact that the product was sold out at the time of servicing, and determines to increase the storage for product A by one additional storage area at the expense of product G, the product storage allocation configuration depicted in Fig. 18 would result.

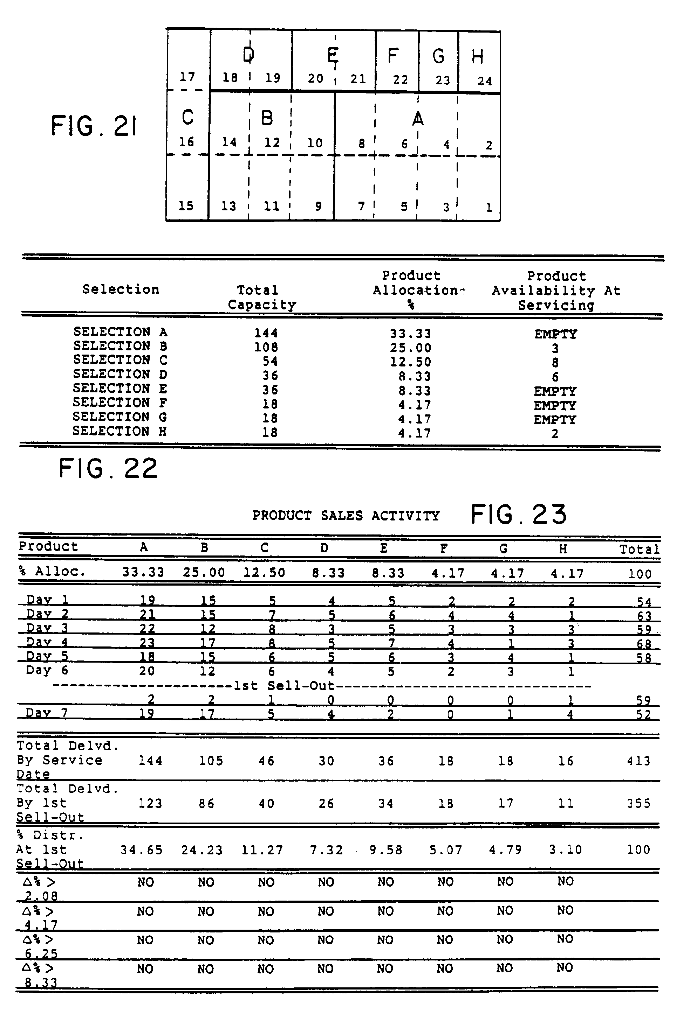

Unfortunately, the serviceman could then find himself in a quandry at the next servicing when the product availability status is as noted in Fig. 19. Even though his suspicion regarding product A would appear to have been proved correct, he would then find that products E and G were both also sold out. At such point, even the super serviceman of this example might be tempted to forego further re-allocations of product storage. If, however, he were an intrepid soul, he might, as much by guess as anything else, decide to further increase product storage for product A by one additional storage area at the expense of product F and to gamble that the product storage for products E and G was appropriate. If so, the resulting product storage allocation configuration would be as depicted in Fig. 21.

At the time of next servicing the serviceman might well encounter the product availability status noted in Fig. 22. Since product A is again sold out and has been sold out at each servicing, the serviceman might well contemplate whether or not still further product storage for product A would be desirable, but he would also be faced with the unavailability of products E, F, and G at servicing and with the problem of deciding which other product should have its product storage decreased further if he desires to increase product storage for product A.

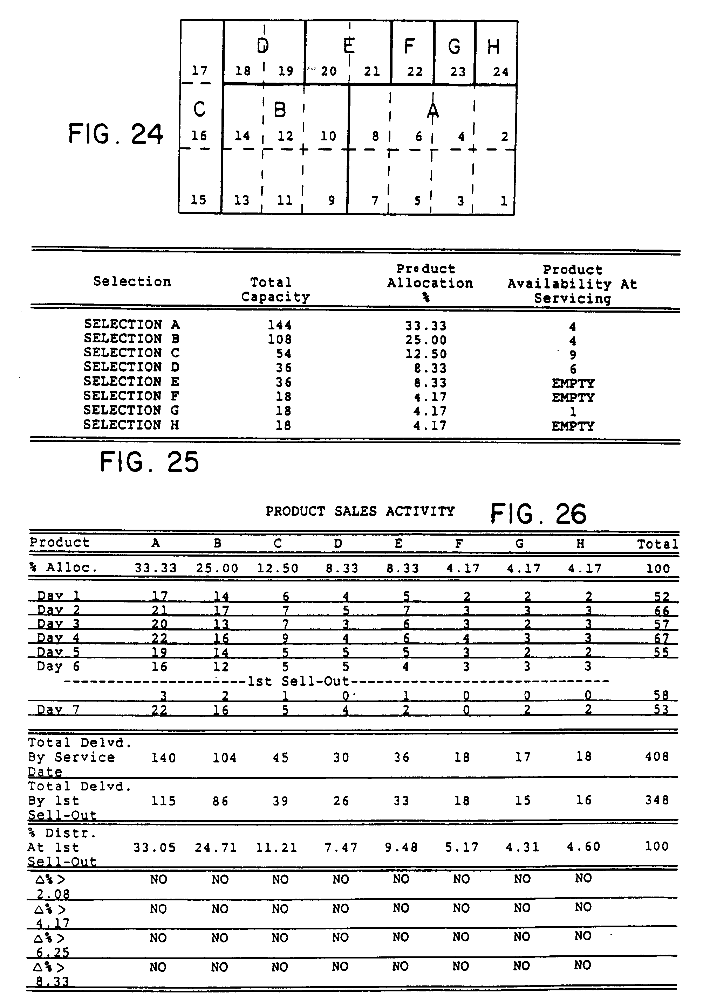

It should be observed that the product storage allocation configuration of Fig. 24 is identical to that depicted in Fig. 21 and that, instead of encountering the product availability status noted in Fig. 22 at the time of servicing, the serviceman could equally as well have encountered the product availability status noted in Fig. 25, which status might prove even more perplexing for the serviceman, especially since product F, whose product storage had just been decreased to provide greater product storage for product A is sold out while products for product A remain available. He might also question whether his decisions through several servicing cycles to leave product E with only two product storage areas allocated thereto were appropriate since product E continues to be sold out. Furthermore, he now finds that product H is again sold out, which had not happened since he first reduced the product storage allocated to product H to only a single storage area.

The foregoing illustrates how difficult it would be for even an extremely conscientious and dedicated serviceman with a great deal of familiarity with an individual vending machine and its service history to be able to determine whether the product storage allocation configuration for the mix of products vended by such vending machine conforms within acceptable norms to the demand for such products. It will be recognized that such determinations would be more difficult for a serviceman who was not familiar with the service history of the vending machine, particularly for a serviceman who was new to a route or who only occasionally serviced a particular vending machine. Moreover, any serviceman who wished to be able to maintain a familiarity with the vending machine serviced by him would quickly find himself involved with the recordation and maintenance of records for each of such vending machines, which recordkeeping could be quite extensive for a serviceman who serviced a large quantity of machines and is a task that most servicemen would not wish to undertake.

With the present invention, service personnel can readily ascertain whether or not the product storage allocation configuration then in effect for any given vending machine is acceptable based upon the historical demand for the various products vended by such vending machine. From Figs. 11, 14, 17, 20, 23, and 26, which figures include typical sales history data for the product storage allocation configurations depicted in Figs. 9, 12, 15, 18, 21, and 24, respectively, it can be observed that, if records or product demand are maintained up until the time of first product sell-out, it is possible to calculate demand percentages by product type, which demand percentages can then be utilized to determine the extent to which such demand percentages deviate from the then-current product storage allocation percentages of the various product types and whether such deviations are within acceptable norms.

As may be noted from Fig. 11, the product storage allocation percentages for products A and B are considerably lower than the product demand percentages calculated therefor, while the product storage allocation percentages for all of the other products C-H are greater than the product demand percentages calculated therefor. In view of the fact that each product storage area 1-24 is equivalent to approximately 4.17% of the total product storage available, it would be reasonable to decide that any deviation percentage of less than one-half of the percentage value of an individual product storage area, i.e., approximately 2.08%, would be considered within acceptable norms. The effect of such a decision would be to establish a window of acceptability around the product storage allocation percentage previously established for each product type.

When such a window of acceptability is applied with respect to the product sales activity noted in Fig. 11, it is found that a significant mismatch exists betwen the product storage allocation configuration in effect and the demand for the various product types. Only the storage allocation for product F is found to be within an acceptability norm. The storage allocations for products A and B are both found to be low while storage allocations for products C-E, G, and H are found to be high. By using increasingly larger windows the severity of the mismatch for the various product types can be determined. As can be observed from Fig. 11, the deviations in percentage of product demand from product allocation are greater than 4.17 for all of products A-D, G, and H, are greater than 6.25 for all of products A-C, and are greater than 8.33 for product A. If such information were made available to service personnel during servicing, such as by way of a display or other communications means, such personnel would not only know that a mismatch existed between product storage allocation and product demand, but they would be in a better position to be able to re-allocate product storage in a manner that would better match product demand.

In an elementary form of the invention, service personnel might be made aware of the acceptability or unacceptability of the product storage allocation configuration then in effect by the illumination of a status light on the vending machine or by a simple display or other form of communication. In another form, individual status lights for each product type could be provided, and such lights could be made to remain illuminated for each product whose storage is lower than desirable and to blink for each product whose storage is greater than desirable. In more sophisticated forms, information could be displayed under microprocessor control in response to various actions by service personnel, such as in response to certain inputs made by service personnel from data entry means of various types.

If deviation information of the type appearing in the lower portion of Fig. 11 were available to a serviceman, he might reasonably conclude that the product storage for products A and B should be increased and that the product storage for all of products C-E, G, and H could be reduced. Since the storage for product A appears low by greater than two storage areas, since the storage for product B appears low by greater than one and one-half storage areas, since the storage for products C, D, G, and H appear high by greater than one storage area, and since the storage for product E appears high by greater than one-half of a storage area, it would be reasonable for a serviceman to re-allocate product storage space to provide three additional storage areas for product A, two additional storage areas for product B, and one fewer storage areas for each of products C-E, G, and H. If such re-allocation were effected, the resulting product storage allocation configuration would be that depicted in Fig. 18.

Similar analyses may be performed with regard to the information appearing in the lower portions of Figs. 14, 17, 20 23, and 26. Interestingly, from the information appearing in each of Figs. 11, 14, and 17, one can reasonably reach a determination that storage space should preferably be re-allocated to result in the product storage allocation configuration depicted in Fig. 18. Quite clearly, use of the present invention can effect a significant improvement over the trial and error approach discussed hereinabove. The information appearing in Fig. 20 indicates that the product storage allocation configuration depicted in Fig. 18 proved unacceptable for the service cycle covered by Fig. 20 in that the product storage for product A was low by greater than one-half of a storage area and the product storage for product F was high by greater than one-half of a storage area. The most reasonable re-allocation in view of such information would be that depicted in Fig. 21. The information appearing in Figs. 23 and 26 indicates that the product storage allocation configuration of Fig. 21 (and Fig. 24) proved acceptable for the service cycles noted in Figs. 22-23 and 25-26.

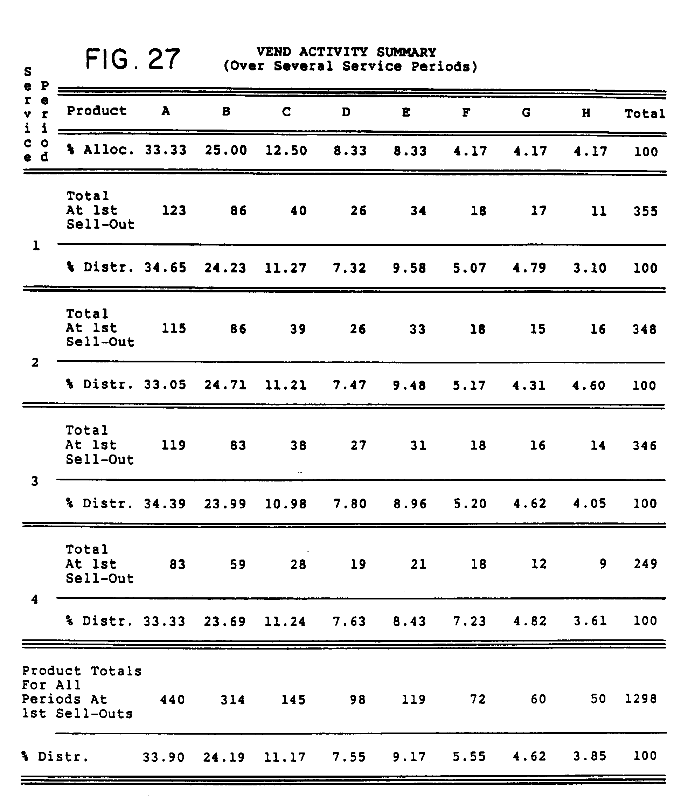

It should be noted that there may be occasions when a deviation of greater than the generally acceptable amount is detected for only a single product. In such circumstances, a microprocessor might well be programmed to disregard any single out-of-bounds occurrence since offsetting product re-allocation may well not be possible and since, in some instances, such out-of-bounds occurrence might be the result of some quirk in demand during a particular service cycle. In this last regard, systems can be so programmed to consider not only the most recent service cycle in determining the acceptability of the product storage allocation configuration, but also the product demand during previous service cycles. Fig. 27 illustrates how such multi-cycle product demand information can be employed.

Fig. 27 provides in summary fashion typical vend activity until first product sell-out over four service periods for a vending machine whose product storage allocation configuration is as depicted in Fig. 24. At each of the first three servicings, all deviation percentages were found to be within 2.08 of the allocated product storage percentages, but, at the fourth servicing, the deviation percentage for product F is found to be out-of-bounds. As is apparent from the data in Fig. 27, if total product demand until first sell-out for all four of the service cycles is utilized, however, instead of product demand during only the fourth service cycle, no problem is found to exist.

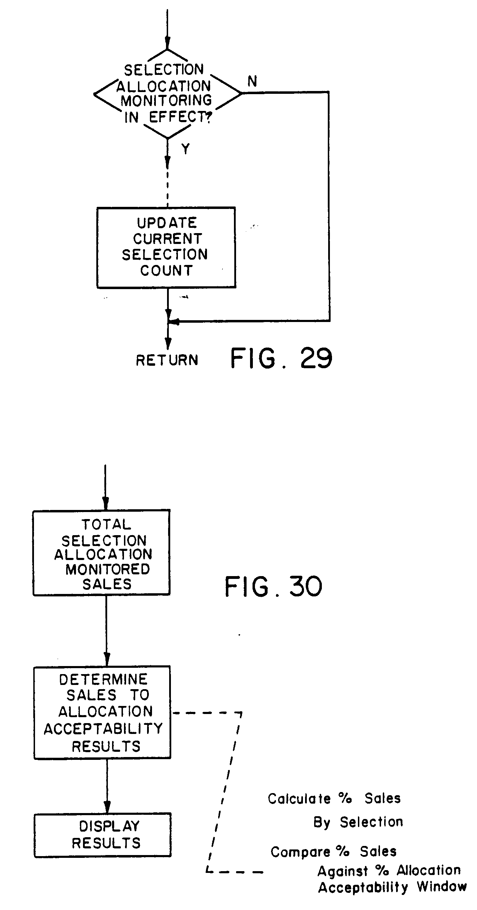

It will be recognized from what has been discussed hereinbefore that it is important to the practice of this invention as included in and as part of the embodiments described that a record of product demand be produced as products are being vended, that further production of such record be inhibited when any product first sells out and/or that the data of such record at the time of first product sell-out be saved or preserved in some fashion, that the recorded product demand for the various product types be compared in some fashion against the product storage allocated to each type of product, and that some indication of whether or not the product storage allocation configuration then in effect is acceptable be communicated to authorized personnel. Figs. 28 and 29 depict typical subroutine portions that may be employed during the course of a vend operation while the vending machine is in a sales mode to, in the case of Fig. 28, terminate selection allocation monitoring, i.e., inhibit further product demand recording, when a first product sell-out has been detected, and to, in the case of Fig. 29, update the current selection count, i.e., increment the recorded product demand count for the particular product being vended. Fig. 30 depicts a representative subroutine portion of the type that might typically be employed during a service mode to determine from the recorded product demand data whether the product storage allocation configuration is acceptable, such as by totaling the selection allocation monitored sales and deliveries, determining from such totals and from product storage allocation configuration information the allocation configuration acceptability results, and communicating such results to authorized personnel, e.g., by displaying such results.

In the foregoing discussions and examples the first sellout of a product type has served as a terminating event for the recordation of product demand data. It should be recognized, however, that the occurrence of other events may also serve as or constitute terminating events. For example, occasions may often arise where no product type sells out prior to machine servicing. In such cases, machine servicing may constitute the terminating event for product demand data recordation. In other settings, it may be desired that product demand data be recorded only for some set period of time, in which case the timing out of a timer or other timing means could constitute the terminating event for product demand recordation. As will be apparent from what has already been said, numerous other events could also serve as terminating events. In most of such instances, though, it will still be desired that sellout of a product type prior to the occurrence of an event that might otherwise be considered a terminating event would serve as an overriding terminating event. There may, however, even be exceptions to this. For example, the vending system could be so designed that the sellout of a product type would not be revealed to a customer until after he has made an appropriate product selection for the amount of credit entered. In such case, the processing means of the vending system might be programmed to update the product demand information in response to the first (and only the first) vend selection made during a vend operation, regardless of whether any product type is sold out. In such event, if a product type were sold out, the product request for the desired product would be noted and recorded, but any subsequent product request during the same vend operation, such as might typically be made by the customer after notification to him of the sold out condition of the desired product type, would not be counted on the grounds that it reflects only a substitute or secondary demand.

Actual updating of the recorded product demand data may be effected by the processing means at any appropriate time during the course of a vend operation, depending upon the particular vending systems, the period over which product demand data is desired, and the particular control program utilized or the particular control method followed. With a microprocessor controlled vending system the microprocessor may be programmed to be responsive to any of numerous events to effect an updating of the recorded product demand data, including such events as recognition of a vend selection, activation of the vend delivery means, or recognition of product delivery by the delivery sensor means, to name only a few.

It should also be appreciated that, although machine servicing will often include product restocking, machine servicing is not limited to product restocking, and servicing may sometimes not involve product restocking. In some instances servicing of the machine may involve the entry of data or information into the machine or the retrieval of some data or information therefrom apart from restocking, such as by means of the data entry means 104, the status monitor means 116, and/or the display means 108 of Fig. 8, perhaps even for the purpose of checking the consistency between product demand and product storage allocation before product restocking and/or product storage allocation is scheduled or becomes necessary, and, in certain instances, such information entry or retrieval, and operations dependent thereupon, may even involve or require the use of portable interrogation means, transmission and reception means, or phone lines or other data link means to remote devices of various types, all of which means and devices may, in such cases, form or be considered portions of the vend system of which the vending machine is also a part.

Additionally, although the means for communicating information to authorized personnel has generally been treated and discussed herein as being a visual display means, other communication means, including, without limitation as to other types, audio means of various types, could also be employed.

To this point, the application has been directed to more basic forms of the invention, and there has thus been discussed and described a vend space allocation monitor means and method that can be employed by service personnel to readily ascertain whether or not the product storage allocation configuration in effect for any given vending machine is acceptable, based upon the historical demand for the various products vended by such vending machine. As has been explained hereinabove, from Figs. 11, 14, 17, 20, 23, and 26, which figures include typical sales history data for the product storage allocation configurations depicted in Figs. 9, 12, 15, 18, 21, and 24, respectively, it can be observed that, if records of product demand are maintained up until the time of the first product sell-out, it is possible to calculate demand percentages by product type, which demand percentages can then be utilized to determine the extent to which such demand percentages deviate from the then-current product storage allocation percentages of the various product types and whether such deviations are within acceptable norms.

Through use of such vend space allocation monitor means and method service personnel can thus determine whether an established vend space allocation configuration for a given vend system is consistent with the historical demand for the various vend products. With certain versions of the more basic forms of such invention, sufficient data, such as the deviation information of the type appearing in the lower portions of Figs. 11, 14, 17, 20, 23, and 26, might even be available to such service personnel to allow them, on the basis of such data, to effect a reallocation of vend space. As is explained hereinabove, however, such service personnel must still exercise some judgment in the interpretation of the data in order to determine an appropriate reallocation configuration, as a consequence of which a degree of subjectivity is built into any determination. Consequently, the more refined form of the present invention has also been developed and is intended and designed to be an improvement over the more basic form of the vend space allocation monitor means and method described hereinabove in that it provides a means and method for objectively determining, based upon historical demand for the various vend product selections, a desirable vend space allocation configuration for a given vend system.

With respect to the more refined form of the invention, it should be recognized that, if the total storage of a given vend system is known, and if the capacities of individual storage areas of the vend system are known, it is possible, especially in the case of a vend system that employs a plurality of storage areas of equal capacity, to calculate or otherwise objectively determine the number and/or identities of individual storage areas that should desirably be allocated for storage of different types of products from the calculated demand percentages for such different types of products. By way of example, for the vend space allocation configuration of Fig. 9 and the sales history data of Fig. 11, which sales history data is also set forth in Fig. 31 along with other pertinent vend space allocation configuration information, a desired storage area distribution count for each different product type can be calculated according to the formula

$$S_n = [\%_{dist(n)} \times P_{tc}]/C,$$

where n is a variable representing a product A-H, $S_n$ refers to the desired storage area distribution count for product n, $P_{tc}$ refers to total product capacity of the vend system, C refers to the capacity of the individual, like-sized storage areas, and $\%_{dist(n)}$ refers to the percentage distribution of product n by demand at first product sell-out, i.e.,

$$\%_{dist(n)} = P_{demand(n)}/P_{demand(t)},$$

where $P_{demand(n)}$ refers to the demand for product n to first product sell-out and $P_{demand(t)}$ refers to total product demand for all products to first product sell-out.

Figs. 31-36 illustrate how such storage area distribution counts can be determined based upon product sales histories of Figs. 11, 14, 17, 20, 23, and 26 as repeated in Figs. 31-36, respectively. By way of example, Fig. 31 includes in its upper portion thereof information corresponding to that set forth in Figs. 9-11, including the product sales history as set forth in Fig. 11 and the monitored demand for product n to first product sell-out, i.e., $P_{demand(n)}$, and the monitored total product demand for all products to first product sell-out, i.e., $P_{demand(t)}$. Fig. 31 further includes in its lower portion calculations and determinations based upon such monitored demand values, the total product capacity of the vend system, and the capacity of the individual, like-sized storage areas such that desired storage area distribution counts, i.e., $S_n$, can be calculated for each of products A-H. Based upon such information, product A should preferably have 8.60 storage compartments allocated for product storage, product B should have 5.97, product C should have 2.39, product D should have 1.55, product E should have 2.15, product F should have 1.67, product G should have .96, and product H should have .72 storage compartments.

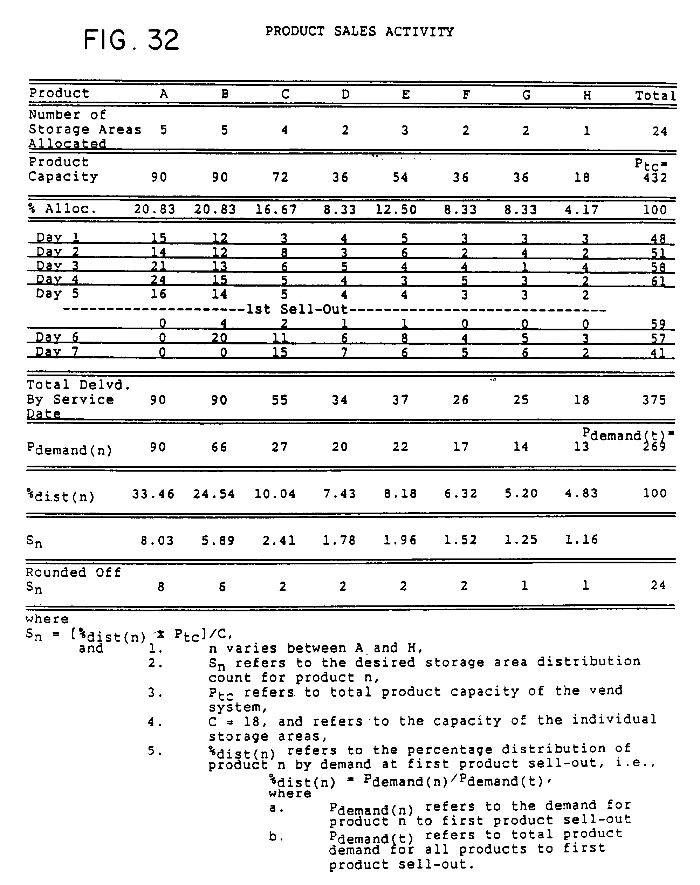

In most cases, if such storage area distribution counts are rounded off, the resulting combination of numbers will identify a desired optimal count distribution of storage areas for the products based upon the monitored and recorded historical demand for such products. However, as can be seen from Fig. 31, in some cases such rounding off may result in the specification of a total number of storage areas greater than the number of storage areas actually available in the vend system. In such event, it is necessary to employ some adjustment technique to reduce the total number of storage areas specified to the number of storage areas actually available. One possible technique is to adjust the standard rounding off breakpoint of .50 upwardly until the rounding off operation results in the specification of a total number of storage areas that is equal to the number of storage areas actually available in the vend system. If such technique is employed with Fig. 31, the resulting adjusted $S_n$ values are obtained, which values specify an optimal storage area distribution count based upon the monitored historical demand values for the products, the total product capacity of the vend system, and the capacity of the individual, like-sized storage areas. In similar fashion, Fig. 32 finds correspondence with Figs. 12-14, Fig. 33 finds correspondence with Figs. 15-17, Fig. 34 find correspondence with Figs. 18-20, Fig. 35 finds correspondence with Figs. 21-23, and Fig. 36 finds correspondence with Figs. 24-26.

It will be appreciated that the rounded off and/or adjusted $S_n$ values can be communicated to service personnel in a variety of ways, such as by way of an alphanumeric display, such that if the vending system is designed to be manually reconfigurable, the service personnel can reconfigure the vend system in accordance with such values, or, if the vending system is designed to be automatically reconfigurable, service personnel will be advised and aware of the reconfiguration scheme. Still further, with a microprocessor controlled vending system, the microprocessor can be programmed to communicate to service personnel an actual configuration scheme based upon the $S_n$ values, e.g. by displaying for each product type the specific storage areas within the vend system that are to be allocated to such product type or by displaying in a light panel configuration, perhaps in response to data entry by service personnel, specific storage areas to be allocated for the various products to be vended.

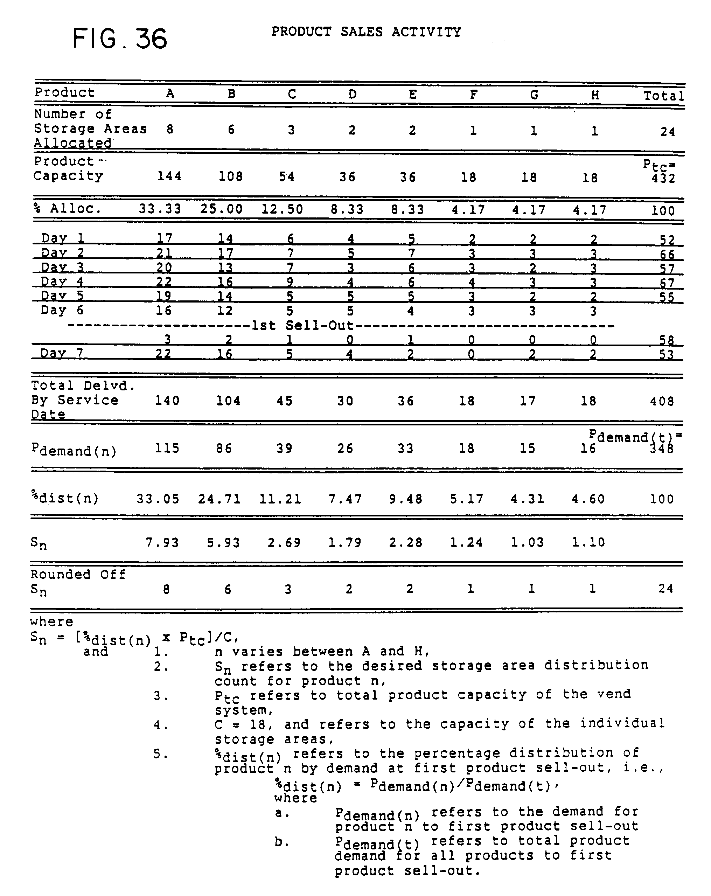

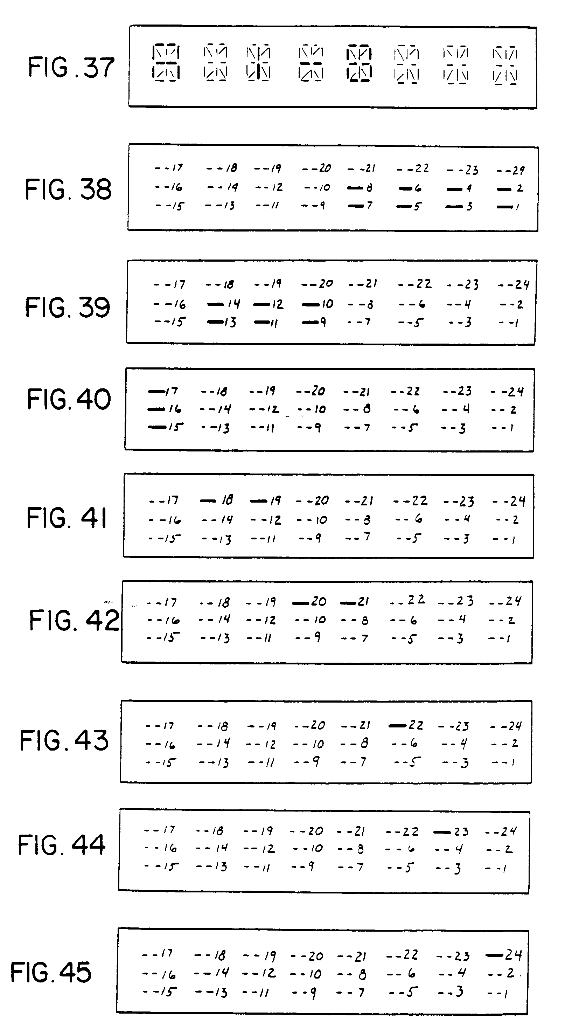

By way of example, Fig. 37 depicts an alphanumeric display means whereon is depicted "A 1 - 8" signifying that storage areas 1-8 in the vend system of Fig. 9 should be allocated to product A. For the $S_n$ values of Fig. 36 one might anticipate the display of reconfiguration information, as follows:

```
A   1 - 8
B   9 -14
C  15 -17
D  18 -19
E  20 -21
F      22
G      23
H      24
```

Such information may be displayed in a cyclically repeating form or as a response to a data entry by the service personnel or in response to other stimuli.

If a light panel is utilized, the display of like information can be effected as depicted in Figs. 38-45, wherein the illuminated lights depict the storage area reconfiguration groupings for the various products. As with an alphanumeric display, the individual groupings information may be displayed in a cyclically repeating form or as a response to a data entry by the service personnel, e.g., actuation of a specific product selection means, or in response to other stimuli.

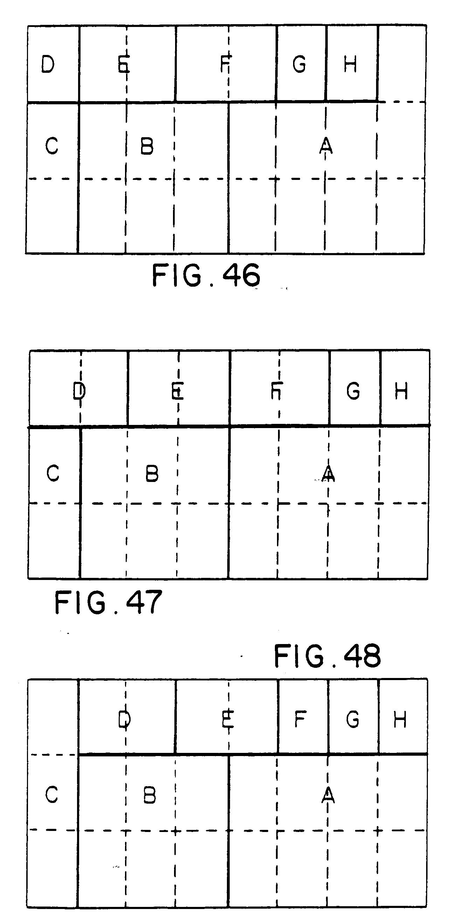

It will be appreciated that the particular design of any given vend system plays a role in the product storage allocation configurations that can be realized. Information regarding the particular vend system design can be employed in conjunction with rounded off or adjusted $S_n$ values to identify and communicate to service personnel particular reconfiguration schemes that would be advantageous for such system design, based upon the historical demand for the various products. This is especially true of microprocessor based vending systems in which the processing means can be programmed to use the calculated desired storage area distribution counts and vend system design information to develop a preferred reconfiguration scheme. By way of example, for a vending system constructed according to Fig. 8, wherein the vending machine is constructed according to Fig. 1, with all of the columns 1'-8' being of depths to hold three products laid end-to-end in column portions a, b, and c thereof, as in Fig. 7, and all of the columns 1'-8' and their portions a, b, and c being of equal height such that equal numbers of products can be stacked in each of the portions a, b, and c of such columns, as a consequence of which the vending machine may be considered to have twenty-four storage areas of equal size, each of which storage areas is capable of holding approximately 4.17% of the total storage capacity of the vending system, with the vend delivery system constructed in accordance with Fig. 7 and the teachings of US-A- 4,991,739 to permit vending from the product storage areas, a preferred reconfiguration scheme as specified and depicted in Fig. 46 can be readily developed by the processing means 102 from system design data and the adjusted $S_n$ values of Fig. 31. In similar fashion, a preferred reconfiguration scheme as specified and depicted in Fig. 47 could be readily developed from the rounded off $S_n$

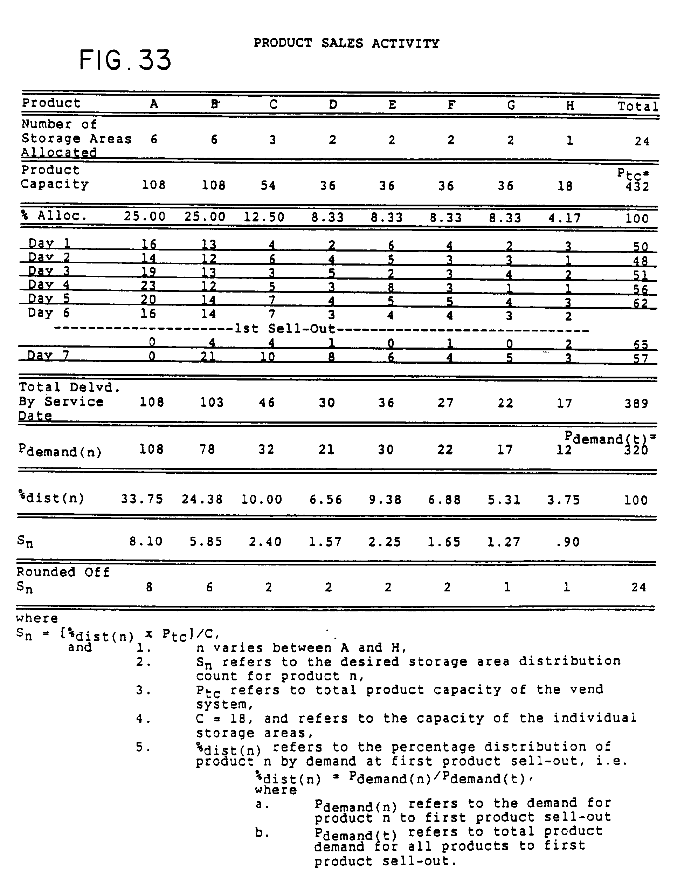

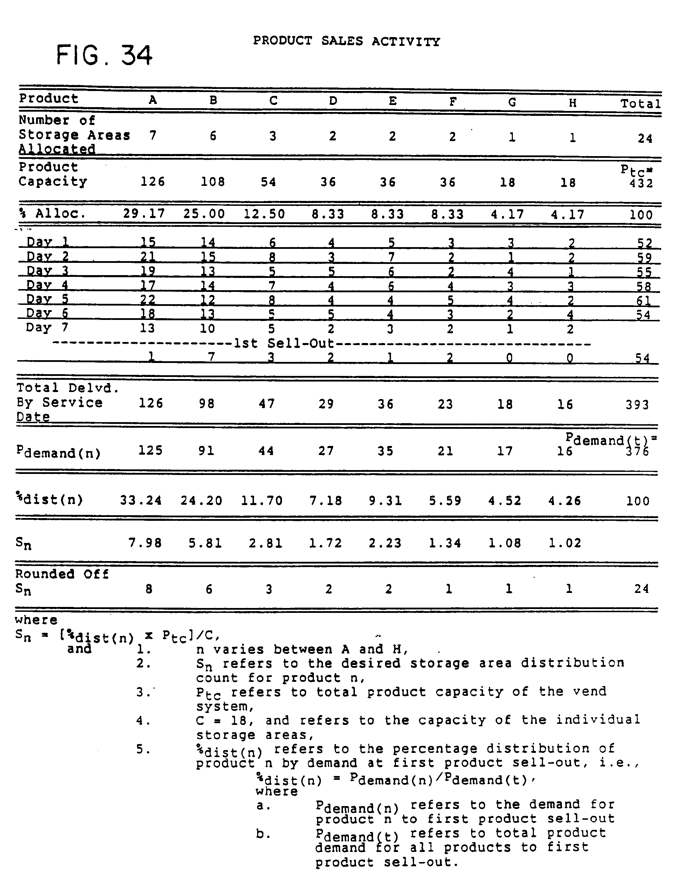

values of Figs. 32 and 33 and a preferred reconfiguration scheme as specified and depicted in Fig. 48 could be readily developed from the rounded $S_n$ values of Figs. 34-36.

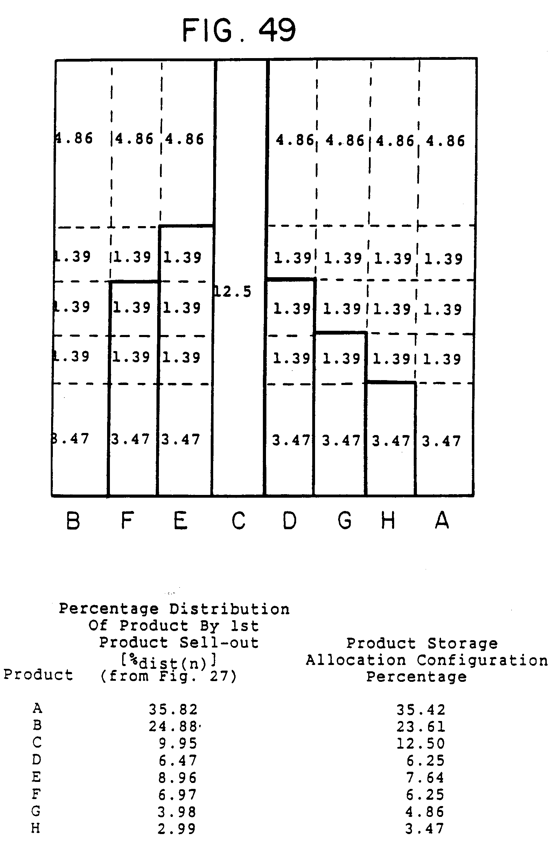

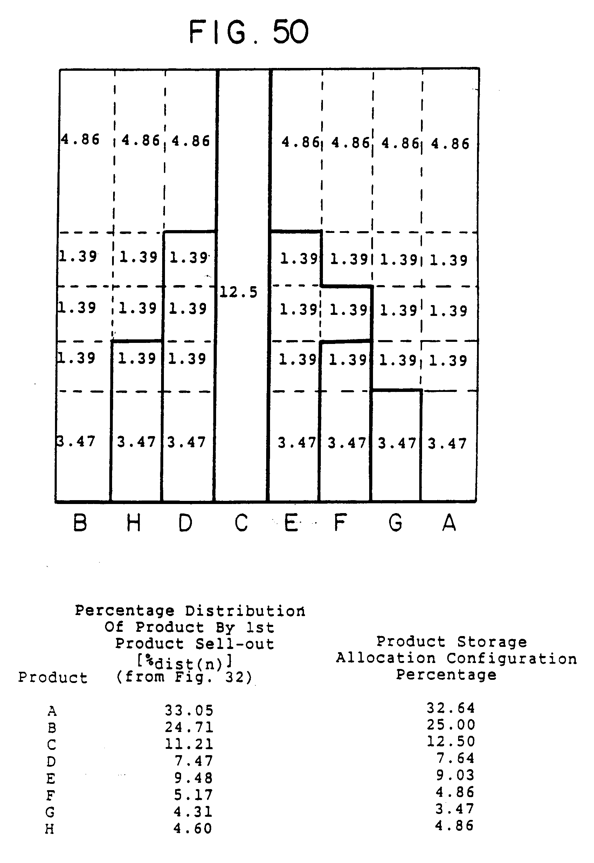

While the foregoing clearly demonstrates how, for a vending system that has a plurality of like-sized storage areas, the present invention operates and can be utilized to determine a preferred vend space allocation configuration based upon the historical demand for the various vend product selections, it must be recognized that such invention is not limited to use with systems that employ only like-sized storage areas, but can also be advantageously utilized with systems that have storage areas of various sizes. One type of such a system would be a system constructed according to Fig. 8, wherein the vending machine is constructed according to Figs. 1 and 4 to permit the establishment of various configuration schemes through the use of openings 17'''' in the sidewalls 16'''', closure members 19'''', and repositionable guide means 21'''' and 23'''', and wherein a suitable vend delivery system, such as a vend delivery system constructed in accordance with the teachings of US-A- 4,991,739, is provided. With such a system, the percentage distribution of the various products by demand, i.e., $\%_{dist(n)}$, could be readily employed in conjunction with system design data to determine, particularly from look-up tables and/or through programmed matching techniques, preferred reconfiguration schemes based upon the historical demand for the various products available. Thus, Fig. 49 specifies and depicts a preferred vend space allocation configuration for such a system based upon the historical product demand and the resulting percentage distributions of the various products by demand, i.e., $\%_{dist(n)}$, set forth in Fig. 31. By a similar token, and as an example of how such a system can be reconfigured to match product demand, Fig. 50 specifies and depicts a preferred vend space allocation configuration for such a system based upon the historical product demand and the resulting percentage distributions of the various products by demand, i.e., $\%_{dist(n)}$, set forth in Fig. 36.

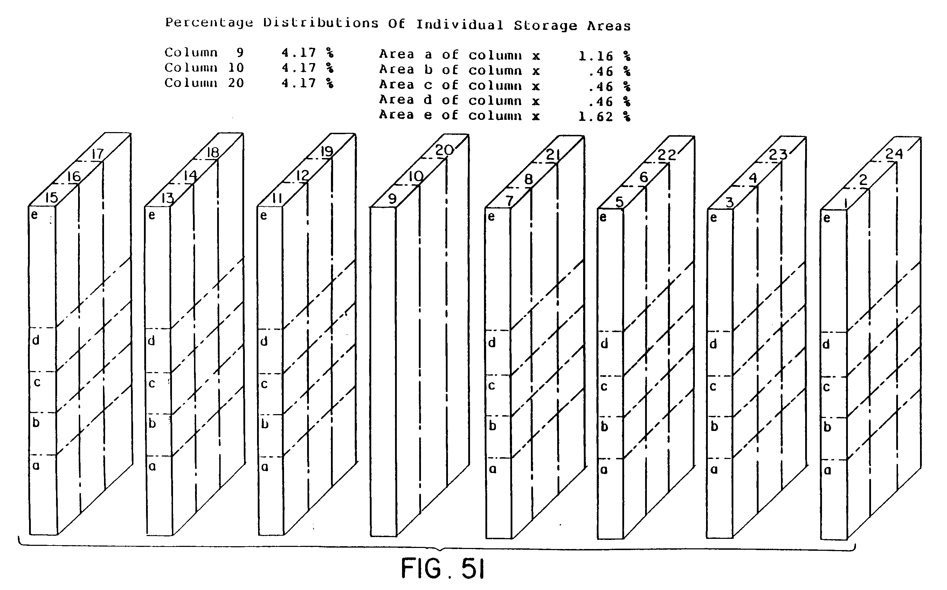

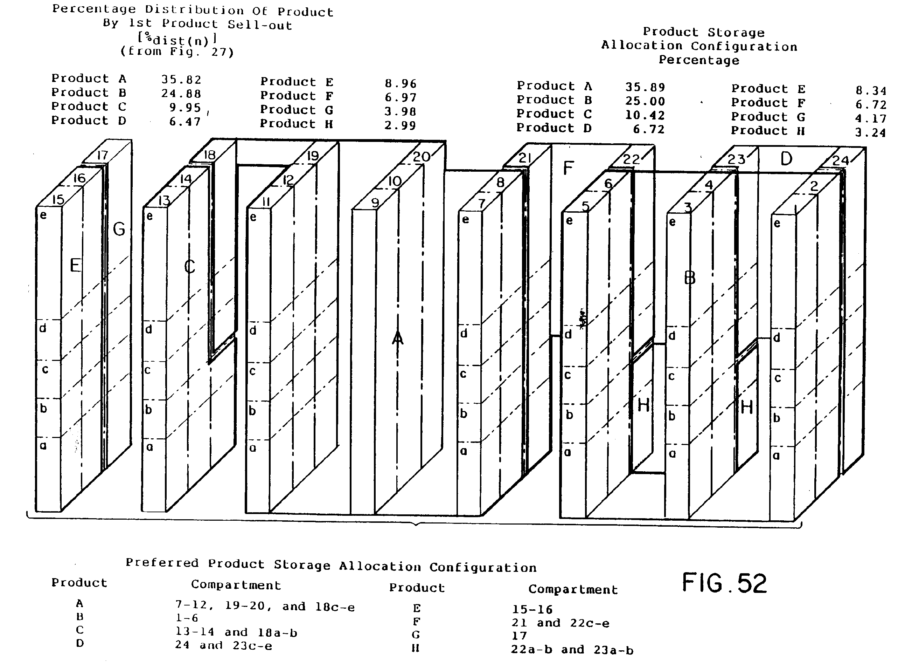

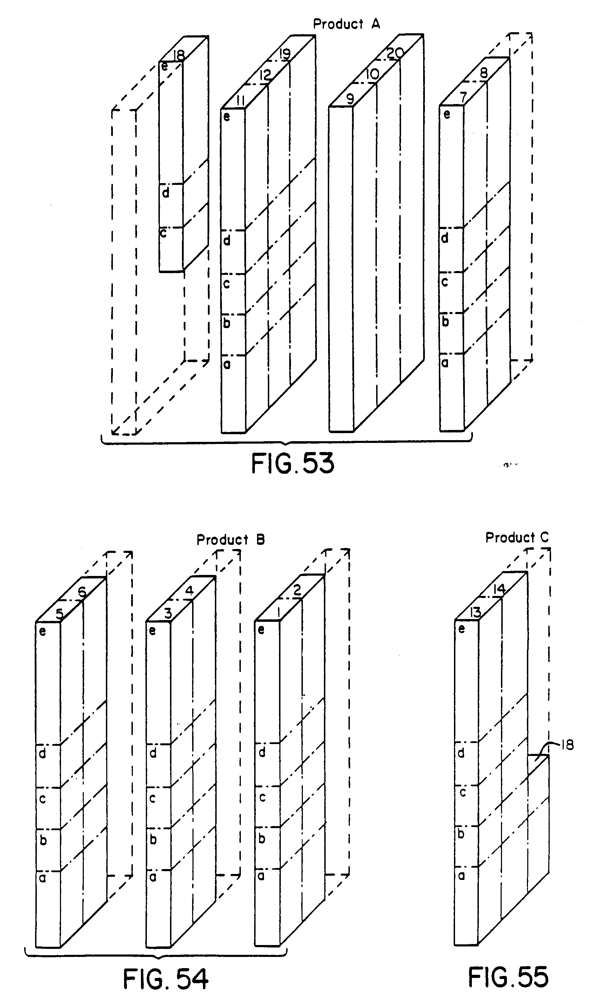

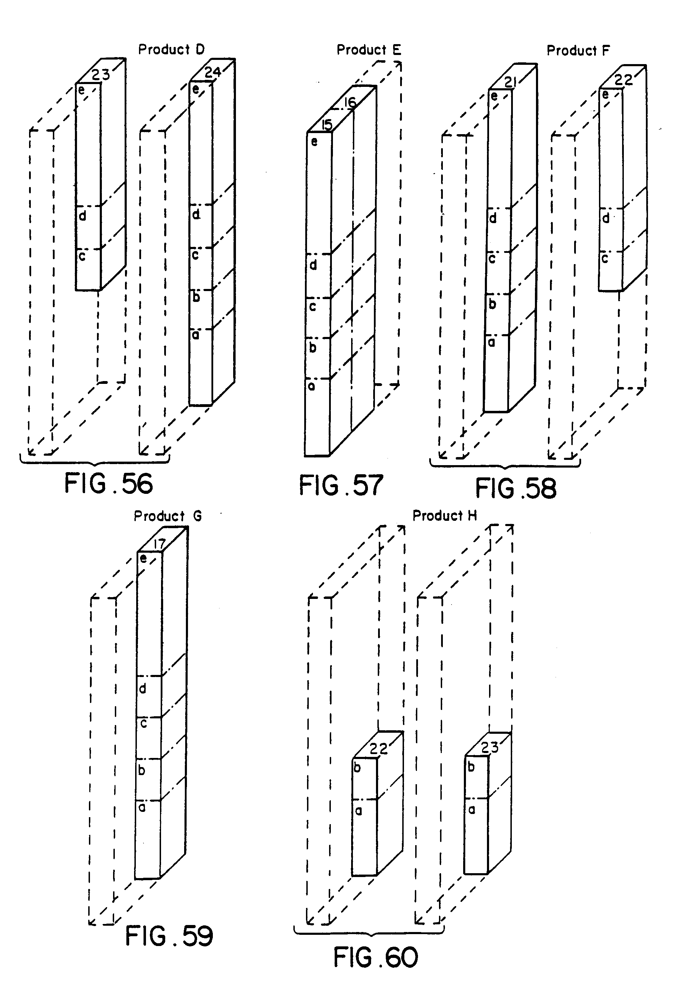

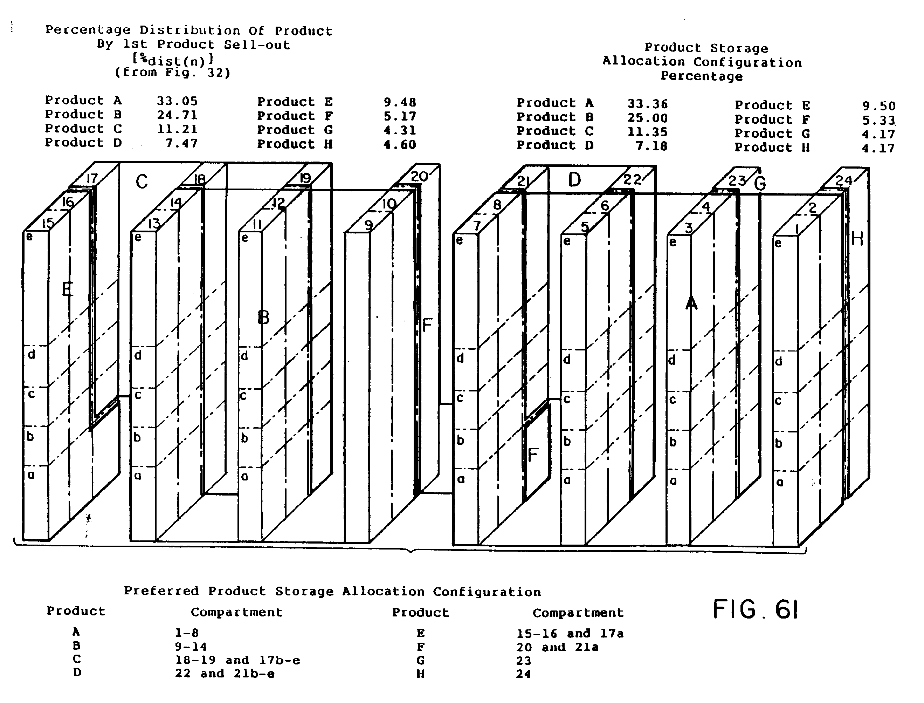

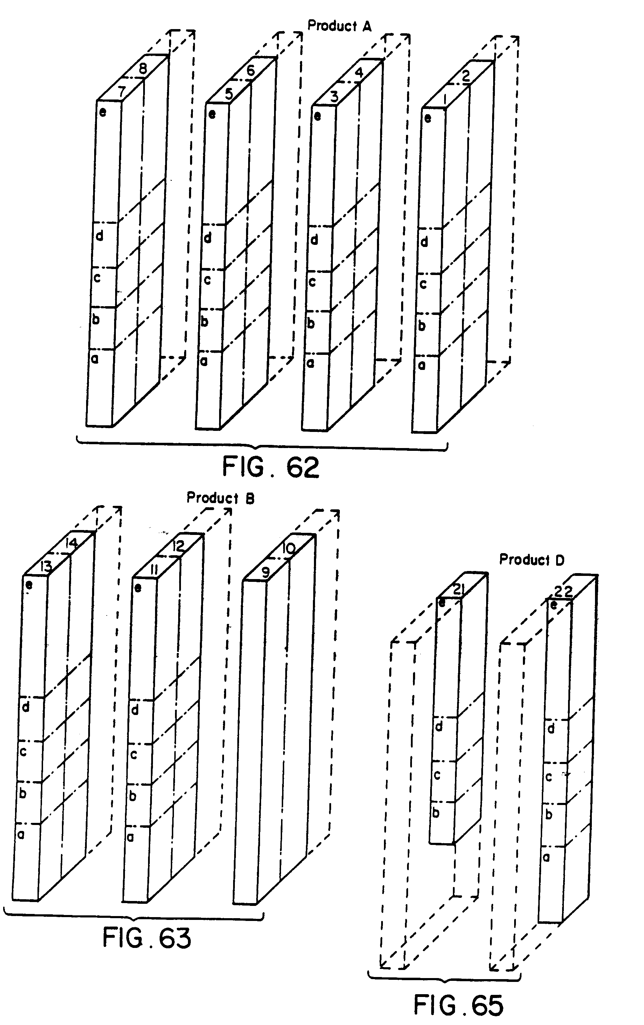

From what has already been discussed, it should be further apparent that the present invention can find application with vending systems that employ still more complex vending machine structures, such as a vending system constructed according to Fig. 8 with a vending machine structure that combines the features of Figs. 1, 4, and 7, such that the product storage areas of such vending machine can be represented in the fashion depicted in Fig. 51. With such a vending system, the percentage distribution of the various products by demand, i.e., $\%_{dist(n)}$, could be readily employed in conjunction with system design data, as discussed previously, to determine, particularly from look-up tables and/or through programmed matching techniques, preferred reconfiguration schemes for the particular vending machine under discussion, based upon the historical demand for the various products available or provided in such vending machine. To that end, Fig. 48 specifies and depicts a preferred vend product storage allocation configuration for such a system and vending machine based upon the historical product demand and the resulting percentage distributions of the various products by demand, i.e., $\%_{dist(n)}$, set forth in Fig. 31. For purposes of clarity, Figs. 53-60 depict the preferred allocations by vend space areas for the products A-H that are available in such vending machine, as specified and depicted in Fig. 52. In similar fashion, Fig. 61 specifies and depicts a preferred vend space allocation configuration for such a system and vending machine based upon the historical product demand and the resulting percentage distributions of the various products by demand, i.e., $\%_{dist(n)}$, set forth in Fig. 37, with Figs. 62-69 depicting, for purposes of clarity, the preferred allocations by vend space areas for the products A-H that are available in such vending machine, as specified and depicted in Fig. 62.

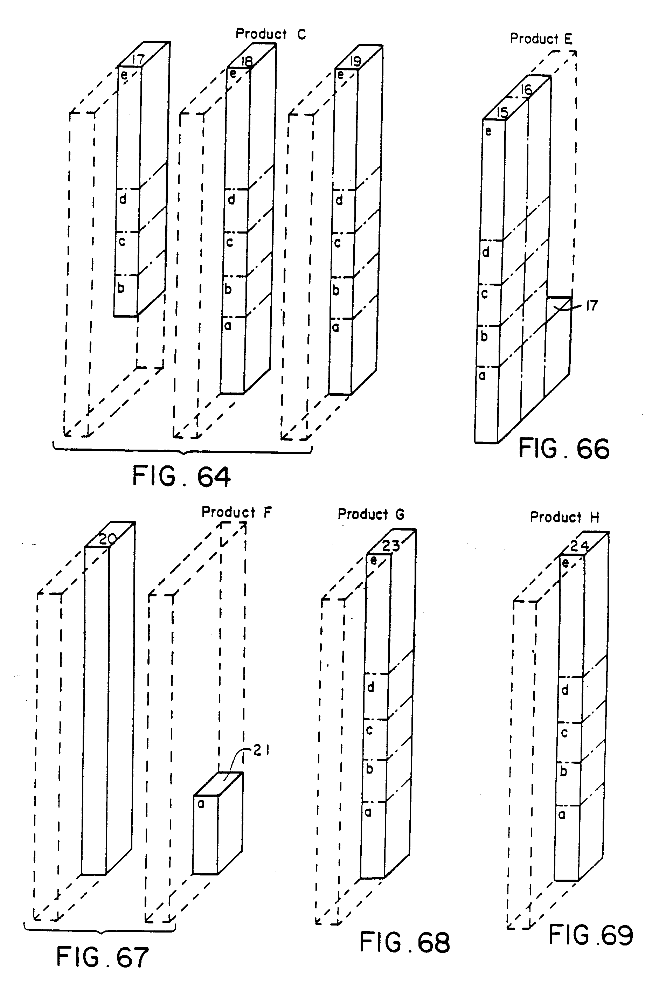

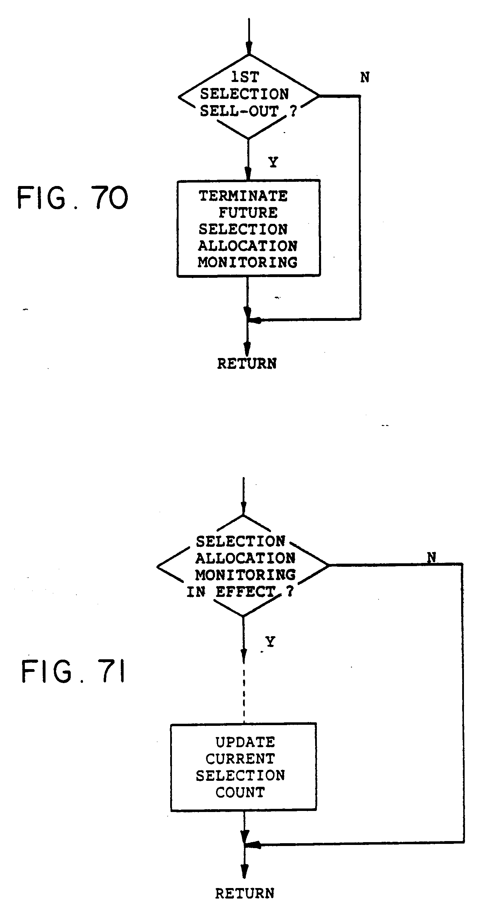

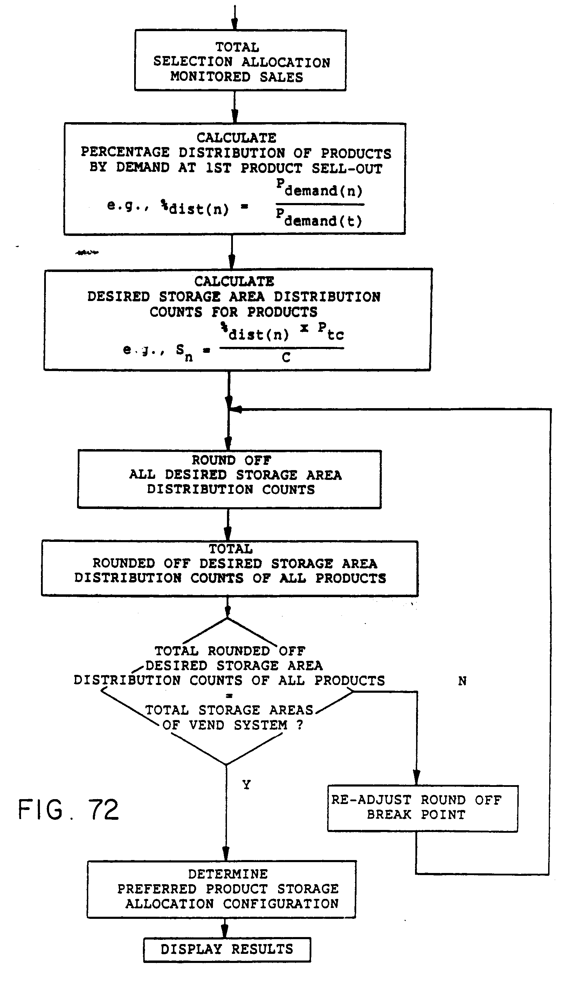

It will be recognized from what has been discussed hereinbefore that it is important to the practice of this invention as included in and as part of the more refined embodiments that a record of product demand be produced as products are being vended, that further production of such record be inhibited when any product first sells out and/or that the data of such record at the time of first product sell-out be saved or preserved in some fashion, that a preferred vend space allocation configuration be determined from the recorded product demand for the various product types based upon system design, and that information indicative of the preferred vend allocation configuration be communicated to authorized personnel. Figs. 66 and 67, corresponding to Figs. 28 and 29 discussed hereinabove, depict typical subroutine portions that may be employed during the course of a vend operation while the vending machine is in a sales mode to, in the case of Fig. 70, terminate selection allocation monitoring, i.e., inhibit further product demand recording, when a first product sell-out has been detected, and to, in the case of Fig. 71, update the current selection count, i.e., increment the recorded product demand count for the particular product being vended. Fig. 72 depicts a representative subroutine portion of the type that might typically be employed during a service mode to determine a preferred vend space allocation configuration from the recorded product demand for the various product types based upon the system design and to communicate information indicative of such preferred vend space allocation configuration to authorized personnel, e.g., by displaying a desired storage area distribution count or, more preferably, space allocation information indicative of a preferred vend space allocation configuration.

It should be noted that Fig. 72 depicts a typical subroutine of the type that might be employed with a vending system of the type discussed with regard to Figs. 46-50, wherein the vending machine is constructed according to Fig. 1, with all of the columns 1'-8' being of depths to hold three products laid end-to-end in column portions a, b, and c thereof, as in Fig. 7, and all of the columns 1'-8' and their portions a, b, and c being of equal height such that equal numbers of products can be stacked in each of the portions a, b, and c of such columns, as a consequence of which the vending machine may be considered to have twenty-four storage areas of equal size. With other vending systems or with systems that employ vending machines wherein not all storage areas are of like size, the subroutine portions involving calculation of desired storage area distribution counts and development of preferred vend product storage allocation configuration therefrom would be replaced by other portions, such as table look-ups and/or matchings of percentage distributions of products by historical demand against product storage capabilities and possibilities for such particular systems and/or vending machines, to develop a preferred vend space allocation configuration.

As has been previously discussed with reference to Figs. 5-7, proper operation of the motor M' of the vend delivery system of Applicant's US-A- 4,991,739 to advance the appropriate finger 94' to 95' to engage an appropriate escapement member 80', 380', or 480' to effect the delivery of the desired type of product can be readily achieved, especially with utilization of a microprocessor controlled vending system. By way of example only, and not by way of limitation, with the vending machine and vend space allocation configuration depicted in Fig. 62, the processing means of Fig. 8 could be programmed to, initially, effect vending of product A from columns 1-2 until such time as delivery sensor means 112 no longer detects a delivery of product A, whereupon delivery could then be effected from columns 3-4 until they became empty, and so on until all of columns 1-8 were emptied. The same principle would be applied with respect to the other products B-H, as well. Alternatively, if products of a given type are stored in a plurality of columns which are separately addressable for dispensing purposes, such columns may be addressed in a cyclical fashion, under program control, and delivery sensor means 112 can be employed to ensure that delivery of a product actually occurs or that a different column is addressed, until all columns holding such type of product have been emptied. From what has been said hereinbefore, it will thus be apparent to those skilled in the art that a wide variety of vend delivery methods and techniques can be employed and utilized in conjunction with the present invention.

In the foregoing discussions and examples the first sellout of a product type has served as a terminating event for the recordation of product demand data. As was the case with the more basic forms of the invention, it should be recognized that the occurrence of other events also could serve as or constitute terminating events. As has previously been noted, occasions may often arise where no product type sells out prior to machine servicing. In such cases, machine servicing may constitute the terminating event for product demand data recordation. In other settings, it may be desired that product demand data be recorded only for some set period of time, in which case the timing out of a timer or other timing means could constitute the terminating event for product demand recordation. As will be apparent from what has already been said, numerous other events could also serve as terminating events. In most of such instances, though, it will still be desired that sellout of a product type prior to the occurrence of an event that might otherwise be considered a terminating event would serve as an overriding terminating event. There may, however, even be exceptions to this. For example, the vending system could be so designed that the sellout of a product type would not be revealed to a customer until after he has made an appropriate product selection for the amount of credit entered. In such cases, the processing means of the vending system might be programmed to update the product demand information in response to the first (and only the first) vend selection made during a vend operation, regardless of whether any product type is sold out. In such event, if a product type were sold out, the product request for the desired product would be noted and recorded, but any subsequent product request during the same vend operation, such as might typically be made by the customer after notification to him of the sold out condition of the desired product type, would not be counted on the grounds that it reflects only a substitute or secondary demand.

Similarly, as was true of the more basic forms of the invention, with the more refined versions of the invention actual updating of the recorded product demand data may be effected by the processing means at any appropriate time during the course of a vend operation, depending upon the particular vending systems, the period over which product demand data is desired, and the particular control program utilized or the particular control method followed. With a microprocessor controlled vending system the microprocessor may be programmed to be responsive to any of numerous events to effect an updating of the recorded product demand data, including such events as recognition of a vend selection, activation of the vend delivery means, or recognition of product delivery by the delivery sensor means, to name only a few.

It should also be appreciated that, with the more refined versions of the invention, as was the case with the more basic forms, although machine servicing will often include product restocking, machine servicing is not limited to product restocking, and servicing may sometimes not involve product restocking. In some instances servicing of the machine may involve the entry of data or information into the machine or the retrieval of some data or information therefrom apart from restocking, such as by means of the data entry means 104, the status monitor means 116, and/or the display means 108 of Fig. 8, perhaps even for the purpose of checking the consistency between product demand and product storage allocation before product restocking and/or product storage allocation is scheduled or becomes necessary, and, in certain instances, such information entry or retrieval, and operations dependent thereupon, may even involve or require the use of portable interrogation means, transmission and reception means, or phone lines or other data link means to remote devices of various types, all of which means and devices may, in such cases, form or be considered portions of the vend systm of which the particular vending machine is also a part.

Also, with the more refined versions of the invention, it may be the case that, for some reason, the preferred vend product storage allocation configuration communicated by or according to the invention might, in some instances, be a configuration that is considered inappropriate or unacceptable. In such instances, service personnel may be permitted, such as by operation of the data entry means 101, to reject such preferred vend product storage allocation configuration or even to alter such preferred vend product storage allocation configuration to achieve a more acceptable configuration. It should be appreciated that, depending upon the particular vending system and/or vending machine involved, reconfiguration of the system or machine may involve anywhere from little or no manual reconfiguration to extensive repositioning of various elements necessary to effect a variation in the allocation configuration of the system and/or vending machine.

Additionally, as was the case with the more basic forms of the invention, although the means for communicating information to authorized personnel has generally been treated and discussed herein as being a visual display means, other communication means, including, without limitation as to other types, audio means of various types, could also be employed.

In light of the foregoing it should thus be apparent that the invention is directed to a vend space allocation monitor means for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, said vend space allocation monitor means comprising a vend selection monitoring means for monitoring over a period of time the historical demand for the various classes of selectable vendable products, means for determining, based at least in part upon said historical demand, whether such established vend space allocation configuration is consistent with selection demand norms, and means for communicating to authorized personnel such determination and that, in more refined versions, such determination may take the form of space allocation information indicative of a preferred vend space allocation configuration. The vend selection monitoring means of the invention may include data storage means for storing historical demand data representative of the historical demand over the period of time for the plurality of classes of selectable vendable products and the determining means may include means for retrieving said historical demand data. In most instances, the historical demand data upon which such determination is based will be the historical demand data for the period of time prior to the first sellout of any class of selectable vendable product, but events other than first sellout may also constitute terminating events for product demand data recordation.

In many embodiments of the invention, a processing means forms portions of the vend selection monitoring means and the determining means, the vend selection monitoring means also includes vend selection entry means, and the processing means is operable during vending operations to update the historical demand data stored in the data storage means to reflect the vend selection for each product vend operation. A variety of features may be found in such embodiments, a number of examples of which are set forth hereinafter. In some of such embodiments, the vend selection monitoring means may include means for monitoring the product availability status for each class of selectable vendable products and for detecting when a class of selectable vend products becomes sold out, said processing means being responsive to the detection of the first sold out condition for a class of selectable vendable products to prevent further updating during subsequent vending operations of historical demand data stored in said data storage means.. Also, the vending system may include credit entry means and the processing means may be responsive to the detection of a vend selection for which sufficient credit has been entered to effect the updating of said historical demand data. Alternatively, the vending system may include vend means and the processing means may be operable to effect the updating of said historical demand data when operation of the vend means is effected by said processing means. In other instances, the vend selection monitoring means may include delivery sensor means for detecting delivery of a product, with the processing means being responsive to the detection of a product delivery to effect the updating of said historical demand data.

In view of what has been discussed hereinbefore, it should thus be clear that the processing means may include memory means for storing data therein and means for retrieving such data therefrom, said data storage means for storing historical demand data forming a portion of said memory means, said memory means also including a portion thereof for storing system design data, such as product storage allocation configuration data representative of the established product storage allocation configuration, and that, upon the occurrence of a terminating event, which may take many forms, said processing means is operable, in the more basic forms of the invention, to determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms, and in the more refined forms of the invention, to determine from said historical demand data and from said system design data stored in said memory means the space allocation information indicative of a preferred vend space allocation configuration for the vending system. In certain instances, servicing of the vending system may constitute said terminating event. In other instances, wherein the vending system is operable in a vending mode of operation and in a service mode of operation, initiation of a service mode of operation may constitute said terminating event. Also, if the vending system includes means for detecting a machine condition indicative of a service mode of operation of the vending system, said processing means may be operatively connected to such detecting means and responsive to detection of a machine condition indicative of a service mode of operation to determine, in the more basic forms of the invention, whether the established vend space allocation configuration is consistent with selection demand norms, and, in the more refined forms of the invention, the space allocation information indicative of a preferred vend space allocation configuration for the vending system. In such regards, by way of example, the means for detecting a machine condition may include status monitor means and the machine condition indicative of a service mode of operation may be a vendor door open condition. Further, in some instances, wherein the vending system includes service information entry means for entering service information, said processing means may be operatively connected to the service information entry means and responsive to entry of service information to determine in the more basic forms of the invention, whether the established vend space allocation configuration is consistent with selection demand norms, and, in the more refined forms of the invention, the space allocation information indicative of a preferred vend space allocation configuration for the vending system, with the entry of such service information constituting said terminating event. In still other instances, the first sellout of a class of selectable vendable products may constitute said terminating event. Furthermore, with certain embodiments of the invention, the terminating event for a given period of time may be the first event to occur from among a plurality of possible terminating events. For example, the possible terminating events may include both first sellout of a class of selectable vendable products and servicing of the vending system. Also, the vend selection monitoring means could include timing means and one of said possible terminating events could be the timing out of said timing means.

With the foregoing discussions in mind, it should thus be apparent to those skilled in the art that, with certain embodiments of the invention, the vending system may include credit entry means and the processing means may be responsive to the first vend selection entered during a vend operation for a credit entry of an amount sufficient for the vend cost of such vend selection to update said historical demand data. With such embodiments, the processing means may further include memory means for storing data therein and means for retrieving such data therefrom, said data storage means for storing historical demand data forming a portion of said memory means, said memory means also including a portion thereof for storing system design data, such as product storage allocation configuration data representative of the established product storage allocation configuration, and wherein, upon the occurrence of a terminating event, said processing means is operable, in the more basic forms of the invention, to determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms, and, in the more refined forms of the invention, to determine from said historical demand data and from the system design data stored in said memory means the space allocation information indicative of a preferred vend space allocation configuration for the vending system. Depending upon the embodiment utilized, servicing of the vending system may constitute said terminating event, or, if the vending system is operable in a vending mode of operation and in a service mode of operation, initiation of a service mode of operation may constitute said terminating event, or if vend selection monitoring means includes timing means, the timing out of said timing means may constitute said terminating event, or the terminating event for a given period of time may be the first event to occur from among a plurality of possible terminating events.

Certain of the more basic embodiments of the invention may be designed and constructed such that the memory means includes a portion thereof for storing acceptability standards data and said processing means is operable to calculate for each class of selectable vendable products a value representative of the difference between product storage allocated and the historical product demand for products of such class of selectable vendable products and to compare such calculated value against said acceptability standards data to obtain result data, said result data being indicative of whether the established vend space allocation configuration is consistent with selection demand norms. The processing means may be operable to effect communication to authorized personnel of said result data by said means for communicating, and said means for communicating may include means for visually indicating whether the established vend space allocation configuration is consistent with selection demand norms, audio means for providing such indication, or other indicator means, including means operable by authorized personnel to effect communication of said result data.

Certain of the more refined embodiments of the invention may be similarly designed and constructed such that the processing means is operable to calculate for each class of selectable vendable products a proportionate demand value representative of the percentage distribution by demand of such class of products and to determine therefrom vend space allocation information indicative of said preferred vend space allocation configuration for the vending system. The processing means may also be operable to effect communication to authorized personnel of said space allocation information indicative of said preferred vend space allocation configuration by said means for communicating, and said means for communicating may include means for visually indicating said space allocation information, audio means for providing such information, or other indicator means, including means operable by authorized to effect communication of said space allocation information. If the means for communicating includes means for visually indicating said space allocation information, such visual means may include light means, which light means might, in some embodiments, include a plurality of lights, with each product storage area having a light associated therewith, or alphanumeric display means for displaying said space allocation information. If the means for communicating includes means for visually indicating whether the established vend space allocation configuration is consistent with selection demand norms, such visual means may include light means, which light means might, in some embodiments, include a plurality of lights, each class of selectable vendable type of products having a light associated therewith, the visual condition of said lights corresponding to said result data, or display means for displaying said result data.

Also, with certain of the more basic embodiments of the invention, the vending system may include means operable to place such system in a service mode of operation, said processing means being operable when the vending system is in a service mode of operation to effect, based upon the degree of conformance between said stored historical demand data and said stored product storage allocation configuration data, communication to authorized personnel by said means for communicating of an indication whether the established vend space allocation monitor means is consistent with selection demand norms. In addition, the vending system in such embodiments may include data entry means operable by authorized personnel while the vending system is in a service mode of operation to provide data to said processing means and wherein said processing means is responsive to the receipt of such data to effect such communication of said indication, and the means for communicating may include a display means.

Similarly, with certain of the more refined embodiments of the invention, the vending system may include means operable to place such system in a service mode of operation, said processing means being operable when the vending system is in a service mode of operation to effect, based upon said stored historical demand data and said stored system design data, communication to authorized personnel by said means for communicating of said vend space allocation information indicative of said preferred vend space allocation configuration for the vending system. In addition, the vending system in such embodiments may include data entry means operable by authorized personnel while the vending system is in a service mode of operation to provide data to said processing means and wherein said processing means is responsive to the receipt of such data to effect such communication of said space allocation information, and the means for communicating may include a display means.

As will be appreciated by those skilled in the art, with many of the more basic embodiments of the invention, the processing means may include memory means for storing data therein and means for retrieving such data therefrom, said data storage means for storing historical demand data forming a portion of said memory means, said memory means also including a portion thereof for storing product storage allocation configuration data representative of the established product storage allocation configuration, and said processing means may also include a microprocessor programmed to (A) update the historical demand data stored in said data storage means to reflect the vend selection for each product vend operation while the vending system is in a vending mode of operation until the occurrence of a terminating event, (B) respond to the occurrence of a terminating event to prevent further updating of historical demand data stored in said data storage means, (C) determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms, and (D) effect, based upon the degree of conformance between said stored historical demand data and said stored product storage allocation configuration data, communication to authorized personnel by said means for communicating of an indication whether the established vend space allocation monitor means is consistent with selection demand norms. As with other embodiment types, servicing of the vending system may constitute said terminating event, or the vending system may include service information entry means for entering service information, said processing means being operatively connected to the service information entry means and responsive to entry of service information to determine whether the established vend space allocation configuration is consistent with selection of system demand norms, with the entry of such service information constituting said terminating event, or the first sellout of a class of selectable vendable products may constitute said terminating event, or said terminating event for a given period of time may be the first event to occur from among a plurality of possible terminating events, which possible terminating events may include both first sellout of a class of selectable vendable products and servicing of the vending system, or, if said selection monitoring includes timing means, one of said possible terminating events may be the timing out of said timing means.

Also, with such embodiment types, the microprocessor could further be programmed in performing step (C) to (1) calculate for each class of selectable vendable products a value representative of the difference between product storage allocated and the historical product demand for products of such class of selectable vendable products, and (2) compare such calculated value against said acceptability standards data, such that the result data obtained in the performance of step (2) is indicative of whether the established vend space allocation configuration is consistent with selection demand norms, and in performing step (D) to effect communication to authorized personnel by said means for communicating of said result data.

Those skilled in the art will also appreciate that, with many of the more refined embodiments of the invention, the processing means may include memory means for storing data therein and means for retrieving such data therefrom, said data storage means for storing historical demand data forming a portion of said memory means, said memory means also including a portion thereof for storing system design data, with said processing means also including a microprocessor programmed to (A) update the historical demand data stored in said data storage means to reflect the vend selection for each product vend operation while the vending system is in a vending mode of operation until the occurrence of a terminating event, (B) respond to the occurrence of a terminating event to prevent further updating of historical demand data stored in said data storage means, (C) determine from said historical demand data and from said system design data stored in said memory means said space allocation information indicative of said preferred vend space allocation configuration for the vending system, and (D) effect communication to authorized personnel by said means for communicating of said space allocation information indicative of said preferred vend space allocation configuration. With such embodiments, servicing of the vending system may constitute said terminating event, or the vending system may include service information entry means for entering service information, said processing means being operatively connected to the service information entry means and responsive to entry of service information to determine said space allocation information indicative of said preferred vend space allocation configuration, with the entry of such service information constituting said terminating event, or the first sellout of a class of selectable vendable products may constitute said terminating event, or said terminating event for a given period of time may be the first event to occur from among a plurality of possible terminating events, which possible terminating events may include both first sellout of a class of selectable vendable products and servicing of the vending system, or, if said selection monitoring means includes timing means, one of said possible terminating events may be the timing out of said timing means.

Also, with such embodiment types, the microprocessor could be further programmed in performing step (C) to (1) calculate for each class of selectable vendable products a proportionate demand value representative of the percentage distribution by demand for such class of selectable vendable products, and (2) determine from said proportionate demand values and from said system design data said space allocation information, such that the result data obtained in the performance of step (2) is indicative of the allocation of specific product storage areas for storage of specific classes of products, and in performing step (D) to effect communication to authorized personnel by said means for communicating of said result data.

With various of the more basic embodiments of the invention, the processing means may include memory means for storing data therein and means for retrieving such data therefrom, said data storage means for storing historical demand data forming a portion of said memory means, said memory means also including a portion thereof for storing product storage allocation configuration data representative of the established product storage allocation configuration, and said processing means may also include a microprocessor programmed to operate, first, during a vending mode of operation, to (A) update the historical demand data stored in said data storage means to reflect the vend selection for each product vend operation until any class of selectable vendable products has first become sold out, and (B) respond to any detection of a first sold out condition for a class of selectable vendable products to prevent further updating during subsequent vending operations of historical demand data stored in said means for storing historical demand data, and, subsequently, during a service mode of operation, to (C) determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms, and (D) effect, based upon the degree of conformance between said stored historical demand data and said stored product storage allocation configuration data, communication to authorized personnel by said means for communicating of an indication whether the established vend space allocation monitor means is consistent with selection demand norms.

With various of the more refined embodiments of the invention, the processing means may include memory means for storing data therein and means for retrieving such data therefrom, said data storage means for storing historical demand data forming a portion of said memory means, said memory means also including a portion thereof for storing system design data, and said processing means may also include a microprocessor programmed to operate, first, during a vending mode of operation, to (A) update the historical demand data stored in said data storage means to reflect the vend selection for each product vend operation until any class of selectable vendable products has first become sold out, and (B) respond to any detection of a first sold out condition for a class of selectable vendable products to prevent further updating during subsequent vending operations of historical demand data stored in said means for storing historical demand data, and, subsequently, during a service mode of operation, to (C) determine from said historical demand data and from said system design data stored in said memory means said space allocation information indicative of said preferred vend space allocation configuration, and (D) effect communication to authorized personnel by said means for communicating of said space allocation information.

With all of such noted embodiment types, the vending system may include means for detecting a machine condition indicative of a service mode status and said processing means may be operatively connected to such detecting means, wherein said processing means is responsive to detection of a machine condition indicative of a service mode status to cause the vending system to enter a service mode of operation, and the means for detecting a machine condition may include status monitor means and the machine condition indicative of a service mode of operation may be a vendor door open condition. Also, the vending system may include data entry means operable by authorized personnel to enter service information and said processing means may be operatively connected to the data entry means, wherein said processing means is responsive to service information entered at the data entry means to cause the vending system to enter a service mode of operation.

With various of the more basic embodiments of the invention, the vending system may include vend means and said processing means may be operable to effect the updating of said historical demand data when operation of the vend means is effected by said processing means, or the vend selection monitoring means may include delivery sensor means for detecting delivery of a product, said processing means being responsive to the detection of a product delivery to effect the updating of said historical demand data, or the processing means may include memory means for storing data therein and means for retrieving such data therefrom, said data storage means for storing historical demand data forming a portion of said memory means, said memory means also including a portion thereof for storing product storage allocation configuration data representative of the established product storage allocation configuration, and wherein, upon the occurrence of a terminating event, said processing means is operable to determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms. With an embodiment of the latter type, the memory means may include a portion thereof for storing acceptability standards data, said processing means being operable to calculate for each class of selectable vendable products a value representative of the difference between product storage allocated and the historical product demand for products of such class of selectable vendable products and to compare such calculated value against said acceptability standards data to obtain result data, said result data being indicative of whether the established vend space allocation configuration is consistent with selection demand norms, and/or the vending system may include means operable to place such system in a service mode of operation, said processing means operable when the vending system is in a service mode of operation to effect, based upon the degree of conformance between said stored historical demand data and said stored product storage allocation configuration data, communication to authorized personnel by said means for communicating of an indication whether the established vend space allocation configuration is consistent with selection demand norms.

Similarly, with various of the more refined embodiments of the invention, the vending system may include vend means and said processing means may be operable to effect the updating of said historical demand data when operation of the vend means is effected by said processing means, or the vend selection monitoring means may include delivery sensor means for detecting delivery of a product, said processing means being responsive to the detection of a product delivery to effect the updating of said historical demand data, or the processing means may include memory means for storing data therein and means for retrieving such data therefrom, said data storage means for storing historical demand data forming a portion of said memory means, said memory means also including a portion thereof for storing system design data, and wherein, upon the occurrence of a terminating event, said processing means is operable to determine from said historical demand data and from said system design data stored in said memory means said space allocation information indicative of said preferred vend space allocation configuration. With an embodiment of the latter type, the processing means may be operable to calculate for each class of selectable vendable products a proportionate demand value representative of the percentage distribution by demand of such class of selectable vendable products and to determine therefrom result data indicative of the allocation of specific product storage areas for storage of specific classes of products, and/or the vending system may include means operable to place such system in a service mode of operation, said processing means operable when the vending system is in a service mode of operation to effect communication to authorized personnel by said means for communicating of said space allocation information.

The invention is readily employable in a vending system that has a plurality of distinguishable product storage areas for storage prior to vending of a plurality of distinguishable types of vendable products, wherein the number of distinguishable product storage areas exceeds the number of distinguishable types of vendable products intended to be vended by such vending system and wherein at least certain of the distinguishable product storage areas are configurable with one another to permit the vending of a common type of vendable product therefrom, such vending system including means operable by authorized personnel to establish and form from the plurality of distinguishable product storage areas a plurality of product storage allocation areas, each such product storage allocation area adapted to hold therein a plurality of products of a given type, the plurality of product storage allocation areas so established defining an established vend space allocation configuration, means for dispensing from each such product storage allocation area the products stored therein, means for controlling in response to an authorized request the dispensing of a requested distinguishable type of vendable product, and data storage means for storing historical demand data for each distinguishable type of vendable product, and when so employed, said vend space allocation monitor means may be described to include, in some of the more basic embodiments, vend selection monitoring means for monitoring over a period of time the historical demand for the various types of vendable products, processing means operatively connected to said vend selection monitoring means and said data storage means and operable as product demand is monitored to update said historical demand data stored in said data storage means to reflect the historical demand for the various types of vendable products, and communication means, said processing means operable in response to a terminating event for the monitored time period to determine for each type of distinguishable product, based upon the historical demand data stored in said data storage means, whether the established vend space allocation configuration is consistent with selection demand norms, and to effect the communication to authorized personnel by said communication means of information indicative of such determination. With such embodiments, servicing of the vending system may constitute said terminating event; the vending system may be operable in a vending mode of operation and in a service mode of operation, with initiation of a service mode of operation constituting said terminating event; the vending system may include means for detecting a machine condition indicative of a service mode of operation of the vending system, said processing means operatively connected to such detecting means and responsive to detection of a machine condition indicative of a service mode of operation to determine whether the established vend space allocation configuration is consistent with selection demand norms; the vending system may include service information entry means for entering service information, said processing means being operatively connected to the service information entry means and responsive to entry of service information to determine whether the established vend space allocation configuration is consistent with selection demand norms, the entry of such service information constituting said terminating event; the first sellout of a class of selectable vendable products may constitute said terminating event; or said terminating event for a given period of time may be the first event to occur from among a plurality of possible terminating events. In the latter case, said possible terminating events may include both first sellout of a class of selectable vendable products and servicing of the vending system, or said vend selection monitoring means may include timing means and one of said possible terminating events may be the timing out of said timing means.

When employed with such a system, said vend space allocation monitor means may also be described to include, in some of the more refined embodiments, vend selection monitoring means for monitoring over a period of time the historical demand for the varius types of vendable products, processing means operatively connected to said vend selection monitoring means and said data storage means and operable as product demand is monitored to update said historical demand data stored in said data storage means to reflect the historical demand for the various types of vendable products, and communication means, said processing means operable in response to a terminating event for the monitored time period to determine, based upon the historical demand data stored in said data storage means, space allocation information indicative of a preferred vend space allocation configuration, and to effect the communication to authorized personnel by said communication means of information indicative of such determination. With such embodiments, servicing of the vending system may constitute said terminating event; the vending system may be operable in a vending mode of operation and in a service mode of operation, with initiation of a service mode of operation constituting said terminating event; the vending system may include means for detecting a machine condition indicative of a service mode of operation of the vending system, said processing means operatively connected to such detecting means and responsive to detection of a machine condition indicative of a service mode of operation to determine said space allocation information; the vending system may include service information entry means for entering service information, said processing means operatively connected to the service information entry means and responsive to entry of service information to determine said space allocation information, the entry of such service information constituting said terminating event; the first sellout of a class of selectable vendable products may constitute said terminating event; or said terminating event for a given period of time may be the first event to occur from among a plurality of possible terminating events. In the latter case, said possible terminating events may include both first sellout of a class of selectable vendable products and servicing of the vending system, or said vend selection monitoring means may include timing means and one of said possible terminating events may be the timing out of said timing means.

In its more refined version, the invention may be described as a vend space allocation means for allocating based upon historical demand product storage areas in a vending system that has a plurality of distinguishable product storage areas for storage prior to vending of a plurality of distinguishable types of vendable products, wherein the number of distinguishable product storage areas exceeds the number of distinguishable types of vendable products intended to be vended by such vending system and wherein at least certain of the distinguishable product storage areas are configurable with one another to permit the vending of a common type of vendable product therefrom, such vending system including means operable to establish and form from the plurality of distinguishable product storage areas a plurality of product storage compartments, each such storage compartment adapted to hold therein a plurality of products of a given type, means for dispensing from each such storage compartment the products stored therein, means for controlling in response to an authorized request the dispensing of a requested distinguishable type of vendable product, and data storage means for storing historical demand data for each distinguishable type of vendable product, said vend space allocation means comprising information entry means operable to effect a vend space allocation operation, processing means operatively connected to said information entry means to be responsive to such operation of said information entry means and operatively connected to the means for storing historical demand data to retrieve historical demand data therefrom, and display means, said processing means responsive to an initial authorized operation of said information entry means to initiate a vend space allocation operation, said processing means thereafter operable to determine for each type of distinguishable product a proportionate demand value based upon the historical demand data stored in said data storage means, to determine for each type of distinguishable product based upon such proportionate demand values space allocation information identifying one or more product storage areas configurable to form a product storage compartment therefor, and to effect the display by said display means of such space allocation information. With various of such refined versions, said information entry means may be operable during a vend space allocation operation to enter selected information thereat and said processing means may be responsive to the entry of such selected information to determine revised space allocation information dependent upon the selected information entered and to effect the display by said display means of such revised space allocation information. Also, some of such more refined versions may include allocation information storage means for storing allocation information determined by said processing means, and the means for controlling the dispensing of a requested distinguishable type of vendable product may be operatively connected to retrieve allocation information from said allocation information storage means. Certain of such versions may include configuration variation data storage means for storing configuration variation data particular to the vending system and indicative of various possible configuration variations for the plurality of vend storage areas of such vending system, said processing means being operatively connected to retrieve configuration variation data from the configuration variation data storage means, said processing means operable to retrieve from said configuration variation data storage means specific configuration variation data representative of a possible vending system configuration in accordance with the particular proportionate demand values determined by said processing means during the vend space allocation operation, and, with some embodiments, the stored configuration variation data may comprise a look-up table.

As will be apparent to those skilled in the art, in many of the more refined versions of the invention, the processing means may include a microprocessor. Certain of such versions may further include configuration variation data storage means for storing configuration variation data particular to the vending system and indicative of various possible configuration variations for the plurality of vend storage areas of such vending system, said processing means may be operatively connected to retrieve configuration variation data from the configuration variation data storage means, and said microprocessor may be programmed to perform during a vend space allocation operation the steps of (A) retrieving the historical demand data for each type of distinguishable product and calculating therefrom a proportionate demand value for each type of distinguishable product corresponding to the demand for such given type of distinguishable product during a period of time divided by the total demand for all types of distinguishable products during such period of time, (B) retrieving from said configuration variation data storage means specific configuration variation data representative of a possible vending system configuration in accordance with the particular proportionate demand values calculated in step (A), and (C) effecting the display by said display means of such specific configuration variation data.

In one of the more refined embodiments the invention may be described as a vend space allocation means for allocating, based upon historical demand, product vend storage areas in a vending system that has a plurality of separable product storage areas for storage prior to vending of a plurality of distinguishable types of vendable products, wherein the number of separable product storage areas exceeds the number of distinguishable types of vendable products intended to be vended by such vending system and wherein at least certain of the separable product storage areas are configurable with one another to permit the vending of a common type of vendable product therefrom, such vending system including configuration means operable to establish and form from the plurality of separable product storage areas a plurality of product storage compartments, each such storage compartment adapted to hold therein a plurality of products of a given type, means for dispensing from each such storage compartment the products stored therein, means for controlling in response to an authorized request the dispensing of a requested distinguishable type of vendable product, and data storage means for storing historical demand data for each distinguishable type of vendable product, said vend space allocation means comprising information entry means operable by authorized personnel to effect a vend space allocation operation, processing means operatively connected to said information entry means to be responsive to such operation of said information entry means and operatively connected to the means for storing historical demand data to retrieve historical demand data therefrom, said processing means responsive to an initial authorized operation of said information entry means to initiate a vend space allocation operation, with said processing means being thereafter operable to establish based upon said historical demand data a preferred vend space allocation configuration whereby each distinguishable type of vendable product has associated therewith one or more product storage areas configurable to form a product storage compartment therefor.

From all of the foregoing, it will thus be appreciated that there has been revealed a method of operation of a vend space allocation monitor means including a programmed microprocessor for determining and for indicating to authorized personnel whether, for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, an established product storage allocation configuration is consistent with selection demand norms, comprising the steps of (A) recording and updating for product vend operations as products are vended over a period of time the product demand by class of product, (B) comparing the recorded product demand for such period of time for the classes of products against the product storage allocated for the classes of products by the established product storage allocation configuration to determine the deviation in product demand from product storage allocated, (C) comparing such determined deviation against acceptability norms to obtain an acceptability indication, and (D) effecting communication of such acceptability communication to authorized personnel.

With the more refined versions of the invention, the method can be more specifically described as a method for determining and for communicating to authorized personnel space allocation information indicative of a preferred vend space allocation configuration for a vending system capable of vending from among a plurality of classes of selectable vendable products a product from a selected product class, which vending system has a plurality of product storage areas for vend product storage, an established vend space allocation configuration allocating the product storage areas to the classes of selectable vendable products, and communication means, comprising the steps of (A) recording and updating for product vend operations as products are vended over a period of time the product demand by class of product, (B) determining from said recorded product demand for such period of time space allocation information indicative of a preferred vend space allocation configuration for such vending system, and (C) effecting communication by such communication means of such space allocation information to authorized personnel.

With such method, whether described hereinabove more generally or more specifically, step (A) may be terminated by the occurrence of a terminating event, which event may be servicing of the vending system, or, if the vending system is operable in a vending mode of operation and in a service mode of operation, initiation of a service mode of operation, or the first sellout of a class of selectable vendable products, or the first event to occur from among a plurality of possible terminating events, which events might include both first sellout of a class of selectable vendable products and servicing of the vending system, or the timing out of a timing means that forms a portion of said selection monitoring means.

Such method may, alternatively, be expressed as a method for determining and for indicating to authorized personnel whether, for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, an established product storage allocation configuration is consistent with selection demand norms, comprising the steps of (A) providing means for monitoring and recording product demand and for communicating information to authorized personnel, (B) monitoring the demand for the various classes of selectable vendable products over a period of time and recording such historical demand, (C) determining, based at least in part upon said historical demand, whether the established vend space allocation configuration is consistent with selection demand norms, and (D) communicating such determination to authorized personnel.

With the more refined versions of the invention, such method could also be expressed in other fashions. In one of such fashions, such method could be described as a method for determining and for communicating to authorized personnel space allocation information indicative of a preferred vend space allocation configuration for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, comprising the steps of (A) providing means for monitoring and recording product demand and for communicating information to authorized personnel, (B) monitoring the demand for the various classes of selectable vendable products over a period of time and recording such historical demand, (C) determining, based at least in part upon said historical demand, vend space allocation information indicative of a preferred vend space allocation configuration, and (D) communicating such determination to authorized personnel.

In another fashion, such method could be described as a method of allocating, based upon historical demand, product vend storage areas in a vending system that has a plurality of distinguishable product storage areas for storage prior to vending of a plurality of distinguishable types of vendable products, wherein the number of distinguishable product storage areas exceeds the number of distinguishable types of vendable products intended to be vended by such vending system and wherein at least certain of the distinguishable product storage areas are configurable with one another to permit the vending of a common type of vendable product therefrom, such vending system including means operable to establish and form from the plurality of distinguishable product storage areas a plurality of product storage compartments, each such storage compartment adapted to hold therein a plurality of products of a given type, means for dispensing from each such storage compartment the products stored therein, means for controlling in response to an authorized request the dispensing of a requested distinguishable type of vendable product, and data storage means for storing historical demand data for each distinguishable type of vendable product, including the steps of (A) accumulating and storing over a period of time historical demand data for each distinguishable type of vendable product, (B) retrieving the historical demand data for each type of distinguishable product and calculating therefrom a proportionate demand value for each type of distinguishable product, (C) determining a preferred space allocation configuration based upon the particular proportionate demand values calculated in step (B), and (D) effecting operation of the configuration means to configure the vending system to the desired vending system configuration.

It will be appreciated by those skilled in the art that the various embodiments and methods of use thereof described and discussed hereinabove are examples of the invention, but are not exhaustive of all embodiments or methods of use thereof of the invention. Many other embodiments and methods of use of the invention are also possible.

From the foregoing it will be apparent that there have been shown and described a vend space allocation monitor means and method, in both more basic and more refined versions, which means and method fulfill the objects and advantages sought therefor. It will be further apparent to those skilled in the art that many embodiments other than the preferred forms discussed herein and many variations of the method other than those described herein are also possible and contemplated, including many changes in, modifications to, and other uses and applications of the subject vend space allocation monitor means and method. All such embodiments, variations, changes, modifications, and other uses and applications that do not depart from the spirit and scope of this invention are deemed to be covered by this invention, which is limited only by the claims which follow.

## Claims

1. Vend space allocation monitor means for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, said vend space allocation monitor means comprising a vend selection monitoring means (104 (1.), 102 (in part), 110, 112) for monitoring over a period of time the historical demand for the various classes of selectable vendable products, characterized by means (102 (in part)) for determining, based at least in part upon said historical demand, whether such established vend space allocation configuration is consistent with selection demand norms, and means (108, Figs. 37-45) for communicating to authorized personnel such determination.

2. The vend space allocation monitor means of claim 1 wherein said means for determining whether such established vend space allocation configuration is consistent with selection demand norms includes means (102 (in part)) for determining space allocation information indicative of a preferred vend space allocation configuration for the vending system (Fig. 72).

3. The vend space allocation monitor means of claims 1 or 2 wherein said vend selection monitoring means includes data storage means (102 (3.b.)) for storing historical demand data representative of the historical demand over the period of time for the plurality of classes of selectable vendable products and said determining means includes means (102 (in part)) for retrieving said historical demand data.

4. The vend space allocation monitor means of claim 3 including a processing means (102), said processing means forming portions of said vend selection monitoring means and said determining means.

5. The vend space allocation monitor means of claim 4 wherein said vend selection monitoring means includes vend selection entry means (104 (1.)) and said processing means is operable during vending operations to update the historical demand data stored in said data storage means to reflect the vend selection for each product vend operation (Figs. 29, 71).

6. The vend space allocation monitor means of claim 5 wherein said processing means includes memory means (102, 3.b. (in part)) for storing data therein and means (102 (in part)) for retrieving such data therefrom, said data storage means for storing historical demand data forming a portion of said memory means, said memory means also including a portion (102, 3.b. (in part)) thereof for storing product storage allocation configuration data representative of the established product storage allocation configuration, and wherein, upon the occurrence of a terminating event, said processing means is operable to determine from said historical demand data and from said product storage allocation configuration data stored in said memory means the degree of conformance between said stored historical demand data and said stored product storage allocation configuration data (Figs. 30, 72), such degree of conformance being indicative of whether the established vend space allocation configuration is consistent with selection demand norms.

7. The vend space allocation monitor means of claim 4 wherein said processing means includes memory means (102, 3.b. (in part)) for storing data therein and means (102 (in part)) for retrieving such data therefrom, said data storage means for storing historical demand data forming a portion of said memory means, said memory means also including a portion (102, 3.b. (in part)) thereof for storing product storage allocation configuration data representative of the established product storage allocation configuration, said processing means also including a microprocessor programmed to:

(A) update the historical demand data stored in said data storage means to reflect the vend selection for each product vend operation while the vending system is in a vending mode of operation until the occurrence of a terminating event (Figs. 29, 71),

(B) respond to the occurrence of a terminating event to prevent further updating of historical demand data stored in said data storage means (Figs. 28, 70),

(C) determine from said historical demand data and from said product storage allocation configuration data stored in said memory means the degree of conformance between said stored historical demand data and said stored product storage allocation configuration data, such degree of conformance being indicative of whether the established vend space allocation configuration is consistent with selection demand norms (Figs. 30, 72),

(D) effect, based upon the degree of conformance between said stored historical demand data and said stored product storage allocation configuration data, communication to authorized personnel by said means for communicating of an indication whether the established vend space allocation monitor means is consistent with selection demand norms (Figs. 30, 72).

8. A method of operation of a vend space allocation monitor means according to claim 1 including a programmed microprocessor for determining and for indicating to authorized personnel whether, for a vending system capable of vending from among a plurality of classes of selectable vendable products a product from a selected product class, which vending system has a plurality of product storage areas for vend product storage and an established vend space allocation configuration allocating the product storage areas to the classes of selectable vendable products, an established product storage allocation configuration is consistent with selection demand norms, comprising the programmed steps of operation of:

(A) recording and updating for product vend operations as products are vended over a period of time the product demand by class of product (Figs. 29, 71),

(B) determining, based at least in part upon said recorded product demand for such period of time and acceptability norms, an acceptability indication (Figs. 30, 72), and

(C) effecting communication of such acceptability indication to authorized personnel (Figs. 30, 72).

9. The method of claim 8 wherein said acceptability indication includes space allocation information indicative of a preferred product storage allocation configuration (Fig. 72).

10. The method of claims 8 or 9 wherein step (B) includes calculating from said recorded product demand a proportionate demand value for each type of distinguishable product (Fig. 72).

**Patentansprüche**

1. Verkaufsgut-Raumzuteilungs-Überwachungseinrichtung für ein Verkaufssystem, durch das aus mehreren Klassen auswählbarer Verkaufsprodukte ein Produkt aus einer ausgewählten Produktklasse verkauft werden kann, wobei das Verkaufssystem mehrere Produktspeicherbereiche zur Verkaufsproduktspeicherung und eine bestimmte, festgelegte Verkaufsgut-Raumzuteilung aufweist, die die Produktspeicherbereiche den Klassen auswählbarer Verkaufsprodukte zuteilt, wobei die Verkaufsgut-Raumzuteilungs-Überwachungseinrichtung eine Verkaufsgutauswahl-Überwachungseinrichtung (104 (1.), 102 (teilweise), 110, 112) zum Überwachen der Nachfrageentwicklung über einen bestimmten Zeitraum für die verschiedenen Klassen auswählbarer Verkaufsprodukte aufweist,

**gekennzeichnet** durch

eine Einrichtung (102 (teilweise)) zum Feststellen, mindestens zum Teil aufgrund der Nachfrageentwicklung, ob die bestimmte, festgelegte Verkaufsgut-Raumzuteilung mit Auswahl-Nachfrage-Normen vereinbar ist, und eine Einrichtung (108, Fig. 37-45) zum Mitteilen dieser Feststellung an autorisiertes Personal.

2. Verkaufsgut-Raumzuteilungs Überwachungseinrichtung nach Anspruch 1, bei der die Einrichtung zum Feststellen, ob die bestimmte, festgelegte Verkaufsgut-Raumzuteilung mit Auswahl-Nachfrage-Normen vereinbar ist, eine Einrichtung (102 (teilweise)) zum Bestimmen von Raumzuteilungsinformation aufweist, die eine bevorzugte Verkaufsgut-Raumzuteilung für das Verkaufssystem (Fig. 72) anzeigt.

3. Verkaufsgut-Raumzuteilungs-Überwachungseinrichtung nach Anspruch 1 oder 2, bei der die Verkaufsgutauswahl-Überwachungseinrichtung eine Datenspeichereinrichtung (102 (3.b.)) zum Speichern von Nachfrageentwicklungsdaten aufweist, die die Nachfrageentwicklung über den Zeitraum für die Vielzahl von Klassen auswählbarer Verkaufsprodukte darstellen und die Feststellungseinrichtung eine Einrichtung (102 (teilweise)) zum Zugreifen auf die Nachfrageentwicklungsdaten aufweist.

4. Verkaufsgut-Raumzuteilungs-Überwachungseinrichtung nach Anspruch 3, mit einer Verarbeitungseinrichtung (102), wobei die Verarbeitungseinrichtung einen Teil der Verkaufsgutauswahl-Überwachungseinrichtung und einen Teil der Feststellungseinrichtung bildet.

5. Verkaufsgut-Raumzuteilungs-Überwachungseinrichtung nach Anspruch 4, bei der die Verkaufsgutauswahl-Überwachungseinrichtung eine Verkaufsgutauswahl-Eingabeeinrichtung (104 (1.)) aufweist und die Verarbeitungseinrichtung während Verkaufsvorgängen die in der Datenspeichereinrichtung gespeicherten Nachfrageentwicklungsdaten aktualisiert, so daß diese die Verkaufsgutauswahl für jeden Produktverkaufsvorgang darstellen (Fig. 29, 71).

6. Verkaufsgut-Raumzuteilungs-Überwachungseinrichtung nach Anspruch 5, wobei die Verarbeitungseinrichtung eine Speichereinrichtung (102, 3.b. (teilweise)) zum Speichern von Daten aufweist und eine Einrichtung (102 (teilweise)) zum Zugreifen auf darin enthaltene Daten, wobei die Datenspeichereinrichtung zum Speichern von Nachfrageentwicklungsdaten ein Teil der Speichereinrichtung ist, wobei die Speichereinrichtung auch einen Teil (102, 3.b. (teilweise)) hat, in dem Produktspeicherzuteilungsdaten gespeichert werden, die die bestimmte, festgelegte Produktspeicherungs-Raumzuteilung darstellen, und bei der nach Eintreten eines abschließenden Ereignisses die Verarbeitungseinrichtung aus den Nachfrageentwicklungsdaten und den in der Speichereinrichtung gespeicherten Produktspeicherungs-Raumzuteilungsdaten den Grad der Übereinstimmung zwischen den gespeicherten Nachfrageentwicklungsdaten und den gespeicherten Produktspeicher-Raumzuteilungsdaten (Fig. 30, 72) feststellt, wobei der Grad der Übereinstimmung anzeigt, ob die bestimmte, festgelegte Verkaufsgut-Raumzuteilung mit Auswahl-Nachfrage-Normen vereinbar ist.

7. Verkaufsgut-Raumzuteilungs-Überwachungseinrichtung nach Anspruch 4, bei der die Verarbeitungseinrichtung eine Speichereinrichtung (102, 3.b. (teilweise)) zum Speichern von Daten und eine Einrichtung (102 (teilweise)) zum Zugreifen auf diese Daten aufweist, wobei die Datenspeichereinrichtung zum Speichern von Nachfrageentwicklungsdaten ein Teil der Speichereinrichtung ist, die Speichereinrichtung auch einen Teil (102, 3.b. (teilweise)) hat zum Speichern von Produktspeicher-Raumzuteilungsdaten, die die bestimmte, festgelegte Produktspeicher-Raumzuteilung darstellen, wobei die Verarbeitungseinrichtung auch einen Mikroprozessor aufweist, der zu folgendem programmiert ist:

(A) Aktualisieren der in der Datenspeichereinrichtung gespeicherten Nachfrageentwicklungsdaten, die, während das Verkaufssystem in einem Verkaufsbetriebszustand ist, bis zum Eintreten eines abschließenden Ereignisses die Verkaufsauswahl für jeden Produktverkaufsvorgang darstellen (Fig. 29, 71),
(B) Reagieren auf das Eintreten eines abschließenden Ereignisses, damit ein weiteres Aktualisieren der in der Datenspeichereinrichtung gespeicherten Nachfrageentwicklungsdaten verhindert wird (Fig. 28, 70),
(C) Bestimmen aus den in der Speichereinrichtung gespeicherten Nachfrageentwicklungsdaten und Produktspeicher-Raumzuteilungsdaten den Grad der Übereinstimmung zwischen den gespeicherten Nachfrageentwicklungsdaten und den gespeicherten Produktspeicher-Raumzuteilungsdaten, wobei der Grad der Übereinstimmung anzeigt, ob die bestimmte, festgelegte Produktspeicher-Raumzuteilung mit AuswahlNachfrage-Normen vereinbar ist (Fig. 30, 72),
(D) Mitteilung, aufgrund des Übereinstimmungsgrads zwischen den gespeicherten Nachfrageentwicklungsdaten und den gespeicherten Produktspeicher-Raumzuteilungsdaten, an autorisiertes Personal durch die Einrichtung zum Mitteilen einer Anzeige, ob die Verkaufsgut-Raumzuteilungs-Überwachun gseinrichtung mit den Auswahl-Nachfrage-Normen vereinbar ist (Fig. 30, 72).

8. Ein Verfahren zum Betreiben einer Verkaufsgut-Raumzuteilungs-Überwachungseinrichtung nach Anspruch 1 mit einem programmierten Mikroprozessor zum Bestimmen und Anzeigen an autorisiertes Personal, ob bei einem Verkaufssystem, durch das aus mehreren Klassen auswählbarer Verkaufsprodukte ein Produkt aus einer ausgewählten Produktklasse verkauft werden kann, wobei das Verkaufssystem mehrere Produktspeicherbereiche zur Verkaufsproduktspeicherung und eine bestimmte, festgelegte Verkaufsgut-Raumzuteilung aufweist, die die Produktspeicherbereiche den Klassen auswählbarer Verkaufsprodukte zuteilt, eine bestimmte, festgelegte Verkaufsgut-Raumzuteilung mit Auswahl-Nachfrage-Normen vereinbar ist, mit den programmierten Schritten:

(A) Aufzeichnen und Aktualisieren der Produktnachfrage nach Produktklasse für Produktverkaufsvorgänge, wenn Produkte über einen Zeitraum hinweg verkauft werden (Fig. 29, 71),
(B) Bestimmen, mindestens zum Teil aufgrund der gespeicherten Produktnachfrage für den Zeitraum und Akzeptabilitätsnormen, einer Akzeptabilitätsanzeige (Fig. 30, 72) und
(C) Mitteilen der Akzeptabilitätsanzeige an autorisiertes Personal (Fig. 30. 72).

9. Verfahren nach Anspruch 8, bei dem die Akzeptabilitätsanzeige Raumzuteilungsinformation enthält, die eine bevorzugte Produktspeicherungszuteilung anzeigt (Fig. 72).

10. Verfahren nach Anspruch 8 oder 9, bei dem der Schritt (B) enthält, daß aus der aufgezeichneten Produktnachfrage ein proportionaler Nachfragewert für jeden unterscheidbaren Produkttyp errechnet wird (Fig. 72).

**Revendications**

1. Dispositif pour la surveillance de l'attribution des espaces de vente pour un système de distribution automatique capable de distribuer, parmi plusieurs catégories de produits commercialisables susceptibles d'être sélectionnés, un produit venant d'une catégorie de produits sélectionnée, lequel système de distribution automatique comprend plusieurs zones de stockage de produits servant à stocker les produits à distribuer et a une configuration établie d'attribution des espaces de vente qui attribue les zones de stockage de produits aux catégories de produits commercialisables susceptibles d'être sélectionnés, ce dispositif de surveillance de l'attribution des espaces de vente comprenant un moyen de surveillance de la sélection des produits distribués (104 (1.), 102 (en partie), 110, 112) pour surveiller, sur un intervalle de temps, l'historique de la demande pour les différentes catégories de produits commercialisables susceptibles d'être sélectionnés, caractérisé par un moyen (102 (en partie)) pour déterminer, en se basant au moins en partie sur l'historique de la demande, si cette configuration établie d'attribution des espaces de vente est compatible avec les normes de demande de sélection, et comprenant un moyen (108, Fig. 37-45) pour communiquer au personnel autorisé le résultat de cette détermination.

2. Dispositif pour la surveillance de l'attribution des espaces de vente selon la revendication 1, dans lequel ledit moyen pour déterminer si cette configuration établie d'attribution des espaces de vente est compatible avec les normes de demande de sélection comprend un moyen (102 (en partie)) pour déterminer des informations sur l'attribution des espaces de vente, indicatrices d'une configuration privilégiée d'attribution de ces espaces de vente pour le système de distribution automatique (Fig. 72).

3. Dispositif pour la surveillance de l'attribution des espaces de vente selon la revendication 1 ou 2, dans lequel ledit moyen de surveillance de la sélection des produits distribués comprend un moyen d'enregistrement de données (102 (3.b)) pour enregistrer des données sur l'historique de la demande, représentatives de l'historique de la demande sur l'intervalle de temps pour les différentes catégories de produits commercialisables susceptibles d'être sélectionnés, et ledit moyen de détermination comprend un moyen (102 (en partie)) pour extraire lesdites données sur l'historique de la demande.

4. Dispositif pour la surveillance de l'attribution des espaces de vente selon la revendication 3, comprenant un moyen de traitement (102), ledit moyen de traitement formant des parties dudit moyen de surveillance de la sélection des produits distribués et dudit moyen de détermination.

5. Dispositif pour la surveillance de l'attribution des espaces de vente selon la revendication 4, dans lequel le moyen de surveillance de la sélection des produits distribués comprend un moyen d'entrée de la sélection des produits distribués (104 (1.)) et ledit moyen de traitement peut opérer pendant les opérations de distribution pour mettre à jour les données sur l'historique de la demande enregistrées dans ledit moyen d'enregistrement de données afin de refléter la sélection des produits distribués pour chaque opération de distribution de produits (Fig. 29, 71).

6. Dispositif pour la surveillance de l'attribution des espaces de vente selon la revendication 5, dans lequel ledit moyen de traitement comprend une mémoire (102, 3.b. (en partie)) pour enregistrer des données et un moyen (102 (en partie)) pour extraire ces données de cette mémoire, ledit moyen d'enregistrement de données pour enregistrer les données sur l'historique de la demande formant une partie de ladite mémoire, cette dernière comportant également une partie (102, 3.b. (en partie)) pour l'enregistrement de données sur la configuration de l'attribution du stockage des produits, représentatives de la configuration établie pour l'attribution du stockage des produits, et dans lequel, lorsque survient un événement terminant, ledit moyen de traitement peut opérer pour déterminer, à partir desdites données sur l'historique de la demande et desdites données sur la configuration de l'attribution du stockage des produits enregistrées dans la mémoire, le degré de concordance entre lesdites données enregistrées sur l'historique de la demande et lesdites données enregistrées sur la configuration de l'attribution du stockage des produits (Fig. 30, 72), ce degré de concordance indiquant si la configuration établie pour l'attribution des espaces de vente est compatible avec les normes de demande de sélection.

7. Dispositif pour la surveillance de l'attribution des espaces de vente selon la revendication 4, dans lequel ledit moyen de traitement comprend une mémoire (102, 3.b. (en partie)) pour enregistrer des données et un moyen (102 (en partie)) pour extraire ces données de la mémoire, ledit moyen d'enregistrement de données pour enregistrer des données sur l'historique de la demande formant une partie de ladite mémoire, cette dernière comportant également une partie (102, 3.b. (en partie)) pour l'enregistrement de données sur la configuration de l'attribution du stockage des produits, représentatives de la configuration établie pour l'attribution du stockage des produits, ledit moyen de traitement comprenant également un microprocesseur programmé pour :

(A) mettre à jour les données sur l'historique de la demande enregistrées dans ledit moyen d'enregistrement de données afin de refléter la sélection des produits distribués pour chaque opération de distribution de produits tandis que le système de distribution automatique est dans un mode opératoire distributeur jusqu'à la survenue d'un événement terminant (Fig. 29, 71),

(B) répondre à la survenue d'un événement terminant afin d'empêcher la poursuite de la mise à jour des données sur l'historique de la demande enregistrées dans ledit moyen d'enregistrement de données (Fig. 28, 70),

(C) déterminer, à partir desdites données sur l'historique de la demande et desdites données sur la configuration de l'attribution du stockage des produits enregistrées dans ladite mémoire, le degré de concordance entre lesdites données enregistrées sur l'historique de la demande et lesdites données enregistrées sur la configuration de l'attribution du stockage des produits, ce degré de concordance indiquant si la configuration établie pour l'attribution des espaces de vente est compatible avec les normes de demande de sélection (Fig. 30, 72),

(D) communiquer au personnel autorisé, grâce audit moyen de communication, sur la base du degré de concordance entre lesdites données enregistrées sur l'historique de la demande et lesdites données enregistrées sur la configuration de l'attribution du stockage des produits, une information indiquant si le moyen établi de surveillance de l'attribution des espaces de vente est compatible avec les normes de demande de sélection (Fig. 30, 72).

8. Méthode pour faire fonctionner un dispositif de surveillance de l'attribution des espaces de vente selon la revendication 1, comprenant un microprocesseur programmé pour déterminer et indiquer au personnel autorisé si, pour un système de distribution automatique capable de distribuer, parmi plusieurs catégories de produits commercialisables susceptibles d'être sélectionnés, un produit venant d'une catégorie de produits sélectionnée, lequel système de distribution automatique comprend plusieurs zones de stockage de produits servant à stocker les produits à distribuer et a une configuration établie d'attribution des espaces de vente qui attribue les zones de stockage de produits aux catégories de produits commercialisables susceptibles d'être sélectionnés, une configuration établie pour l'attribution du stockage des produits est compatible avec les normes de demande de sélection, cette méthode prévoyant les étapes opératoires programmées suivantes :

(A) enregistrement et mise à jour, pour les opérations de distribution de produits, à mesure que les produits sont distribués sur un intervalle de temps, de la demande en faveur d'un produit pour chaque catégorie de produits (Fig. 29, 71),

(B) détermination, en se basant, au moins en partie, sur ladite demande enregistrée en faveur d'un produit pour cet intervalle de temps et sur des normes d'acceptabilité, d'une indication d'acceptabilité (Fig. 30, 72), et

(C) exécution de la communication de cette indication d'acceptabilité au personnel autorisé (Fig. 30, 72).

9. Méthode selon la revendication 8, dans laquelle ladite indication d'acceptabilité inclut une information sur l'attribution des espaces de vente, indicatrice d'une configuration privilégiée pour l'attribution du stockage des produits (Fig. 72).

10. Méthode selon les revendications 8 ou 9, dans laquelle l'étape (B) comprend le calcul, à partir de ladite demande enregistrée en faveur d'un produit, d'une valeur de demande proportionnelle pour chaque type de produit susceptible d'être distingué (Fig. 72).

FIG. I

EP 0 380 097 B1

FIG. 2

FIG. 3

FIG. 4

FIG. 28

# FIG . 5

## FIG. 6

FIG. 7

Data
Entry
Means
／104

Processing
Means
／102

／100

／106

| Data Entry Means ／104 | | Processing Means ／102 | |
| --- | --- | --- | --- |
| 1. Selection Info | | 1. Arithmetic | |
| 2. Pricing Info | | 2. Control | |
| 3. Product Info | | 3. Memory | |
| 4. Service Info | | a. Program | |
| 5. Escrow Info | | b. Data | |
| Etc. | | | |

122

120

Credit
Entry/
Coin Analysis
Means

130

128

Coin Routing/
Sensing
Means

／107

123

132

124

134 ／108

127

142

126

144

114

Display
Means

138

Coin Payout
Means

136

Delivery
Sensor
Means

125

112

／116

Status
Monitor Means
1. Coin Tube Status
2. Product Empty
3. Vendor Door Status
Etc.

Vend
Means

110

FIG. 8

EP 0 380 097 B1

35

## FIG. 9

|  | | | F | | G | | H | |
|---|---|---|---|---|---|---|---|---|
| c | 17 | 18 | 19 | 20 | 21 | 22 | 23 | 24 |
|  | E | D | C | | B | | A | |
| b | 16 | 14 | 12 | 10 | 8 | 6 | 4 | 2 |
| a | 15 | 13 | 11 | 9 | 7 | 5 | 3 | 1 |

1'  2'  3'  4'  5'  6'  7'  8'

## FIG. 10

| Selection | Total Capacity | Product Allocation % | Product Availability At Servicing |
|---|---|---|---|
| SELECTION A | 72 | 16.67 | EMPTY |
| SELECTION B | 72 | 16.67 | EMPTY |
| SELECTION C | 72 | 16.67 | 9 |
| SELECTION D | 54 | 12.50 | 16 |
| SELECTION E | 54 | 12.50 | 12 |
| SELECTION F | 36 | 8.33 | 13 |
| SELECTION G | 36 | 8.33 | 13 |
| SELECTION H | 36 | 8.33 | 17 |

## FIG. 11

### PRODUCT SALES ACTIVITY

| Product | A | B | C | D | E | F | G | H | Total |
|---|---|---|---|---|---|---|---|---|---|
| % Alloc. | 16.67 | 16.67 | 16.67 | 12.50 | 12.50 | 8.33 | 8.33 | 8.33 | 100 |
| Day 1 | 16 | 14 | 4 | 5 | 4 | 2 | 4 | 0 | 49 |
| Day 2 | 22 | 12 | 7 | 2 | 3 | 4 | 2 | 1 | 53 |
| Day 3 | 21 | 13 | 5 | 3 | 7 | 5 | 1 | 3 | 58 |
| Day 4 | 13 | 11 | 4 | 3 | 4 | 3 | 1 | 2 | |
| ------1st Sell-Out------ | | | | | | | | | |
| | 0 | 6 | 4 | 3 | 2 | 0 | 2 | 1 | 59 |
| Day 5 | 0 | 16 | 10 | 16 | 7 | 1 | 6 | 4 | 60 |
| Day 6 | 0 | 0 | 15 | 9 | 7 | 4 | 3 | 4 | 42 |
| Day 7 | 0 | 0 | 14 | 7 | 8 | 4 | 4 | 4 | 41 |
| Total Delvd. By Service Date | 72 | 72 | 63 | 48 | 42 | 23 | 23 | 19 | 362 |
| Total Delvd. By 1st Sell-Out | 72 | 50 | 20 | 13 | 18 | 14 | 8 | 6 | 201 |
| % Distr. At 1st Sell-Out | 35.82 | 24.88 | 9.95 | 6.47 | 8.96 | 6.97 | 3.98 | 2.99 | 100 |
| $\Delta\% >$ 2.08 | YES (LOW) | YES (LOW) | YES (HIGH) | YES (HIGH) | YES (HIGH) | NO | YES (HIGH) | YES (HIGH) | |
| $\Delta\% >$ 4.17 | YES (LOW) | YES (LOW) | YES (HIGH) | YES (HIGH) | NO | NO | YES (HIGH) | YES (HIGH) | |
| $\Delta\% >$ 6.25 | YES (LOW) | YES (LOW) | YES (HIGH) | NO | NO | NO | NO | NO | |
| $\Delta\% >$ 8.33 | YES (LOW) | NO | NO | NO | NO | NO | NO | NO | |

FIG. 15

| | E | | F | | G | | H |
|---|---|---|---|---|---|---|---|
| 17 | 18 | 19 | 20 | 21 | 22 | 23 | 24 |

| C | D | B | | | | A | |
|---|---|---|---|---|---|---|---|
| 16 | 14 | 12 | 10 | 8 | 6 | 4 | 2 |

| 15 | 13 | 11 | 9 | 7 | 5 | 3 | 1 |
|---|---|---|---|---|---|---|---|

| Selection | Total Capacity | Product Allocation % | Product Availability At Servicing |
|---|---|---|---|
| SELECTION A | 108 | 25.00 | EMPTY |
| SELECTION B | 108 | 25.00 | 5 |
| SELECTION C | 54 | 12.50 | 8 |
| SELECTION D | 36 | 8.33 | 6 |
| SELECTION E | 36 | 8.33 | EMPTY |
| SELECTION F | 36 | 8.33 | 9 |
| SELECTION G | 36 | 8.33 | 14 |
| SELECTION H | 18 | 4.17 | 1 |

FIG. 16

PRODUCT SALES ACTIVITY    FIG. 17

| Product | A | B | C | D | E | F | G | H | Total |
|---|---|---|---|---|---|---|---|---|---|
| % Alloc. | 25.00 | 25.00 | 12.50 | 8.33 | 8.33 | 8.33 | 8.33 | 4.17 | 100 |
| Day 1 | 16 | 13 | 4 | 2 | 6 | 4 | 2 | 3 | 50 |
| Day 2 | 14 | 12 | 6 | 4 | 5 | 3 | 3 | 1 | 48 |
| Day 3 | 19 | 13 | 3 | 5 | 2 | 3 | 4 | 2 | 51 |
| Day 4 | 23 | 12 | 5 | 3 | 8 | 3 | 1 | 1 | 56 |
| Day 5 | 20 | 14 | 7 | 4 | 5 | 5 | 4 | 3 | 62 |
| Day 6 | 16 | 14 | 7 | 3 | 4 | 4 | 3 | 2 | |
| ------------------------1st Sell-Out----------------------- | | | | | | | | | |
| | 0 | 4 | 4 | 1 | 0 | 1 | 0 | 2 | 65 |
| Day 7 | 0 | 21 | 10 | 8 | 6 | 4 | 5 | 3 | 57 |
| Total Delvd. By Service Date | 108 | 103 | 46 | 30 | 36 | 27 | 22 | 17 | 389 |
| Total Delvd. By 1st Sell-Out | 108 | 78 | 32 | 21 | 30 | 22 | 17 | 12 | 320 |
| % Distr. At 1st Sell-Out | 33.75 | 24.38 | 10.00 | 6.56 | 9.38 | 6.88 | 5.31 | 3.75 | 100 |
| Δ% > 2.08 | YES (LOW) | NO | NO | NO | NO | NO | YES (HIGH) | NO | |
| Δ% > 4.17 | YES (LOW) | NO | NO | NO | NO | NO | NO | NO | |
| Δ% > 6.25 | YES (LOW) | NO | NO | NO | NO | NO | NO | NO | |
| Δ% > 8.33 | NO | NO | NO | NO | NO | NO | NO | NO | |

## FIG. 12

| | F | | G | | | H | |
|---|---|---|---|---|---|---|---|
| 17 | 18 | 19 | 20 | 21 | 22 | 23 | 24 |
| E | D | C | | B | | A | |
| 16 | 14 | 12 | 10 | 8 | 6 | 4 | 2 |
| 15 | 13 | 11 | 9 | 7 | 5 | 3 | 1 |

| Selection | Total Capacity | Product Allocation % | Product Availability At Servicing |
|---|---|---|---|
| SELECTION A | 90 | 20.83 | EMPTY |
| SELECTION B | 90 | 20.83 | EMPTY |
| SELECTION C | 72 | 16.67 | 17 |
| SELECTION D | 36 | 8.33 | 2 |
| SELECTION E | 54 | 12.50 | 17 |
| SELECTION F | 36 | 8.33 | 10 |
| SELECTION G | 36 | 8.33 | 11 |
| SELECTION H | 18 | 4.17 | EMPTY |

## FIG. 13

PRODUCT SALES ACTIVITY        ## FIG. 14

| Product | A | B | C | D | E | F | G | H | Total |
|---|---|---|---|---|---|---|---|---|---|
| % Alloc. | 20.83 | 20.83 | 16.67 | 8.33 | 12.50 | 8.33 | 8.33 | 4.17 | 100 |
| Day 1 | 15 | 12 | 3 | 4 | 5 | 3 | 3 | 3 | 48 |
| Day 2 | 14 | 12 | 8 | 3 | 6 | 2 | 4 | 2 | 51 |
| Day 3 | 21 | 13 | 6 | 5 | 4 | 4 | 1 | 4 | 58 |
| Day 4 | 24 | 15 | 5 | 4 | 3 | 5 | 3 | 2 | 61 |
| Day 5 | 16 | 14 | 5 | 4 | 4 | 3 | 3 | 2 | |
| | ------1st Sell-Out------ | | | | | | | | |
| | 0 | 4 | 2 | 1 | 1 | 0 | 0 | 0 | 59 |
| Day 6 | 0 | 20 | 11 | 6 | 8 | 4 | 5 | 3 | 57 |
| Day 7 | 0 | 0 | 15 | 7 | 6 | 5 | 6 | 2 | 41 |
| Total Delvd. By Service Date | 90 | 90 | 55 | 34 | 37 | 26 | 25 | 18 | 375 |
| Total Delvd. By 1st Sell-Out | 90 | 66 | 27 | 20 | 22 | 17 | 14 | 13 | 269 |
| % Distr. At 1st Sell-Out | 33.46 | 24.54 | 10.04 | 7.43 | 8.18 | 6.32 | 5.20 | 4.83 | 100 |
| Δ% > 2.08 | YES (LOW) | YES (LOW) | YES (HIGH) | NO | YES (HIGH) | NO | YES (HIGH) | NO | |
| Δ% > 4.17 | YES (LOW) | NO | YES (HIGH) | NO | YES (HIGH) | NO | NO | NO | |
| Δ% > 6.25 | YES (LOW) | NO | YES (HIGH) | NO | NO | NO | NO | NO | |
| Δ% > 8.33 | YES (LOW) | NO | NO | NO | NO | NO | NO | NO | |

**FIG. 18**

| | E | | F | | | G | H |
|---|---|---|---|---|---|---|---|
| 17 | 18 | 19 | 20 | 21 | 22 | 23 | 24 |
| C | D | | B | | | A | |
| 16 | 14 | 12 | 10 | 8 | 6 | 4 | 2 |
| 15 | 13 | 11 | 9 | 7 | 5 | 3 | 1 |

| Selection | Total Capacity | Product Allocation % | Product Availability At Servicing |
|---|---|---|---|
| SELECTION A | 126 | 29.17 | EMPTY |
| SELECTION B | 108 | 25.00 | 10 |
| SELECTION C | 54 | 12.50 | 7 |
| SELECTION D | 36 | 8.33 | 7 |
| SELECTION E | 36 | 8.33 | EMPTY |
| SELECTION F | 36 | 8.33 | 12 |
| SELECTION G | 18 | 4.17 | EMPTY |
| SELECTION H | 18 | 4.17 | 2 |

**FIG. 19**

PRODUCT SALES ACTIVITY  **FIG. 20**

| Product | A | B | C | D | E | F | G | H | Total |
|---|---|---|---|---|---|---|---|---|---|
| % Alloc. | 29.17 | 25.00 | 12.50 | 8.33 | 8.33 | 8.33 | 4.17 | 4.17 | 100 |
| Day 1 | 15 | 14 | 6 | 4 | 5 | 3 | 3 | 2 | 52 |
| Day 2 | 21 | 15 | 8 | 3 | 7 | 2 | 1 | 2 | 59 |
| Day 3 | 19 | 13 | 5 | 5 | 6 | 2 | 4 | 1 | 55 |
| Day 4 | 17 | 14 | 7 | 4 | 6 | 4 | 3 | 3 | 58 |
| Day 5 | 22 | 12 | 8 | 4 | 4 | 5 | 4 | 2 | 61 |
| Day 6 | 18 | 13 | 5 | 5 | 4 | 3 | 2 | 4 | 54 |
| Day 7 | 13 | 10 | 5 | 2 | 3 | 2 | 1 | 2 | |
| -------- | -------- | ---- | --1st Sell-Out | ---- | ---- | ---- | ---- | ---- | |
| | 1 | 7 | 3 | 2 | 1 | 2 | 0 | 0 | 54 |
| Total Delvd. By Service Date | 126 | 98 | 47 | 29 | 36 | 23 | 18 | 16 | 393 |
| Total Delvd. By 1st Sell-Out | 125 | 91 | 44 | 27 | 35 | 21 | 17 | 16 | 376 |
| % Distr. At 1st Sell-Out | 33.24 | 24.20 | 11.70 | 7.18 | 9.31 | 5.59 | 4.52 | 4.26 | 100 |
| Δ% > 2.08 | YES (LOW) | NO | NO | NO | NO | YES (HIGH) | NO | NO | |
| Δ% > 4.17 | NO | NO | NO | NO | NO | NO | NO | NO | |
| Δ% > 6.25 | NO | NO | NO | NO | NO | NO | NO | NO | |
| Δ% > 8.33 | NO | NO | NO | NO | NO | NO | NO | NO | |

## FIG. 21

| | | D | | E | | F | G | H |
|---|---|---|---|---|---|---|---|---|
| 17 | 18 | 19 | 20 | 21 | 22 | 23 | 24 |
| C | B | | | | A | | |
| 16 | 14 | 12 | 10 | 8 | 6 | 4 | 2 |
| 15 | 13 | 11 | 9 | 7 | 5 | 3 | 1 |

| Selection | Total Capacity | Product Allocation- % | Product Availability At Servicing |
|---|---|---|---|
| SELECTION A | 144 | 33.33 | EMPTY |
| SELECTION B | 108 | 25.00 | 3 |
| SELECTION C | 54 | 12.50 | 8 |
| SELECTION D | 36 | 8.33 | 6 |
| SELECTION E | 36 | 8.33 | EMPTY |
| SELECTION F | 18 | 4.17 | EMPTY |
| SELECTION G | 18 | 4.17 | EMPTY |
| SELECTION H | 18 | 4.17 | 2 |

## FIG. 22

### PRODUCT SALES ACTIVITY   FIG. 23

| Product | A | B | C | D | E | F | G | H | Total |
|---|---|---|---|---|---|---|---|---|---|
| % Alloc. | 33.33 | 25.00 | 12.50 | 8.33 | 8.33 | 4.17 | 4.17 | 4.17 | 100 |
| Day 1 | 19 | 15 | 5 | 4 | 5 | 2 | 2 | 2 | 54 |
| Day 2 | 21 | 15 | 7 | 5 | 6 | 4 | 4 | 1 | 63 |
| Day 3 | 22 | 12 | 8 | 3 | 5 | 3 | 3 | 3 | 59 |
| Day 4 | 23 | 17 | 8 | 5 | 7 | 4 | 1 | 3 | 68 |
| Day 5 | 18 | 15 | 6 | 5 | 6 | 3 | 4 | 1 | 58 |
| Day 6 | 20 | 12 | 6 | 4 | 5 | 2 | 3 | 1 | |
| ----------------------1st Sell-Out----------------------- | | | | | | | | | |
| | 2 | 2 | 1 | 0 | 0 | 0 | 0 | 1 | 59 |
| Day 7 | 19 | 17 | 5 | 4 | 2 | 0 | 1 | 4 | 52 |
| Total Delvd. By Service Date | 144 | 105 | 46 | 30 | 36 | 18 | 18 | 16 | 413 |
| Total Delvd. By 1st Sell-Out | 123 | 86 | 40 | 26 | 34 | 18 | 17 | 11 | 355 |
| % Distr. At 1st Sell-Out | 34.65 | 24.23 | 11.27 | 7.32 | 9.58 | 5.07 | 4.79 | 3.10 | 100 |
| $\Delta$% > 2.08 | NO | NO | NO | NO | NO | NO | NO | NO | |
| $\Delta$% > 4.17 | NO | NO | NO | NO | NO | NO | NO | NO | |
| $\Delta$% > 6.25 | NO | NO | NO | NO | NO | NO | NO | NO | |
| $\Delta$% > 8.33 | NO | NO | NO | NO | NO | NO | NO | NO | |

40

FIG. 24

| | D | | E | | F | G | H |
|---|---|---|---|---|---|---|---|
| 17 | 18 | 19 | 20 | 21 | 22 | 23 | 24 |
| C | B | | | A | | | |
| 16 | 14 | 12 | 10 | 8 | 6 | 4 | 2 |
| 15 | 13 | 11 | 9 | 7 | 5 | 3 | 1 |

| Selection | Total Capacity | Product Allocation % | Product Availability At Servicing |
|---|---|---|---|
| SELECTION A | 144 | 33.33 | 4 |
| SELECTION B | 108 | 25.00 | 4 |
| SELECTION C | 54 | 12.50 | 9 |
| SELECTION D | 36 | 8.33 | 6 |
| SELECTION E | 36 | 8.33 | EMPTY |
| SELECTION F | 18 | 4.17 | EMPTY |
| SELECTION G | 18 | 4.17 | 1 |
| SELECTION H | 18 | 4.17 | EMPTY |

FIG. 25

PRODUCT SALES ACTIVITY    FIG. 26

| Product | A | B | C | D | E | F | G | H | Total |
|---|---|---|---|---|---|---|---|---|---|
| % Alloc. | 33.33 | 25.00 | 12.50 | 8.33 | 8.33 | 4.17 | 4.17 | 4.17 | 100 |
| Day 1 | 17 | 14 | 6 | 4 | 5 | 2 | 2 | 2 | 52 |
| Day 2 | 21 | 17 | 7 | 5 | 7 | 3 | 3 | 3 | 66 |
| Day 3 | 20 | 13 | 7 | 3 | 6 | 3 | 2 | 3 | 57 |
| Day 4 | 22 | 16 | 9 | 4 | 6 | 4 | 3 | 3 | 67 |
| Day 5 | 19 | 14 | 5 | 5 | 5 | 3 | 2 | 2 | 55 |
| Day 6 | 16 | 12 | 5 | 5 | 4 | 3 | 3 | 3 | |
| ---------------------1st Sell-Out------------------------------ | | | | | | | | | |
| | 3 | 2 | 1 | 0 | 1 | 0 | 0 | 0 | 58 |
| Day 7 | 22 | 16 | 5 | 4 | 2 | 0 | 2 | 2 | 53 |
| Total Delvd. By Service Date | 140 | 104 | 45 | 30 | 36 | 18 | 17 | 18 | 408 |
| Total Delvd. By 1st Sell-Out | 115 | 86 | 39 | 26 | 33 | 18 | 15 | 16 | 348 |
| % Distr. At 1st Sell-Out | 33.05 | 24.71 | 11.21 | 7.47 | 9.48 | 5.17 | 4.31 | 4.60 | 100 |
| Δ% > 2.08 | NO | NO | NO | NO | NO | NO | NO | NO | |
| Δ% > 4.17 | NO | NO | NO | NO | NO | NO | NO | NO | |
| Δ% > 6.25 | NO | NO | NO | NO | NO | NO | NO | NO | |
| Δ% > 8.33 | NO | NO | NO | NO | NO | NO | NO | NO | |

# FIG. 27

### VEND ACTIVITY SUMMARY
### (Over Several Service Periods)

| Service Period | Product | A | B | C | D | E | F | G | H | Total |
|---|---|---|---|---|---|---|---|---|---|---|
| | % Alloc. | 33.33 | 25.00 | 12.50 | 8.33 | 8.33 | 4.17 | 4.17 | 4.17 | 100 |
| 1 | Total At 1st Sell-Out | 123 | 86 | 40 | 26 | 34 | 18 | 17 | 11 | 355 |
| | % Distr. | 34.65 | 24.23 | 11.27 | 7.32 | 9.58 | 5.07 | 4.79 | 3.10 | 100 |
| 2 | Total At 1st Sell-Out | 115 | 86 | 39 | 26 | 33 | 18 | 15 | 16 | 348 |
| | % Distr. | 33.05 | 24.71 | 11.21 | 7.47 | 9.48 | 5.17 | 4.31 | 4.60 | 100 |
| 3 | Total At 1st Sell-Out | 119 | 83 | 38 | 27 | 31 | 18 | 16 | 14 | 346 |
| | % Distr. | 34.39 | 23.99 | 10.98 | 7.80 | 8.96 | 5.20 | 4.62 | 4.05 | 100 |
| 4 | Total At 1st Sell-Out | 83 | 59 | 28 | 19 | 21 | 18 | 12 | 9 | 249 |
| | % Distr. | 33.33 | 23.69 | 11.24 | 7.63 | 8.43 | 7.23 | 4.82 | 3.61 | 100 |
| | Product Totals For All Periods At 1st Sell-Outs | 440 | 314 | 145 | 98 | 119 | 72 | 60 | 50 | 1298 |
| | % Distr. | 33.90 | 24.19 | 11.17 | 7.55 | 9.17 | 5.55 | 4.62 | 3.85 | 100 |

SELECTION
ALLOCATION
MONITORING
IN EFFECT?

N

Y

UPDATE
CURRENT
SELECTION
COUNT

RETURN     FIG. 29

TOTAL
SELECTION
ALLOCATION
MONITORED
SALES

FIG. 30

DETERMINE
SALES TO
ALLOCATION
ACCEPTABILITY
RESULTS

DISPLAY
RESULTS

Calculate % Sales
By Selection

Compare % Sales
Against % Allocation
Acceptability Window

43

# FIG. 31

## PRODUCT SALES ACTIVITY

| Product | A | B | C | D | E | F | G | H | Total |
|---|---|---|---|---|---|---|---|---|---|
| Number of Storage Areas Allocated | 4 | 4 | 4 | 3 | 3 | 2 | 2 | 2 | 24 |
| Product Capacity | 72 | 72 | 72 | 54 | 54 | 36 | 36 | 36 | $P_{tc}=$ 432 |
| % Alloc. | 16.67 | 16.67 | 16.67 | 12.50 | 12.50 | 8.33 | 8.33 | 8.33 | 100 |
| Day 1 | 16 | 14 | 4 | 5 | 4 | 2 | 4 | 0 | 49 |
| Day 2 | 22 | 12 | 7 | 2 | 3 | 4 | 2 | 1 | 53 |
| Day 3 | 21 | 13 | 5 | 3 | 7 | 5 | 1 | 3 | 58 |
| Day 4 | 13 | 11 | 4 | 3 | 4 | 3 | 1 | 2 | 59 |
| ---1st Sell-Out--- | 0 | 6 | 4 | 3 | 2 | 0 | 2 | 1 | |
| Day 5 | 0 | 16 | 10 | 16 | 7 | 1 | 6 | 4 | 60 |
| Day 6 | 0 | 0 | 15 | 9 | 7 | 4 | 3 | 4 | 42 |
| Day 7 | 0 | 0 | 14 | 7 | 8 | 4 | 4 | 4 | 41 |
| Total Delvd. By Service Date | 72 | 72 | 63 | 48 | 42 | 23 | 23 | 19 | 362 |
| $P_{demand(n)}$ | 72 | 50 | 20 | 13 | 18 | 14 | 8 | 6 | $P_{demand(t)}=$ 201 |
| $\%_{dist(n)}$ | 35.82 | 24.88 | 9.95 | 6.47 | 8.96 | 6.97 | 3.98 | 2.99 | 100 |
| $S_n$ | 8.60 | 5.97 | 2.39 | 1.55 | 2.15 | 1.67 | .96 | .72 | |
| Rounded Off $S_n$ | 9 | 6 | 2 | 2 | 2 | 2 | 1 | 1 | 25 |
| Adjusted $S_n$ | 9 | 6 | 2 | 1 | 2 | 2 | 1 | 1 | 24 |

where
$S_n = [\%_{dist(n)} \times P_{tc}]/C,$
and

1. $n$ varies between A and H,
2. $S_n$ refers to the desired storage area distribution count for product n,
3. $P_{tc}$ refers to total product capacity of the vend system,
4. $C = 18$, and refers to the capacity of the individual storage areas,
5. $\%_{dist(n)}$ refers to the percentage distribution of product n by demand at first product sell-out, i.e.,

$$\%_{dist(n)} = P_{demand(n)}/P_{demand(t)},$$
where

a. $P_{demand(n)}$ refers to the demand for product n to first product sell-out
b. $P_{demand(t)}$ refers to total product demand for all products to first product sell-out.

## FIG. 32      PRODUCT SALES ACTIVITY

| Product | A | B | C | D | E | F | G | H | Total |
|---|---|---|---|---|---|---|---|---|---|
| Number of Storage Areas Allocated | 5 | 5 | 4 | 2 | 3 | 2 | 2 | 1 | 24 |
| Product Capacity | 90 | 90 | 72 | 36 | 54 | 36 | 36 | 18 | $P_{tc}=$ 432 |
| % Alloc. | 20.83 | 20.83 | 16.67 | 8.33 | 12.50 | 8.33 | 8.33 | 4.17 | 100 |
| Day 1 | 15 | 12 | 3 | 4 | 5 | 3 | 3 | 3 | 48 |
| Day 2 | 14 | 12 | 8 | 3 | 6 | 2 | 4 | 2 | 51 |
| Day 3 | 21 | 13 | 6 | 5 | 4 | 4 | 1 | 4 | 58 |
| Day 4 | 24 | 15 | 5 | 4 | 3 | 5 | 3 | 2 | 61 |
| Day 5 | 16 | 14 | 5 | 4 | 4 | 3 | 3 | 2 | |
| --------------1st Sell-Out-------------------- | | | | | | | | | |
| | 0 | 4 | 2 | 1 | 1 | 0 | 0 | 0 | 59 |
| Day 6 | 0 | 20 | 11 | 6 | 8 | 4 | 5 | 3 | 57 |
| Day 7 | 0 | 0 | 15 | 7 | 6 | 5 | 6 | 2 | 41 |
| Total Delvd. By Service Date | 90 | 90 | 55 | 34 | 37 | 26 | 25 | 18 | 375 |
| $P_{demand(n)}$ | 90 | 66 | 27 | 20 | 22 | 17 | 14 | 13 | $P_{demand(t)}=$ 269 |
| %dist(n) | 33.46 | 24.54 | 10.04 | 7.43 | 8.18 | 6.32 | 5.20 | 4.83 | 100 |
| $S_n$ | 8.03 | 5.89 | 2.41 | 1.78 | 1.96 | 1.52 | 1.25 | 1.16 | |
| Rounded Off $S_n$ | 8 | 6 | 2 | 2 | 2 | 2 | 1 | 1 | 24 |

where
$S_n = [\%dist(n) \times P_{tc}]/C,$

and

1. $n$ varies between A and H,
2. $S_n$ refers to the desired storage area distribution count for product n,
3. $P_{tc}$ refers to total product capacity of the vend system,
4. $C = 18$, and refers to the capacity of the individual storage areas,
5. %dist(n) refers to the percentage distribution of product n by demand at first product sell-out, i.e.,

    %dist(n) $= P_{demand(n)}/P_{demand(t)}$,
    where

    a. $P_{demand(n)}$ refers to the demand for product n to first product sell-out
    b. $P_{demand(t)}$ refers to total product demand for all products to first product sell-out.

PRODUCT SALES ACTIVITY

# FIG. 33

| Product | A | B | C | D | E | F | G | H | Total |
|---|---|---|---|---|---|---|---|---|---|
| Number of Storage Areas Allocated | 6 | 6 | 3 | 2 | 2 | 2 | 2 | 1 | 24 |
| Product Capacity | 108 | 108 | 54 | 36 | 36 | 36 | 36 | 18 | $P_{tc}=$ 432 |
| % Alloc. | 25.00 | 25.00 | 12.50 | 8.33 | 8.33 | 8.33 | 8.33 | 4.17 | 100 |
| Day 1 | 16 | 13 | 4 | 2 | 6 | 4 | 2 | 3 | 50 |
| Day 2 | 14 | 12 | 6 | 4 | 5 | 3 | 3 | 1 | 48 |
| Day 3 | 19 | 13 | 3 | 5 | 2 | 3 | 4 | 2 | 51 |
| Day 4 | 23 | 12 | 5 | 3 | 8 | 3 | 1 | 1 | 56 |
| Day 5 | 20 | 14 | 7 | 4 | 5 | 5 | 4 | 3 | 62 |
| Day 6 | 16 | 14 | 7 | 3 | 4 | 4 | 3 | 2 | |
| ---------1st Sell-Out--------- | | | | | | | | | |
| | 0 | 4 | 4 | 1 | 0 | 1 | 0 | 2 | 65 |
| Day 7 | 0 | 21 | 10 | 8 | 6 | 4 | 5 | 3 | 57 |
| Total Delvd. By Service Date | 108 | 103 | 46 | 30 | 36 | 27 | 22 | 17 | 389 |
| $P_{demand(n)}$ | 108 | 78 | 32 | 21 | 30 | 22 | 17 | 12 | $P_{demand(t)}=$ 320 |
| %dist(n) | 33.75 | 24.38 | 10.00 | 6.56 | 9.38 | 6.88 | 5.31 | 3.75 | 100 |
| $S_n$ | 8.10 | 5.85 | 2.40 | 1.57 | 2.25 | 1.65 | 1.27 | .90 | |
| Rounded Off $S_n$ | 8 | 6 | 2 | 2 | 2 | 2 | 1 | 1 | 24 |

where
$S_n = [\%dist(n) \times P_{tc}]/C$,
and
1. n varies between A and H,
2. $S_n$ refers to the desired storage area distribution count for product n,
3. $P_{tc}$ refers to total product capacity of the vend system,
4. C = 18, and refers to the capacity of the individual storage areas,
5. %dist(n) refers to the percentage distribution of product n by demand at first product sell-out, i.e.
   $\%dist(n) = P_{demand(n)}/P_{demand(t)}$,
   where
   a. $P_{demand(n)}$ refers to the demand for product n to first product sell-out
   b. $P_{demand(t)}$ refers to total product demand for all products to first product sell-out.

## FIG. 34

PRODUCT SALES ACTIVITY

| Product | A | B | C | D | E | F | G | H | Total |
|---|---|---|---|---|---|---|---|---|---|
| Number of Storage Areas Allocated | 7 | 6 | 3 | 2 | 2 | 2 | 1 | 1 | 24 |
| Product Capacity | 126 | 108 | 54 | 36 | 36 | 36 | 18 | 18 | $P_{tc}=$ 432 |
| % Alloc. | 29.17 | 25.00 | 12.50 | 8.33 | 8.33 | 8.33 | 4.17 | 4.17 | 100 |
| Day 1 | 15 | 14 | 6 | 4 | 5 | 3 | 3 | 2 | 52 |
| Day 2 | 21 | 15 | 8 | 3 | 7 | 2 | 1 | 2 | 59 |
| Day 3 | 19 | 13 | 5 | 5 | 6 | 2 | 4 | 1 | 55 |
| Day 4 | 17 | 14 | 7 | 4 | 6 | 4 | 3 | 3 | 58 |
| Day 5 | 22 | 12 | 8 | 4 | 4 | 5 | 4 | 2 | 61 |
| Day 6 | 18 | 13 | 5 | 5 | 4 | 3 | 2 | 4 | 54 |
| Day 7 | 13 | 10 | 5 | 2 | 3 | 2 | 1 | 2 | |
| ---------1st Sell-Out--------- | | | | | | | | | |
| | 1 | 7 | 3 | 2 | 1 | 2 | 0 | 0 | 54 |
| Total Delvd. By Service Date | 126 | 98 | 47 | 29 | 36 | 23 | 18 | 16 | 393 |
| $P_{demand(n)}$ | 125 | 91 | 44 | 27 | 35 | 21 | 17 | 16 | $P_{demand(t)}=$ 376 |
| %dist(n) | 33.24 | 24.20 | 11.70 | 7.18 | 9.31 | 5.59 | 4.52 | 4.26 | 100 |
| $S_n$ | 7.98 | 5.81 | 2.81 | 1.72 | 2.23 | 1.34 | 1.08 | 1.02 | |
| Rounded Off $S_n$ | 8 | 6 | 3 | 2 | 2 | 1 | 1 | 1 | 24 |

where
$S_n = [\%_{dist(n)} \times P_{tc}]/C$,
and

1. n varies between A and H,
2. $S_n$ refers to the desired storage area distribution count for product n,
3. $P_{tc}$ refers to total product capacity of the vend system,
4. C = 18, and refers to the capacity of the individual storage areas,
5. %dist(n) refers to the percentage distribution of product n by demand at first product sell-out, i.e.,
   $\%dist(n) = P_{demand(n)}/P_{demand(t)}$,
   where
   a. $P_{demand(n)}$ refers to the demand for product n to first product sell-out
   b. $P_{demand(t)}$ refers to total product demand for all products to first product sell-out.

PRODUCT SALES ACTIVITY

# FIG. 35

| Product | A | B | C | D | E | F | G | H | Total |
|---|---|---|---|---|---|---|---|---|---|
| Number of Storage Areas Allocated | 8 | 6 | 3 | 2 | 2 | 1 | 1 | 1 | 24 |
| Product Capacity | 144 | 108 | 54 | 36 | 36 | 18 | 18 | 18 | $P_{tc}=$ 432 |
| % Alloc. | 33.33 | 25.00 | 12.50 | 8.33 | 8.33 | 4.17 | 4.17 | 4.17 | 100 |
| Day 1 | 19 | 15 | 5 | 4 | 5 | 2 | 2 | 2 | 54 |
| Day 2 | 21 | 15 | 7 | 5 | 6 | 4 | 4 | 1 | 63 |
| Day 3 | 22 | 12 | 8 | 3 | 5 | 3 | 3 | 3 | 59 |
| Day 4 | 23 | 17 | 8 | 5 | 7 | 4 | 1 | 3 | 68 |
| Day 5 | 18 | 15 | 6 | 5 | 6 | 3 | 4 | 1 | 58 |
| Day 6 | 20 | 12 | 6 | 4 | 5 | 2 | 3 | 1 | |
| ---1st Sell-Out--- | | | | | | | | | |
| | 2 | 2 | 1 | 0 | 0 | 0 | 0 | 1 | 59 |
| Day 7 | 19 | 17 | 5 | 4 | 2 | 0 | 1 | 4 | 52 |
| Total Delvd. By Service Date | 144 | 105 | 46 | 30 | 36 | 18 | 18 | 16 | 413 |
| $P_{demand(n)}$ | 123 | 86 | 40 | 26 | 34 | 18 | 17 | 11 | $P_{demand(t)}=$ 355 |
| %dist(n) | 34.65 | 24.23 | 11.27 | 7.32 | 9.58 | 5.07 | 4.79 | 3.10 | 100 |
| $S_n$ | 8.31 | 5.82 | 2.70 | 1.76 | 2.30 | 1.22 | 1.15 | .74 | |
| Rounded Off $S_n$ | 8 | 6 | 3 | 2 | 2 | 1 | 1 | 1 | 24 |

where
$S_n = [\%dist(n) \times P_{tc}]/C,$
and
1. n varies between A and H,
2. $S_n$ refers to the desired storage area distribution count for product n,
3. $P_{tc}$ refers to total product capacity of the vend system,
4. C = 18, and refers to the capacity of the individual storage areas,
5. %dist(n) refers to the percentage distribution of product n by demand at first product sell-out, i.e.,

$\%dist(n) = P_{demand(n)}/P_{demand(t)},$
where
a. $P_{demand(n)}$ refers to the demand for product n to first product sell-out
b. $P_{demand(t)}$ refers to total product demand for all products to first product sell-out.

## FIG. 36     PRODUCT SALES ACTIVITY

| Product | A | B | C | D | E | F | G | H | Total |
|---|---|---|---|---|---|---|---|---|---|
| Number of Storage Areas Allocated | 8 | 6 | 3 | 2 | 2 | 1 | 1 | 1 | 24 |
| Product – Capacity | 144 | 108 | 54 | 36 | 36 | 18 | 18 | 18 | $P_{tc}=$ 432 |
| % Alloc. | 33.33 | 25.00 | 12.50 | 8.33 | 8.33 | 4.17 | 4.17 | 4.17 | 100 |
| Day 1 | 17 | 14 | 6 | 4 | 5 | 2 | 2 | 2 | 52 |
| Day 2 | 21 | 17 | 7 | 5 | 7 | 3 | 3 | 3 | 66 |
| Day 3 | 20 | 13 | 7 | 3 | 6 | 3 | 2 | 3 | 57 |
| Day 4 | 22 | 16 | 9 | 4 | 6 | 4 | 3 | 3 | 67 |
| Day 5 | 19 | 14 | 5 | 5 | 5 | 3 | 2 | 2 | 55 |
| Day 6 | 16 | 12 | 5 | 5 | 4 | 3 | 3 | 3 | |
| -----------------------1st Sell-Out----------------------------- | | | | | | | | | |
| | 3 | 2 | 1 | 0 | 1 | 0 | 0 | 0 | 58 |
| Day 7 | 22 | 16 | 5 | 4 | 2 | 0 | 2 | 2 | 53 |
| Total Delvd. By Service Date | 140 | 104 | 45 | 30 | 36 | 18 | 17 | 18 | 408 |
| $P_{demand(n)}$ | 115 | 86 | 39 | 26 | 33 | 18 | 15 | 16 | $P_{demand(t)}=$ 348 |
| %dist(n) | 33.05 | 24.71 | 11.21 | 7.47 | 9.48 | 5.17 | 4.31 | 4.60 | 100 |
| $S_n$ | 7.93 | 5.93 | 2.69 | 1.79 | 2.28 | 1.24 | 1.03 | 1.10 | |
| Rounded Off $S_n$ | 8 | 6 | 3 | 2 | 2 | 1 | 1 | 1 | 24 |

where
$S_n = [\%dist(n) \times P_{tc}]/C$,
and
1.   n varies between A and H,
2.   $S_n$ refers to the desired storage area distribution count for product n,
3.   $P_{tc}$ refers to total product capacity of the vend system,
4.   C = 18, and refers to the capacity of the individual storage areas,
5.   %dist(n) refers to the percentage distribution of product n by demand at first product sell-out, i.e.,

     $\%dist(n) = P_{demand(n)}/P_{demand(t)}$,
     where

     a.   $P_{demand(n)}$ refers to the demand for product n to first product sell-out

     b.   $P_{demand(t)}$ refers to total product demand for all products to first product sell-out.

FIG.37

FIG.38

```
--17    --18    --19    --20    --21    --22    --23    --29
--16    --14    --12    --10    —8      —6      —4      —2
--15    --13    --11    --9     —7      —5      —3      —1
```

FIG.39

```
--17    --18    --19    --20    --21    --22    --23    --24
--16    —14     —12     —10     --8     --6     --4     --2
--15    —13     —11     —9      --7     --5     --3     --1
```

FIG.40

```
—17     --18    --19    --20    --21    --22    --23    --24
—16     --14    --12    --10    --8     --6     --4     --2
—15     --13    --11    --9     --7     --5     --3     --1
```

FIG.41

```
--17    —18     —19     --20    --21    --22    --23    --24
--16    --14    --12    --10    --8     --6     --4     --2
--15    --13    --11    --9     --7     --5     --3     --1
```

FIG.42

```
--17    --18    --19    —20     —21     --22    --23    --24
--16    --14    --12    --10    --8     --6     --4     --2
--15    --13    --11    --9     --7     --5     --3     --1
```

FIG.43

```
--17    --18    --19    --20    --21    —22     --23    --24
--16    --14    --12    --10    --8     --6     --4     --2
--15    --13    --11    --9     --7     --5     --3     --1
```

FIG.44

```
--17    --18    --19    --20    --21    --22    —23     --24
--16    --14    --12    --10    --8     --6     --4     --2
--15    --13    --11    --9     --7     --5     --3     --1
```

FIG.45

```
--17    --18    --19    --20    --21    --22    --23    —24
--16    --14    --12    --10    --8     --6     --4     --2
--15    --13    --11    --9     --7     --5     --3     --1
```

FIG. 46

FIG. 47

FIG. 48

# FIG. 49

|   | 4.86 | 4.86 | 4.86 |      | 4.86 | 4.86 | 4.86 | 4.86 |
|---|------|------|------|------|------|------|------|------|
|   | 1.39 | 1.39 | 1.39 |      | 1.39 | 1.39 | 1.39 | 1.39 |
|   | 1.39 | 1.39 | 1.39 | 12.5 | 1.39 | 1.39 | 1.39 | 1.39 |
|   | 1.39 | 1.39 | 1.39 |      | 1.39 | 1.39 | 1.39 | 1.39 |
|   | 3.47 | 3.47 | 3.47 |      | 3.47 | 3.47 | 3.47 | 3.47 |
| B | F | E | C | D | G | H | A |

| Product | Percentage Distribution Of Product By 1st Product Sell-out [%dist(n)] (from Fig. 27) | Product Storage Allocation Configuration Percentage |
|---------|------|------|
| A | 35.82 | 35.42 |
| B | 24.88· | 23.61 |
| C | 9.95 | 12.50 |
| D | 6.47 | 6.25 |
| E | 8.96 | 7.64 |
| F | 6.97 | 6.25 |
| G | 3.98 | 4.86 |
| H | 2.99 | 3.47 |

# FIG. 50

|       | 4.86 | 4.86 | 4.86 |      | 4.86 | 4.86 | 4.86 | 4.86 |
|-------|------|------|------|------|------|------|------|------|
|       | 1.39 | 1.39 | 1.39 | 12.5 | 1.39 | 1.39 | 1.39 | 1.39 |
|       | 1.39 | 1.39 | 1.39 |      | 1.39 | 1.39 | 1.39 | 1.39 |
|       | 1.39 | 1.39 | 1.39 |      | 1.39 | 1.39 | 1.39 | 1.39 |
|       | 3.47 | 3.47 | 3.47 |      | 3.47 | 3.47 | 3.47 | 3.47 |
|       | B    | H    | D    | C    | E    | F    | G    | A    |

| Product | Percentage Distribution Of Product By 1st Product Sell-out [%dist(n)] (from Fig. 32) | Product Storage Allocation Configuration Percentage |
|---------|-----------------------|------------------------|
| A | 33.05 | 32.64 |
| B | 24.71 | 25.00 |
| C | 11.21 | 12.50 |
| D | 7.47 | 7.64 |
| E | 9.48 | 9.03 |
| F | 5.17 | 4.86 |
| G | 4.31 | 3.47 |
| H | 4.60 | 4.86 |

Percentage Distributions Of Individual Storage Areas

| Column | 9 | 4.17 % | Area a of column x | 1.16 % |
|---|---|---|---|---|

Column  9    4.17 %    Area a of column x    1.16 %
Column 10    4.17 %    Area b of column x     .46 %
Column 20    4.17 %    Area c of column x     .46 %
                       Area d of column x     .46 %
                       Area e of column x    1.62 %

FIG. 51

Percentage Distribution Of Product
By 1st Product Sell-out
[%dist(n)]
(from Fig. 27)

Product Storage
Allocation Configuration
Percentage

| Product A | 35.82 | Product E | 8.96 |
|-----------|-------|-----------|------|
| Product B | 24.88 | Product F | 6.97 |
| Product C | 9.95 | Product G | 3.98 |
| Product D | 6.47 | Product H | 2.99 |

| Product A | 35.89 | Product E | 8.34 |
|-----------|-------|-----------|------|
| Product B | 25.00 | Product F | 6.72 |
| Product C | 10.42 | Product G | 4.17 |
| Product D | 6.72 | Product H | 3.24 |

Preferred Product Storage Allocation Configuration

| Product | Compartment | Product | Compartment |
|---------|-------------|---------|-------------|
| A | 7-12, 19-20, and 18c-e | E | 15-16 |
| B | 1-6 | F | 21 and 22c-e |
| C | 13-14 and 18a-b | G | 17 |
| D | 24 and 23c-e | H | 22a-b and 23a-b |

FIG.52

EP 0 380 097 B1

Product A

FIG.53

Product B

FIG. 54

Product C

FIG.55

Product D

Product E

Product F

FIG.56

FIG.57

FIG.58

Product G

Product H

FIG.59

FIG.60

Percentage Distribution Of Product
By 1st Product Sell-out
[%dist(n)]
(from Fig. 32)

| Product A | 33.05 | Product E | 9.48 |
| Product B | 24.71 | Product F | 5.17 |
| Product C | 11.21 | Product G | 4.31 |
| Product D | 7.47 | Product H | 4.60 |

Product Storage
Allocation Configuration
Percentage

| Product A | 33.36 | Product E | 9.50 |
| Product B | 25.00 | Product F | 5.33 |
| Product C | 11.35 | Product G | 4.17 |
| Product D | 7.18 | Product H | 4.17 |

Preferred Product Storage Allocation Configuration

| Product | Compartment | Product | Compartment |
|---------|-------------|---------|-------------|
| A | 1-8 | E | 15-16 and 17a |
| B | 9-14 | F | 20 and 21a |
| C | 18-19 and 17b-e | G | 23 |
| D | 22 and 21b-e | H | 24 |

FIG. 61

EP 0 380 097 B1

Product A

FIG. 62

Product B

Product D

FIG. 63

FIG. 65

59

Product C

FIG . 64

Product E

FIG . 66

Product F

FIG .67

Product G

FIG.68

Product H

FIG .69

FIG. 70

FIG. 71

```
              ┌─────────────────────────┐
              │          TOTAL          │
              │  SELECTION ALLOCATION   │
              │     MONITORED SALES     │
              └─────────────────────────┘
                          │
                          ▼
              ┌─────────────────────────────────┐
              │            CALCULATE            │
              │ PERCENTAGE DISTRIBUTION OF PRODUCTS │
              │ BY DEMAND AT 1ST PRODUCT SELL-OUT │
              │                                 │
              └─────────────────────────────────┘
```

CALCULATE
PERCENTAGE DISTRIBUTION OF PRODUCTS
BY DEMAND AT 1ST PRODUCT SELL-OUT

$$e.g., \%_{dist(n)} = \frac{P_{demand(n)}}{P_{demand(t)}}$$

CALCULATE
DESIRED STORAGE AREA DISTRIBUTION
COUNTS FOR PRODUCTS

$$e.g., S_n = \frac{\%_{dist(n)} \times P_{tc}}{C}$$

ROUND OFF
ALL DESIRED STORAGE AREA
DISTRIBUTION COUNTS

TOTAL
ROUNDED OFF DESIRED STORAGE AREA
DISTRIBUTION COUNTS OF ALL PRODUCTS

TOTAL ROUNDED OFF
DESIRED STORAGE AREA
DISTRIBUTION COUNTS OF ALL PRODUCTS
=
TOTAL STORAGE AREAS
OF VEND SYSTEM ?

N

RE-ADJUST ROUND OFF
BREAK POINT

Y

FIG. 72

DETERMINE
PREFERRED PRODUCT STORAGE
ALLOCATION CONFIGURATION

DISPLAY RESULTS